# EUROPEAN PATENT APPLICATION

(11) **EP 2 267 578 A2**
(43) Date of publication of application: **29.12.2010**
(21) Application number: 09754929.9
(22) Date of filing: 01.04.2009
(51) Int. Cl.: G06F 3/01, G06F 3/02, G06F 3/033, G06F 3/041

(54) **DATA INPUT DEVICE AND DATA INPUT METHOD**

(30) Priority: 01.04.2008 KR 20080030523; 12.09.2008 KR 20080090551; 12.09.2008 KR 20080090552; 12.11.2008 KR 20080112299
(71) Applicant: OH, Eui-Jin, Daejeon 301-150 (KR)
(72) Inventor: OH, Eui-Jin, Daejeon 301-150 (KR)
(74) Representative: Thacker, Darran Ainsley
(86) International application number: PCT/KR2009/001678
(87) International publication number: WO 2009/145464

(57) **Abstract**

There is provided a data input device and a data input method. The data input device including: a sense unit provided by forming a predetermined sense region at a side of a case of an electronic apparatus terminal, for generating a first direction input signal by sensing a horizontal pressure in a predetermined radial direction of the finger put on a reference position within the sense region, and for generating a second direction input signal by sensing a vertical pressure leaned in a predetermined direction while the finger is put on the reference position; and a controller for determining a horizontal pressure direction or a vertical pressure position of the finger from the first direction input signal and the second direction input signal, and for extracting data assigned to a corresponding radial direction and a pressure position to input.

## Description

### Technical Field

The present invention relates to a data input device and a data input method, and more particularly, to a data input device and a data input method of using the sense of the input operations of a finger, in which an additional input unit for distinguishing the input operations of a finger from each other to perform an input is not required so that the design of a product is simplified and that a product is made small and slim.

### Background Arts

Recently, with the rapid development of an information processing technology, various information apparatuses such as a mobile telephone and a computer are made to have high performances and multiple functions and are made small.

The information apparatuses commonly include an input apparatus for inputting data, a data processing apparatus for processing the input data, and an output apparatus for outputting the processed data. In the information apparatuses, the importance of the input apparatus is increasing.

However, current various input apparatuses have many problems in inputting various data such as characters and commands. For example, there are limitations on reducing the size of an input apparatus such as a keyboard used for a personal computer (PC) or a laptop computer so that it is difficult to make the input apparatus small. A touch screen method used for personal digital assistants (PDA) and a keypad method used for mobile telephones have low input speed and many erroneous inputs.

On the other hand, since the above-described various input apparatuses need input means for transmitting the input operations of a finger, the constitutions of the input apparatuses are complicated so that it is not easy to design products and that product cost in accordance with the production and management of related parts increases.

In addition, since the input apparatus needs a space for the input means, it is difficult to make a product small and slim and the external appearance deteriorates due to the input means that protrudes outside a case.

In addition, in the conventional inputting apparatus used for various information apparatuses, characters are assigned to input keys and the input keys are knocked or pressed by fingers.

Therefore, it is difficult to arrange no less than 24 finger-sized input keys in the portable terminal such as the mobile telephone in which an input key arrangement space is relatively small, which is the reason why it is difficult to make the keyboard small.

In particular, in the case of the mobile telephone, since no less than 24 Hangeul characters are commonly input by 12 buttons, a plurality of characters are inevitably arranged in one button.

Therefore, frequently one character (phoneme) is input by two or three operations. As a result, input time increases and many erroneous inputs are generated.

In addition, an input method is very complicated so that it takes a long time to be accustomed to performing inputs.

In order to solve the above problems, in the case of inputting Hangeul, a character input method such as 'Cheon Ji In' in which predetermined characters are combined with each other to be input has been suggested.

However, in the above method, since basic characters are combined with each other to generate a desired character, it is possible to reduce the number of input buttons to which characters are assigned. However, since input buttons are to be repeatedly pressed until a desired character is obtained, input time increases.

In addition, there are suggested technologies such as a keyboard that can be rolled to be portable and a virtual laser keyboard in which, when the image of a keyboard is projected onto a floor and an operation is performed as if an input is made to the keyboard by fingers, the positions of the fingers are sensed so that an input is performed.

However, since such input apparatuses are to be always carried and inputs can be made only when the input apparatuses are put on the floor, these input apparatuses cannot be applied to the portable information terminals that are to be carried by hands to make inputs during movement.

### Detailed Description of Invention

### Technical Problems

The present invention has been made to provide a data input device of using the sense of the input operations of a finger capable of realizing an effective data input method, in which an additional input unit for distinguishing the input operations of a finger from each other in order to perform an input is not required so that the design of a product is simplified and that a product is made small and slim.

The present invention has also been made to provide a data input device capable of inputting various data by pressure and touch movement in a minimum space.

The present invention has also been made to provide a data input device and a data input method, in which data are input by touch, movement, and pressure that are applied to a touch type input device and such an input is performed without a reference position or in an arbitrary position determined by a user so that a rapid, free, and convenient input is performed.

The present invention has also been made to provide a data input device and a data input method, in which continuous inputs are performed from a position where the finger of a user or a pen is positioned using the advantage in that an input can be performed in any place on the touch type input device so that a much faster input is stably performed in comparison with the conventional input apparatus.

The present invention has also been made to provide a data input device and a data input method capable of inputting data with the characteristics of the touch type input device to be widely applied to a large-size apparatus as well as a small-size apparatus.

The present invention has also been made to provide a data input device and a data input method, in which a minimum apparatus is added to the touch type input device or input operations that are easily distinguished using the conventional apparatus and minimum key or command arrangement are provided so that input speed is increased and that desired data are freely and correctly input.

The present invention has also been made to provide a data input device and a data input method, in which the input operations of a user and the key or command arrangements are combined with each other so that various data and various commands are easily input in comparison with the conventional input apparatus.

### Technical Solutions

In order to achieve the foregoing and/or other aspects of the present invention, there is provided a data input device for using sense of operations of a finger, including: a sense unit provided by forming a predetermined sense region at a side of a case of an electronic apparatus terminal, for generating a first direction input signal by sensing a horizontal pressure applied in a predetermined radial direction by the finger put on a reference position within the sense region, and for generating a second direction input signal by sensing a vertical pressure leaned in a predetermined direction while the finger is put on the reference position; and a controller for determining a horizontal pressure direction or a vertical pressure position of the finger from the first direction input signal and the second direction input signal, and for extracting data assigned to a corresponding radial direction and a corresponding pressure position from a memory to input the extracted data.

The sense unit comprises a first piezoelectric sense panel having a concave sense region corresponding to the shape of a touch surface of the finger, in which a plurality of the vertical pressure positions and the horizontal pressure directions are arranged in a radial direction by being differently and sequentially spaced from a reference position at the center of the touch surface.

Regions between the respective vertical pressure positions, between the respective horizontal pressure directions, and between the vertical pressure position and the horizontal pressure direction are divided by a transform preventing groove.

The sense unit includes a second piezoelectric sense panel for touching the finger and for sensing the vertical pressure to generate the second direction input signal; and a third piezoelectric sense panel provided to touch the lower side of the second piezoelectric sense panel for sensing a push of the second piezoelectric sense panel touched, when the horizontal pressure is performed, to generate the first direction input signal.

The sense unit includes a fourth piezoelectric sense panel for touching the finger and for sensing the vertical pressure to generate the second direction input signal; a plurality of vertical protrusions protruded downward from the fourth piezoelectric sense panel; and a first movement sense unit provided in the respective horizontal pressure direction based on the respective vertical protrusions for touching or pressing the vertical protrusions, when the horizontal pressure is performed, to generate the first direction input signal.

The sense unit includes a fifth piezoelectric sense panel having a through hole formed at the reference position for sensing the vertical pressure to generate the second direction input signal; and a second movement sense unit, inserted into the through hole and provided to be leaned in the respective radial directions by the finger, for generating the first direction input signal corresponding to the horizontal pressure.

The sense unit includes a plurality of sixth piezoelectric sense units arranged in the form of a belt by different spaced distances from the reference position for sensing the vertical pressure to generate the second direction input signal; and a plurality of seventh piezoelectric sense units arranged between the respective sixth piezoelectric sense units, having a height lower than that of the sixth piezoelectric sense units not to be pressed by the finger when the vertical pressure is performed, and for generating the first direction input signal by being pressed in the horizontal pressure direction by the sixth piezoelectric sense units when the horizontal pressure is performed.

The sense unit includes an eighth piezoelectric sense panel for touching the finger and for sensing the vertical pressure to generate the second direction input signal; and a third movement sense unit provided in the outside of the eighth piezoelectric sense panel for sensing a touch by a push of the eighth piezoelectric sense panel to generate the first direction input signal.

The sense unit includes a ninth piezoelectric sense panel for touching the finger and for sensing the vertical pressure to generate the second direction input signal; and a fourth movement sense unit provided on the ninth piezoelectric sense panel in the respective radial direction based on the reference position for sensing a touch by a push of the ninth piezoelectric sense panel, when the horizontal pressure is performed, to generate the first direction input signal.

The sense unit is formed of a piezoelectric sense panel elastically transformed by pressing the finger and the controller determines putting of a finger when a pressure force sensed by the piezoelectric sense panel is less than one to three times of a predetermined value, determines the horizontal pressure when the sensed pressure force is greater than three times and less than seven times of the predetermined value, and determines the vertical pressure when the sensed pressure force is greater than seven times of the predetermined value.

The sense unit further generates a center input signal of sensing the reference position is pressed by the finger.

The sense unit distinguishes and generates at least one of the first direction input signal, the second direction input signal, and the center input signal into at least two multiple stage signal according to the intensity of the pressure force.

The data input device further includes a cover formed of an elastic material and provided on the sense unit on which the finger puts.

The cover includes a slide preventing unit for preventing slide of the finger.

The data input device further includes pressure protrusions provided at the respective vertical pressure positions for concentrating the pressure force.

The data input device further includes a display unit provided on the cover for displaying the respective horizontal pressure direction and the vertical pressure positions.

When characters are assigned to the respective horizontal pressure directions and the vertical pressure positions and the first direction input signal or the second direction input signal is received, the controller extracts characters assigned to the respective corresponding horizontal pressure direction or vertical pressure position from a memory to input the extracted character.

A movement function of a pointer of a mouse or a game character of a joystick is performed by the horizontal pressure and a manipulating function of right and left buttons of the mouse or the game character of the joystick is performed by the vertical press.

During a manipulation of a three-dimension object, a movement of the three-dimension object is performed by the horizontal pressure and a rotation of the three-dimension object is performed in the vertical pressure direction by the vertical press.

The reference position is provided to move according to a touch position of the finger put on the sense unit and the vertical pressure position moves along the reference position.

A movement of a pointer of a mouse or a game character of a joystick is performed by a touch movement of the finger and a manipulating function of right and left buttons of the mouse or the game character of the joystick is performed by the vertical press.

During a manipulation of a three-dimension object, a movement of the three-dimension object is performed by the touch movement of the finger and a rotation of the three-dimension object is performed in the vertical pressure direction by the vertical press.

The sense unit further generates a center sense signal of sensing that the finger puts on the reference position, wherein the controller inputs first data assigned to the vertical pressure position when the center sense signal and the second direction input signal are generated simultaneously and inputs second data duplicated to the vertical pressure position when only the second direction input signal is generated.

The data input device further includes a character board display unit on which data assigned to the respective horizontal pressure direction and vertical pressure position are displayed, wherein the character board display unit displays the first data from the second data according to whether the center sense signal is generated.

The sense unit further includes a ring-shaped rotation sense unit spaced from the reference position by a predetermined interval and the three-dimension object rotates on two-dimension plane when the finger is rotated based on the reference position during the manipulation of the three-dimension object.

The present invention also provides a data input device provided in a case of an electronic apparatus terminal for inputting various data, comprising: a sense unit provided at a side of the case to form a determined sense region, including a first sense unit provided in a plurality of radial directions based on a reference position within the sense region to sense a horizontal pressure in the radial directions by a finger put on the reference position, and a second sense unit having a uniform spaced distance from the reference position and provided at a plurality of pressure positions arranged in a radial direction to sense a pressure by a finger; and a controller for extracting data assigned to the respective radial directions and the pressure positions from a memory based on results sensed by the first sense unit and the second sense unit.

The present invention also provides a data input device provided in an electronic apparatus terminal, comprising: a sense unit including a reference plate in which first sense lines are arranged thereon and a movement plate in which second sense lines corresponding to the first sense lines are arranged thereunder and for generating a first direction input signal while the second sense lines move according to a horizontal pressure applied to the movement plate and touch the first sense lines; and a controller for determining a movement direction and a movement distance of the movement plate from the first input signal to extract data assigned to the movement direction and the movement distance from a memory and to input the extracted data.

At this time, the first and second sense lines are continuously arranged in the matrix form.

At least one of the first and second sense lines is formed of two sense lines crossing each other.

The sense unit senses a vertical pressure on the movement plate by pressing the second sense lines to the first sense lines and generates a second direction input signal.

The reference plate and the movement plate of the sense unit comprise a plurality of sense films and a multiple stage vertical pressure input is performed while touches between the sense films are increased in multiple stages according to a degree of the vertical pressure to the movement plate.

The sense unit is connected to a return member having elasticity to be returned to an original state in a state that a horizontal pressure is applied.

The present invention also provides a data input device provided in an electronic apparatus terminal, including: a sense unit, in which a plurality of sense lines are arranged on an elastic member, for generating a first direction input signal by a horizontal pressure and a second direction input signal by a vertical pressure as the sense lines touch each other by the vertical pressure and the vertical pressure to the elastic member; and a controller for determining touch points between the sense lines and a finger and the number of touches between the sense lines from the first direction input signal and the second direction input signal and for extracting data assigned to the touch points and the number of touches from a memory.

At this time, the matrix form sense lines are continuously provided by a predetermined interval according to a height direction of the elastic member, the first direction input signal is generated as the horizontal direction sense lines touch each other by the horizontal pressure, and the second direction input signal is generated as the vertical direction sense lines touch each other by the vertical press.

The present invention also provides a data input device provided in an electronic apparatus terminal, including: a sense unit, contracted and relaxed according to a pressure, for generating a first direction input signal, a second direction input signal, and a third direction input signal according to a horizontal pressure, a vertical pressure, and a lean with respect to a plurality of directing positions through a current value changed by the contraction and the relax; and a controller for determining a change of the current value from the first direction input signal, the second direction input signal, and the third direction input signal and for extracting data assigned to the change of the current value from a memory.

The present invention also provides a data input device having a predetermined sense region in an electronic apparatus terminal, including: a sense unit for sensing a horizontal pressure and a vertical pressure with respect to a reference position displayed by a touch of a finger or a pressure of the sense region and a plurality of first directing positions arranged based on a reference position in a radial direction and for generating a first direction input signal corresponding to the horizontal pressure and a second direction input signal corresponding to the vertical pressure; and a controller for determining a horizontal pressure position and a vertical pressure direction of a finger from the first direction input signal and the second direction input signal and for extracting data assigned to the first direction input signal and the second direction input signal from a memory.

At this time, the reference position is displaced in position and the first directing position moves with the position displacement of the reference position.

The reference position and the first directing position are arranged within a range covered with a single finger, and the sense unit distinguishes an entire input mode of performing a horizontal pressure input or a vertical pressure input with respect to one of the first directing positions in a state that a finger puts on the sense unit from a partial input mode of performing the horizontal pressure input or the vertical pressure input with respect to one of the respective first directing positions.

The sense unit includes sense units provided at positions corresponding to the respective first directing positions for sensing touch of a finger to the first directing positions.

The sense unit grasps a touch area of the finger when the finger is put on the reference position and the first directing position and an input to the first directing position is performed, and the input is performed in the entire touch mode when the area is greater than a predetermined area.

The sense unit graphs a lean pressure when the horizontal pressure and the vertical pressure are sensed simultaneously within a predetermined time, and the controller inputs data different from the horizontal pressure and the vertical pressure with respect to the lean pressure.

The data input device further includes an elastic input instrument unit in which protrusions are formed at positions corresponding to the first directing positions for making an input to the first directing positions easy.

The present invention also provides a data input device provided in an electronic apparatus terminal, including: an input unit elastically transformed by a horizontal pressure, a vertical pressure, and a lean pressure with respect to a plurality of first directing positions spaced in a radial direction; a sense unit, provided over a side and a bottom of the input unit, for sensing a horizontal pressure, a vertical pressure, and a lean pressure to the input unit respectively, and for generating a first direction input signal with respect to the horizontal pressure, a second direction input signal with respect to the vertical pressure, and a third direction input signal with respect to the lean pressure; and a controller for extracting data assigned to the respective input signal from the first direction input signal, the second direction input signal, and the third direction input signal from a memory.

At this time, a horizontal pressure protrusion is provided on a side of the input unit, a vertical pressure protrusion is provided on a bottom of the input unit corresponding to the first directing position, a lean pressure protrusion is provided on a slope between the side and the bottom of the input unit, and the sense unit includes: a horizontal pressure sense unit for sensing a pressure by the horizontal protrusion; a vertical pressure sense unit for sensing a pressure by the vertical pressure protrusion; and a lean pressure sense unit for sensing a pressure by the lean pressure protrusion.

### Advantageous Effects

Therefore, the data input device according to the present invention can input a large amount of data in a narrow area using one or more input operations among a reference position and directing positions and does not need repeated operations by continuous input operations so that it is possible to prevent erroneous operations from occurring due to the carelessness of a user and that data may be correctly input.

The data input device according to the present invention has a simple constitution and a use method so that a user may conveniently input data and may be applied to various information apparatuses so that the information apparatuses may be made light and small.

In addition, according to the present invention, data are input by touch, movement, and pressure that are applied to a touch type input device and such an input is performed without a reference position or in an arbitrary position determined by a user so that a rapid, free, and convenient input is performed.

In addition, in a data input device and a data input method according to the present invention, continuous inputs are performed from a position where the finger of a user or a pen puts on using the advantage in that an input may be performed in any place on the touch type input device so that a much faster input is stably performed than by a conventional input apparatus.

In addition, the data input device and the data input method according to the present invention may input data with the characteristics of the touch type input device to be widely applied to a large apparatus as well as a small apparatus.

In addition, in the data input device and the data input method according to the present invention, a minimum apparatus is added to the touch type input device or input operations that are easily distinguished using the conventional apparatus and minimum key or command arrangements are provided so that input speed is increased and that desired data are freely and correctly input.

In addition, in the data input device and the data input method according to the present invention, the input operations of a user and the key or command arrangements are combined with each other so that various data and various commands are easily input in comparison with the conventional input apparatus.

### Brief Description of the Drawings

The objects, features and advantages of the present invention will be more apparent from the following detailed description in conjunction with the accompanying drawings, in which:
FIG. 1 is a perspective view illustrating an electronic apparatus terminal mounted with a data input device according to the present invention;
FIG. 2 is a conceptual diagram illustrating the input operations of a finger sensed by a data input device according to a first embodiment of the present invention;
FiGs. 3 to 9 are sectional views of sense units according to various embodiments of the present invention;
FIG. 10 is a conceptual diagram illustrating the movement of a vertical pressure position in accordance with the movement of a finger touch point in the data input device according to the present invention;
FIG. 11 is a sectional view illustrating a constitution, in which the embodiments of FIGs. 5 and 7 are combined with each other;
FIG. 12 is a conceptual diagram illustrating a combination input according to the present invention;
FIG. 13 is a view illustrating the embodiment of FIG. 4 at different angles;
FIGs. 14 and 15 are views illustrating sense units according to various embodiments of the present invention;
FIGs. 16 to 23 are conceptual diagrams illustrating a second embodiment of the present invention;
FIG. 24 is a perspective view illustrating an example of realizing the second embodiment of the present invention;
FIG. 25 is a conceptual diagram illustrating a form, in which the second embodiment of the present invention is realized;
FIGs. 26 to 28 are views illustrating an input instrument unit according to the second embodiment of the present invention;
FIG. 29 is a conceptual diagram illustrating the use form of the second embodiment of the present invention;
FIG. 30 is a sectional view illustrating a third embodiment of the present invention;
FIG. 31 is a perspective view illustrating a fourth embodiment of the present invention;
FIGs. 32 and 33 are perspective views illustrating modifications of the fourth embodiment;
FIG. 34 is a front view illustrating a displacement of a sense unit according to the present invention;
FIG. 35 is a conceptual diagram illustrating an input method of the sense unit according to the present invention;
FIG. 36 is a perspective view illustrating a portable mobile communication terminal, in which the data input device according to the present invention is mounted;
FIG. 37 is a conceptual diagram illustrating direction inputs in the data input device according to the present invention;
FIG. 38 is a plan view illustrating an embodiment of the data input device according to the present invention;
FIG. 39 is a sectional view illustrating the data input device of FIG. 38;
FIG. 40 is a sectional view illustrating another embodiment of the data input device according to the present invention;
FIGs. 41 to 42 are views illustrating input arrangements according to the embodiment of the present invention;
FIG. 43 is a view illustrating 'pressure';
FIG. 44 is a view illustrating 'touch movement';
FIGs. 45 and 46 are views illustrating a horizontal pressure input;
FIG. 47 is a view illustrating a lean input;
FIG. 48 is a view illustrating the directions and the symbols of a pressure input, a touch movement input, a horizontal pressure input, and a lean input;
FIG. 49 is a view illustrating continuous and intermittent inputs on an input surface;
FIG. 50 is a view illustrating an example of a data input in accordance with the combination of the pressure input and the touch movement input;
FIG. 51 is a view illustrating a relationship between pressure and movement applied to the input surface in accordance with the input of FIG. 50;
FIG. 52 is a view illustrating an example of a data input by a combination of the pressure input and a horizontal pressure input;
FIG. 53 is a view illustrating a relationship between pressure and movement generated by the input surface in accordance with the input of FIG. 52;
FIG. 54 is a view illustrating an example of a data input by the pressure input and the lean input;
FIG. 55 is a view illustrating a relationship between vertical and horizontal pressure and movement of the pressure input and the lean input;
FIG. 56 is a view illustrating an example of a data input by the touch movement input and the horizontal pressure input such as an example of the character input of ' 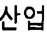 ';
FIG. 57 is a view illustrating a relationship between pressure and movement in accordance with the touch movement input and the horizontal pressure input;
FIG. 58 is a view illustrating an example of a data input by the touch movement input and the lean input;
FIG. 59 is a view illustrating vectors for the touch movement input and the lean input;
FIG. 60 is a view illustrating a data input by a horizontal pressure input and the lean input;
FIG. 61 is a view illustrating vectors for the horizontal pressure input and the lean input;
FIG. 62 is a view illustrating an example of an input arrangement for a data input by first to third direction inputs;
FIG. 63 is a view illustrating an example of a data input by a combination of the pressure input, the touch movement input, and the horizontal pressure input;
FIG. 64 is a view illustrating vectors for the pressure input, the touch movement input, and the lean input;
FIG. 65 is a view illustrating a data input by a combination of the pressure input, the touch movement input, and the lean input;
FIG. 66 is a view illustrating vectors for the pressure input, the touch movement input, and the lean input;
FIG. 67 is a view illustrating an example of an input arrangement for describing menu calls by the pressure input, the horizontal pressure input, and the lean input;
FIG. 68 is a view illustrating an example of actually calling menus using the input arrangement of FIG. 67;
FIG. 69 is a view illustrating vectors for the pressure input, the horizontal pressure input, and the lean input;
FIG. 70 is a view illustrating an example of a data input by the touch movement input, the horizontal pressure input, and the lean input;
FIG. 71 is a view illustrating an input arrangement illustrating an example of a data input by first to fourth direction inputs;
FIG. 72 is a view illustrating a relationship among the pressure input, the touch movement input, the horizontal pressure input, and the lean input;
FIGs. 73 and 74 are views illustrating other embodiments of the touch movement inputs;
FIGs. 75 and 76 are views illustrating a method of distinguishing the horizontal pressure input in multiple stages in accordance with pressure to input data;
FIG. 77 is a view illustrating a constitution of the data input device according to the present invention;
FIGs. 78 to 80 are views illustrating an input realizing example on an input pad;
FIG. 81 is a block diagram of a data input device according to an embodiment of the present invention;
FIG. 82 is a perspective view illustrating the external appearance of the data input device according to the embodiment of the present invention;
FIG. 83 is a view illustrating data assigned to a touch form of the touch movement in the data input device according to the embodiment of the present invention;
FIGs. 84 to 88 are views illustrating various input forms of the touch movement in the data input device according to the embodiment of the present invention;
FIG. 89 is a view of data assigned to the touch form of vertical pressure in the data input device according to the embodiment of the present invention;
FIG. 90 is a view of data assigned to the touch form of horizontal pressure in the data input device according to the embodiment of the present invention;
FIG. 91 is a view of data assigned to the touch form of lean in the data input device according to the embodiment of the present invention;
FIG. 92 is a view of data assigned to the touch form of the vertical pressure movement in the data input device according to the embodiment of the present invention;
FIGs. 93 and 94 are views illustrating input forms of at least two touch forms in the data input device according to the embodiment of the present invention;
FIGs. 95 and 96 are sense signal waveform charts of a touch sense unit formed of a touch screen (or a touch pad) in the data input device according to the embodiment of the present invention;
FIG. 97 is a sense signal waveform diagram of a touch sense unit formed of a touch sensor in the data input device according to the embodiment of the present invention;
FIG. 98 is a sectional view of the touch sense unit formed of the touch screen (or the touch pad) in the data input device according to the embodiment of the present invention;
FIGs. 99 and 100 are views of output screens in the data input device according to the embodiment of the present invention;
FIG. 101 is a view illustrating a form of a multiple touch input in the data input device according to the embodiment of the present invention; and
FIG. 102 is a view illustrating that input forms may be distinguished by a movement distance in the data input device according to the embodiment of the present invention.

### Embodiments of Invention

Hereinafter, the present invention will be described in detail with reference to the accompanying drawings.

A data input device according to the present invention includes, in an electronic apparatus terminal, a sense unit having a reference position and a plurality of direction directing positions spaced from the reference position and arranged around the reference position in a radial direction in an input region to perform at least two inputs among a horizontal pressure input, a vertical pressure input, a direction pressure input, a touch movement input, and a lean (or tilting) input performed in the direction directing positions, to distinguish the performed inputs from each other, and to sense the distinguished inputs, and a controller for extracting data assigned to the inputs sensed by the sense unit from a memory to input the extracted data.

A piezoelectric sense pad, a touch pad, or a touch screen may be used as the sense unit. Other various apparatuses may be used as the sense unit if at least one of touch, pressure, and touch movement may be sensed. In particular, a sense unit capable of sensing the horizontal pressure input, the vertical pressure input, the direction pressure input, the touch movement input, and the lean input may be realized by a touch pad or a touch screen including a touch sensor.

The sense unit may be divided into an input unit for performing the above inputs and a sensor for sensing the inputs performed by the input unit. At this time, the sensor may have various forms such as a touch sensor, an optical sensor, and a pressure sensor.

In addition, the horizontal pressure input may be performed by horizontally applying pressure toward one of the direction directing positions in the state where a finger is put on the sense unit.

The vertical pressure input may be performed by pressing one of the direction directing positions in the state where the finger is put on the sense unit. At this time, which direction directing position is pressed in the vertical pressure input may be grasped by a change in the touch part of the finger or the part, to which the pressure of the finger is intensively applied.

In addition, a direction pressure input is performed by pressing or touching one of the direction directing positions in the state where the finger does not touch the sense unit.

In addition, the touch movement input may be performed by moving toward one of the direction directing positions in the state where the finger touches the sense unit.

The lean input is performed by leaning the finger toward a direction directing position in the state where the finger touches the sense unit. At this time, the lean input may be grasped by a change in the area of the finger or an increase in the pressure applied from the finger.

The five inputs may be designed to be performed so that only one is performed by a specific sense unit. However, at least two inputs may be independently performed. For example, the vertical pressure input and the horizontal pressure input may be performed by the specific sense unit and the vertical pressure input, the horizontal pressure input, and the touch movement input may be performed by other sense unit.

Therefore, since the number of inputs may be increased, in the case where eight direction directing positions are provided, when five inputs are independently performed, forty different data may be input.

In addition, when only two inputs are performed by the sense unit, the number of data that may be input may be increased by increasing the number of inputs that may be performed as occasion demands.

In the five inputs, at least two inputs are continuously performed so that new data different from the data assigned to the inputs may be input. For example, in the case where data 'a' is assigned to the horizontal pressure input performed in a three o'clock direction directing position and data 'b' is assigned to the vertical pressure input performed in the three o'clock direction directing position, when the horizontal pressure input and the vertical pressure input are continuously performed to the three o'clock direction directing position, data 'c' may be input. To the contrary, when the vertical pressure input and the horizontal pressure input are continuously performed, data 'd' may be input. The same data may be input although the horizontal pressure input and the vertical pressure input are input in any order.

Since such a combination input may be performed by a combination of two inputs, a combination of three inputs, a combination of four inputs, or a combination of five inputs, the number of data that may be input may be remarkably increased.

On the other hand, the reference position and the direction directing positions are previously determined in the input region so that the above inputs may be performed based on the reference position and the direction directing positions.

On the other hand, the reference position is not previously determined but may be determined based on the touch position of the finger. That is, when the finger touches the input region, the touch area of the finger that touches the input region is grasped by the sense unit and the center of the touch area may be grasped as a reference position. At this time, the direction directing positions are spaced from the determined reference position and arranged around the reference position in a radial direction.

Therefore, data may be input by freely touch moving the finger on the touch pad or the touch screen, and then, by immediately performing the vertical pressure input or the horizontal pressure input performed in a specific direction directing position.

When the reference position is not determined but may be changed, since the reference position and the direction directing positions are determined in the point where one input is performed, another input may be continuously performed in the state where one input has been performed.

At this time, when the touch position of the finger is changed by various inputs on the touch screen, a character board, on which the data that may be input and that are assigned to the inputs performed in the direction directing positions are displayed, may follow along the finger.

In addition, in the case where a direction pressure input is continuously performed after a specific input, although the finger is taken off from the sense unit for the direction pressure input, when touch or pressure for the direction directing position is performed within a predetermined time, the touch or the pressure may be grasped as a continuous direction pressure input. In this case, the character board displayed on the touch screen may be disappeared within a predetermined time or may be not changed so that the direction pressure input can be conveniently performed by a user.

As such, since the continuous input may be realized, various operations and commands may be performed by performing continuous inputs during the playing of a game and data may be input rapid and conveniently without returning to the reference position for performing other input.

On the other hand, in the above, an input is performed in the sense unit by the finger. However, other input devices than the finger may be used.

Next, detailed embodiments of the above data input device according to the present invention will be described in detail.

### <First Embodiment>

A data input device 101 using the sense of the operations of a finger according to a first embodiment of the present invention includes a sense unit 30 provided on one side of a case 102 of an electronic apparatus terminal 100 to form a predetermined sense region and a controller.

The sense unit 30 senses horizontal pressure in a predetermined radial direction of the finger put on a reference position S in the sense region to generate a first direction input signal and senses vertical pressure leaning in a predetermined direction in the state where the finger is put on the reference position S to generate a second direction input signal.

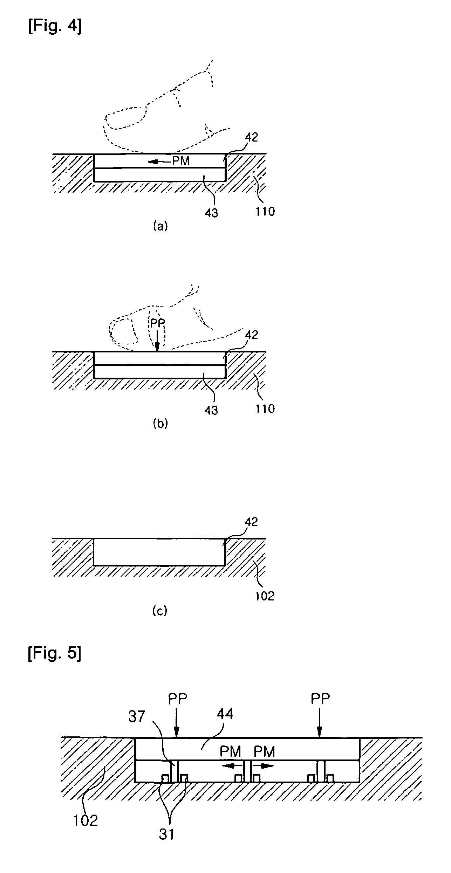

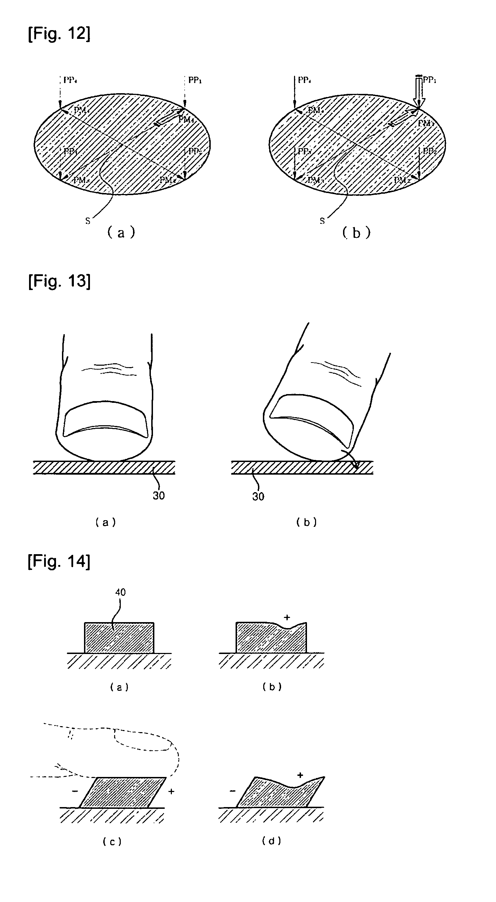

Here, the 'horizontal pressure input' means, as illustrated in (a) of FIG. 4, that the finger does not actually move in a space in an initial touch point but the first direction input signal is generated by pressure in a horizontal direction (strictly speaking, not horizontal but all directions close to horizontal). For reference, FIG. 13 is a view illustrating a state in which the movement of the finger is seen from a front.

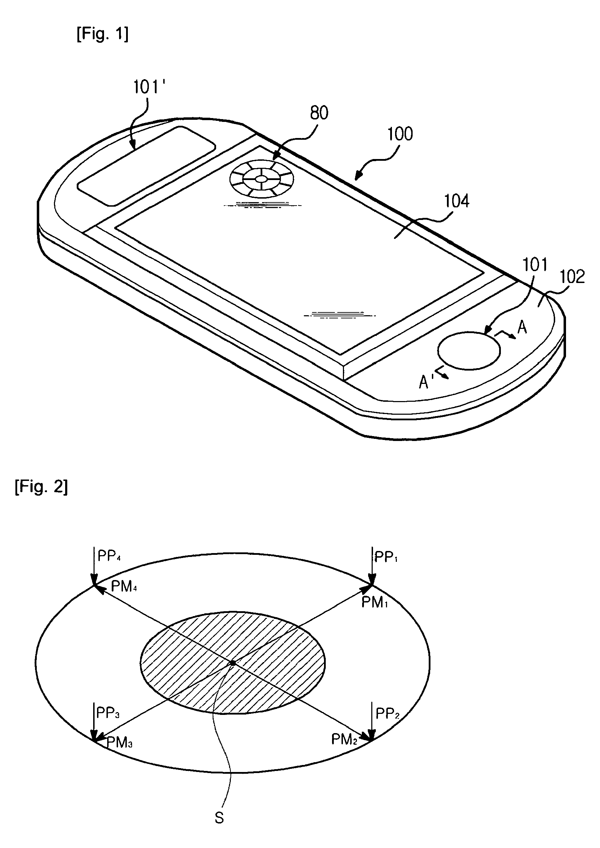

That is, referring to FIG. 2, in a horizontal pressure input PM, in the state where the finger (in the drawing, an oblique-lined region illustrates the touch surface of the finger) is put on the reference position S, the sense unit 30 is pressed in a predetermined horizontal pressure direction. An input is not performed by sweeping the top of the sense unit 30 or by performing a similar operation but by maintaining a touch point between the finger and the sense unit 30.

Here, the horizontal pressure direction may have various numbers as occasion demands. For example, when characters or specific data are to be input, as illustrated in FIG. 2, the number of horizontal pressure directions may be limited. When a mouse or joystick function is performed, the horizontal pressure direction may be provided in all of the radial directions.

On the other, the 'vertical pressure input' means, as illustrated in (b) of FIG. 4, that a second direction input signal is generated by applying pressure in a vertical direction by the leaning of the finger in the state where the finger is put on the reference position S, that is, in the state where the finger is put on an initial touch point.

That is, in the vertical pressure input PP, as illustrated in FIG. 2, vertical pressure positions are provided around the touch surface (oblique-lined region) of the finger and the finger is leaned toward the vertical pressure positions to apply pressure.

The number of vertical pressure positions is not limited, however, the vertical pressure positions are to be provided to be adjacent to the reference position S so that the reference position S and the vertical pressure positions may be selected by the leaning of the finger.

The sense unit 30 may have various shapes. For example, as illustrated on the right side of the case 110 of FIG. 1, the sense unit 30 may be entirely circular. As illustrated on the left side of the case 110, the sense unit 30 may be square. The areas of a sense region may vary as occasion demands.

The sense unit 30 may additionally generate a center input signal for sensing that the reference position S is pressed by the finger.

The center input signal is generated by the vertical pressure of the reference position S. When the controller receives the center input signal, the character, the number, the data, or the functional command corresponding to the center input signal may be extracted from the memory to be input.

On the other hand, the sense unit 30 may further generate a center sense signal for sensing that the finger is put on the reference position S.

The center sense signal for determining whether the finger touches the reference position S is distinguished from the center input signal for pressing the reference position S to input the data assigned to the reference position S.

That is, when the vertical pressure input PP is performed by the finger, the finger may be put on the reference position S and the vertical pressure positions may be directly pressed while the finger may be spaced from the reference position S. The above-described two input operations may be distinguished from each other by the center sense signal.

Therefore, the controller inputs first data when the center sense signal and the second direction input signal are simultaneously generated (that is, when the finger is put on the reference position S to perform vertical pressure) and inputs second data when only the second direction input signal is generated (that is, the finger is spaced from the reference position S to perform the vertical pressure).

At this time, a character board display unit 81, on which data assigned to the horizontal pressure direction and the vertical pressure positions are displayed, may be provided in one of a display unit 123 or the sense unit 30. When the center sense function is provided, the data assigned to the vertical pressure positions may be converted to be displayed in the case where the center sense signal is generated and in the case where the center sense signal is not generated.

The sense unit 30 may have various kinds such as a piezoelectric sense panel 40 that may be elastically transformed by the pressure of the finger.

The piezoelectric sense panel 40 changes a current value or a voltage value output in accordance with the magnitude of external force when the external force is applied. A piezoelectric sensor may be used as the piezoelectric sense panel 40. However, the present invention is not limited to the above. That is, sensors having a current value changed when the sensors are relaxed or contracted by pressure such that the sensors may be contracted and relaxed and that a (-) value is generated during being relaxed and a (+) value is generated during being contracted may be used as the piezoelectric sense panel 40. In addition, a force sensor that may sense vertical force and horizontal force, which is well known to those skilled in the art, may be used.

When the piezoelectric sense panel 40 is realized by the sensor having the current value changed by being contracted and relaxed, a change in the current value in accordance with contraction and relax is sensed and it is determined that the vertical pressure input PP, the horizontal pressure input PM, or the lean pressure input PS is performed in the corresponding position by the position in which the current value is generated and the form in which the current value changes.

That is, the vertical pressure is applied to the piezoelectric sense panel 40 illustrated in (a) of FIG. 14 as illustrated in (b) of FIG. 14, a change in the current value is generated in the corresponding vertical pressure position. At this time, in (b) of FIG. 14, since the sensor is contracted by the vertical pressure, the (+) value is generated. In this case, it is determined that the vertical pressure input PP is performed by the vertical pressure position.

In addition, when the horizontal pressure is performed, the piezoelectric sense panel 40 changes as illustrated in (c) of FIG. 14. At this time, the right side of the piezoelectric sense panel 40 is contracted so that the (+) value is generated and the left side of the piezoelectric sense panel 40 is relaxed so that the (-) value is generated. Therefore, in such a case, it is determined that the horizontal pressure input PM is performed toward the point where the (+) current value is generated.

In addition, when the lean pressure is performed, the piezoelectric sense panel 40 is leaned as illustrated in (d) of FIG. 14 so that the right side sinks and is contracted so that the (+) value is generate and that the left side is leaned and is relaxed so that the (-) value is generated. Therefore, in such a case, it is determined that the lean pressure input PS is performed toward the point where the (+) current value is generated.

When the piezoelectric sense panel 40 is used as the sense unit 30, the controller determines the horizontal pressure direction or the vertical pressure position from the position of the piezoelectric sense panel 40 where a change in the output value is generated and determines whether the horizontal pressure or the vertical pressure is performed in accordance with the degree of change of the output value.

For example, when the pressure force sensed by the piezoelectric sense panel 40 is less than one to three times the set value, it is determined that the finger is put on the sensor. When the pressure force is larger than three times or less than seven times the set value, the input is determined as the horizontal pressure input PS. When the pressure force is larger than seven times the set value, the input is determined as the vertical pressure input PP.

That is, the input with the pressure force no more than the set pressure is determined as the horizontal pressure. When the pressure force larger than the set pressure is applied, the pressure may be determined as the vertical pressure. That is, the horizontal pressure and the vertical pressure are distinguished from each other by a difference in the sensed pressure value. The fact that the pressure force in a vertical direction in the horizontal pressure is smaller than the pressure force in the vertical direction is used to distinguish the horizontal pressure from the vertical pressure.

Here, the multiple of the set value may vary as occasion demands.

In addition, whether the pressure is the horizontal pressure or the vertical pressure and the horizontal pressure direction and the vertical pressure position may be simultaneously determined by the relative position where the pressure force is generated around the reference position S.

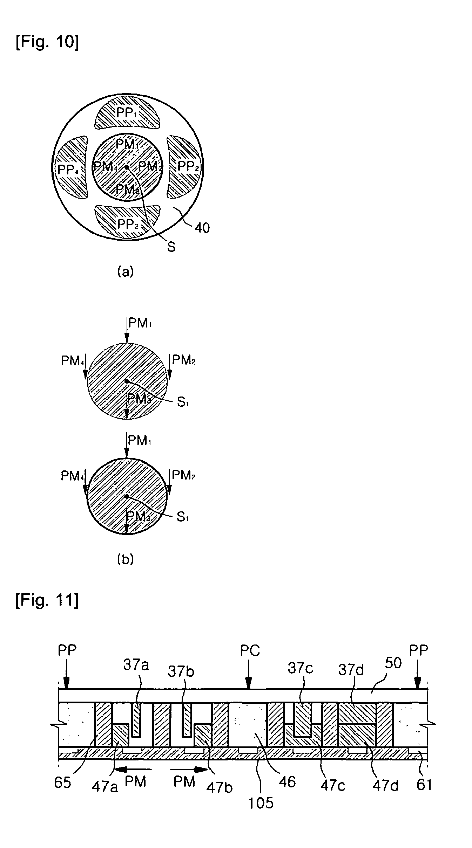

For example, as illustrated in (a) of FIG. 10, the controller determines that the input is the horizontal pressure input PS when the pressure force is sensed in radial directions in the state where the touch of the finger is sensed on the reference position S and determines that the input is the vertical pressure input PP when the pressure force is sensed in the radial directions in the state where the touch of the finger is not sensed on the reference position S.

Here, at least one of the first direction input signal, the second direction input signal, and the center input signal may be divided as a multiple stage signal of no less than two stages in accordance with the magnitude of the pressure force to be generated.

That is, the output ranges of the signal values generated by the sense unit 30 are subdivided. When the same first direction input signal is received, the first direction input signal is divided as a multiple stage signal of no less than two stages in accordance with the magnitude of the output value to be input.

Therefore, since the number of data assigned to the horizontal pressure directions or the vertical pressure positions may be increased by the number of multiple stage inputs, an input capacity may be maximized.

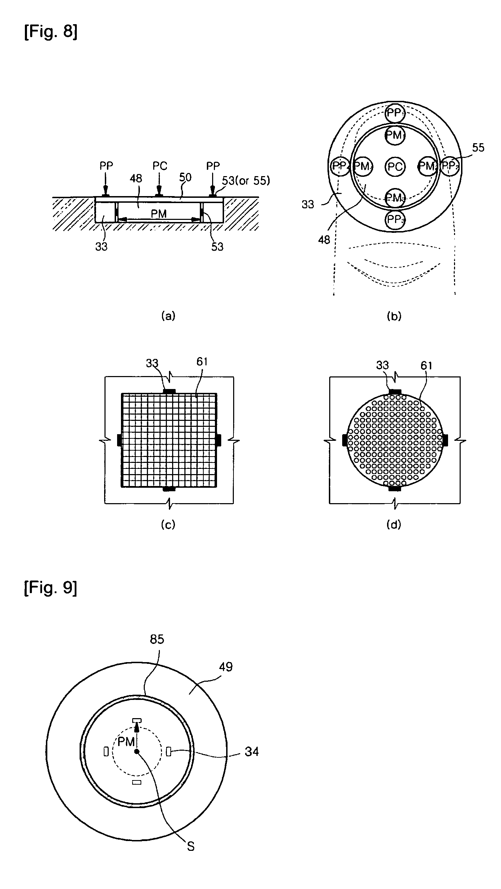

On the other hand, as illustrated in FIG. 9, the sense unit 30 further includes a ring-shaped rotation sense unit 85 spaced from the reference position S by a predetermined distance so that, when a three-dimensional object to be described later is manipulated, the object may rotate around the reference position S on a two-dimensional plane.

A controller (not shown) determines the horizontal pressure direction or the vertical pressure position of the finger from the first direction input signal and the second direction input signal to extract the data assigned to the corresponding radial direction and pressure position from a memory unit (not shown) to input the extracted data.

The data input by the horizontal pressure or the vertical pressure may have various kinds.

For example, Hangeul characters, English characters, numbers, and symbols, etc. are assigned to the horizontal pressure directions and the vertical pressure positions so that, when the controller receives the first direction input signal or the second direction input signal, the characters assigned to the horizontal pressure directions or the vertical pressure positions are extracted from the memory unit to be input.

In this case, the characters may be variously arranged as occasion demands. For example, a consonant character may be input by the horizontal pressure, a vowel character may be input by the vertical pressure, a Hangeul character may be input by the horizontal pressure, and a number or a symbol may be input by the vertical pressure.

In addition, the horizontal pressure input and the vertical pressure input are continuously performed so that a first character assigned to the horizontal pressure and a second character assigned to the vertical pressure may be almost simultaneously input. To be specific, in the state where the horizontal pressure is performed in one direction of a plurality of radial horizontal pressure directions around the reference position, the vertical pressure input may be performed in one direction of a plurality of radial vertical pressure positions around the reference position. That is, in the state where one input of the horizontal pressure and the vertical pressure is performed in one direction of a plurality of directions, another input may be performed in one direction of the plurality of directions so that the first character and the second character in accordance with the horizontal pressure and the vertical pressure may be continuously input and that a very fast input may be performed.

As the horizontal pressure and the vertical pressure are performed together, when a mode is converted into a mouse or joystick mode, the movement of a mouse pointer or the movement of the game character of a joystick may be performed by the horizontal pressure and the left and right button functions of a mouse are performed by the vertical pressure so that dragging or file drawing, etc. may be performed or that characters are moved during a game. The horizontal pressure and the vertical pressure are used as various command keys so that the game character manipulating function of the joystick may be performed.

In a three-dimensional object graphic work mode realized on a computer, the movement of the object is performed by the horizontal pressure and the object is rotated by the vertical pressure in a vertical pressure direction.

Here, the rotation of the object means that the object rotates in itself without moving while being fixed to a predetermined position on three-dimensional coordinates and is distinguished from the rotation on the two-dimensional plane by the rotation sense unit 85.

On the other hand, the input device according to the present invention may input a third character that is not assigned to the horizontal pressure and the vertical pressure by a combination input of the horizontal pressure and the vertical pressure. For example, when '┐' is input by a horizontal pressure input PM₁ in a 12 o'clock direction and '├' is input by a vertical pressure input PP₁ in the 12 o'clock direction, not '┐' or '├' but a symbol '@' may be input by a combination input of the horizontal pressure and the vertical pressure. That is, as illustrated in (a) of FIG. 12, in the state where the horizontal pressure input PM₁ in the 12 o'clock direction is performed, as illustrated in (b) of FIG. 12, the vertical pressure input PP₁ in the 12 o'clock direction is continuously input so that a different character from the characters input by the horizontal pressure input and the vertical pressure input that are separately performed may be input. The horizontal pressure input may be performed in the state where the vertical pressure input is performed first. In such a case, a different character from the character obtained by continuously performing the horizontal pressure input and the vertical pressure input may be input.

The combination input may be distinguished from the separate inputs (the horizontal pressure input or the vertical pressure input) by various methods, for example, by determining an input as the combination input when the vertical pressure is sensed within a predetermined time value in the state where the horizontal pressure is performed (or in reverse order thereof) or by determining whether an input is the combination input based on the pressure value obtained by the horizontal pressure or the vertical pressure.

A moving unit corresponding to the horizontal pressure is separated from a pressing unit corresponding to the vertical pressure so that the horizontal pressure and the vertical pressure may be continuously input or may be input by a combination.

The input device according to the present invention may make one set or two sets. The horizontal pressure and the vertical pressure may be provided so that a multiple stage input may be performed. In addition, the case in which the horizontal pressure or the vertical pressure is performed in the state where a center sense signal is input using the center sense signal may be distinguished from the case in which the horizontal pressure or the vertical pressure is performed in the state where the center sense signal is not input, to perform an input.

The number of characters that may be input by the input device according to the present invention may be increased as desired by using the methods such as the two sets, the multiple stages, and the center sense signal, etc.. Therefore, numbers or symbols may be additionally assigned in the state where one of Hangeul, alphabets, and hiragana is arranged so that an input can be rapidly performed.

On the other hand, the reference position S may be fixed to one side of the sense region, however, may be provided to move along the touch position of the finger put on the sense unit 30 as illustrated in (b) of FIG. 10. In this case, the vertical pressure position may move along the reference position S.

That is, although the finger that touches the piezoelectric sense panel 40 moves so that the reference position S changes from S1 to S2, since the vertical pressure position moves along the reference position S, the vertical pressure may be performed at the moved reference position S2 without returning to the original reference position S1.

In this case, in the mouse or joystick mode, the movement of the mouse pointer or the movement of the game characters of the joystick are performed by the movement of the touch point of the finger and a function of manipulating the left and right button functions of the mouse or the game character manipulating functions of the joystick may be performed by the vertical pressure.

In the graphic work of the three-dimensional object, the object may be moved by moving the touch point of the finger and the object may be rotated by the vertical pressure in a vertical pressure direction.

On the other hand, the horizontal pressure and the vertical pressure by the above-described sense unit 30 may be realized on a common touch screen.

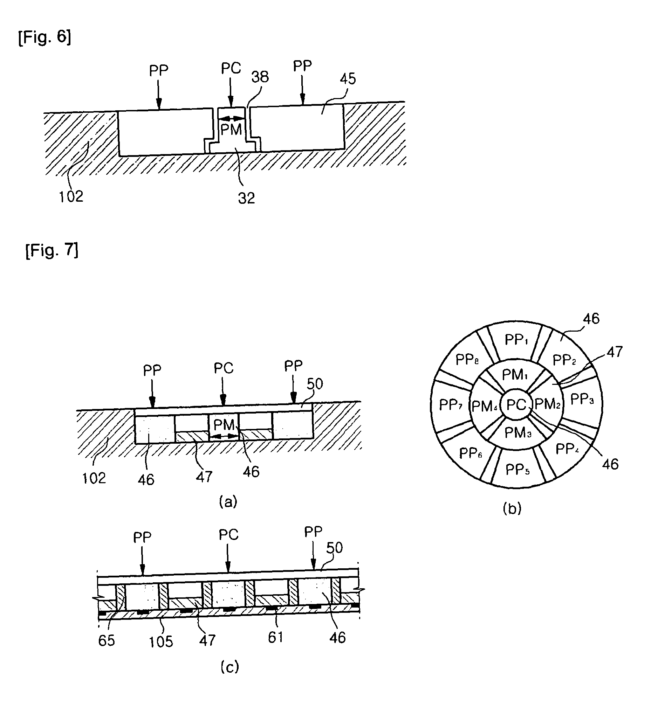

As illustrated in FIG. 7, a cover (or a cover member) 50 made of an elastic material may be further provided on the sense unit 30, on which the finger is put.

The cover 50 surrounds the sense unit 30 to prevent the sense unit 30 from being abraded and damaged and to prevent dust and moisture from being induced.

Since the cover 50 is interposed between the finger and the sense unit 30, however, does not distinguish the horizontal pressure from the vertical pressure by the cover 50, the cover 50 does not function as a common input unit.

The cover 50 is adhesively attached to the sense unit 30 so that the cover 50 and the sense unit 30 may not be relatively moved.

A slide preventing unit 51 for preventing the finger from sliding during the horizontal pressure may be further provided in the cover 50.

The slide preventing unit 51 may be provided variously. For example, the cover 50 may be formed of rubber having large frictional force and unevenness may be formed on the cover 50.

On the other hand, as illustrated in (b) of FIG. 8, a display unit 55 for displaying horizontal pressure directions for the horizontal pressure inputs PM and vertical pressure positions for the vertical pressure inputs PP may be further provided on the cover 50.

The display unit 55 may display the horizontal pressure directions and the vertical pressure positions and may display data such as characters and numbers assigned to the horizontal pressure directions or the vertical pressure positions.

In addition, pressure protrusions 53 for concentrating pressure force during the vertical pressure may be further provided in the vertical pressure positions. The pressure protrusions 53 have a change in output values large by locally concentrating the elastic transform caused by the pressure force during the horizontal pressure input PM or the vertical pressure input PP so that the piezoelectric sense panel 40 effectively senses the horizontal pressure input PM and the vertical pressure input PP.

Hereinafter, embodiments of the present invention will be described with reference to the accompanying drawings.

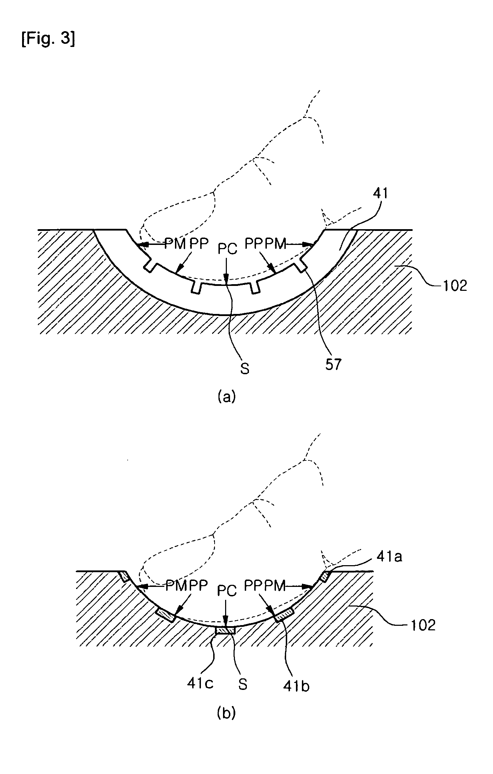

FIG. 3 is a sectional view of the sense unit 30 according to an embodiment of the present invention.

Referring to FIG. 3, the sense unit 30 includes a first piezoelectric sense panel 41 having a concave sense region to correspond to the shape of the touch surface of the finger.

Referring to (a) of FIG. 3, in the first piezoelectric sense panel 41, a plurality of vertical pressure positions or horizontal pressure directions are sequentially spaced from the reference position S positioned in the center of the touch surface of the finger and are arranged around the reference position S in a radial direction by different distances.

That is, the vertical pressure positions for sensing the vertical pressure input PP of the finger are arranged outside the center of the first piezoelectric sense panel 41 having the reference position S and the horizontal pressure directions for sensing the horizontal pressure inputs PM are arranged outside the vertical pressure positions.

That is, since the first piezoelectric sense panel 41 is provided concave to correspond to the shape of the touch surface of the finger, the horizontal pressure directions are arranged in the positions where the finger presses in a horizontal direction and the vertical pressure positions are arranged in the positions where the finger is leaned to apply pressure downward.

In this case, spaces among the vertical pressure positions, spaces among the horizontal pressure directions, or spaces between the vertical pressure positions and the horizontal pressure directions may be partitioned off by transform preventing grooves 57.

On the other hand, the plane shape of the first piezoelectric sense panel 41 may be provided as illustrated in (b) of FIG. 7.

On the other hand, the first piezoelectric sense panels 41 a, 41 b, and 41 c may be provided in a concave case 110 to be partitioned off corresponding to the horizontal pressure directions and the vertical pressure positions as illustrated in (b) of FIG. 3.

Here, reference numeral 41 a denotes the first piezoelectric sense panel for sensing the horizontal pressure input PM, 41 b denotes the first piezoelectric sense panel for sensing the vertical pressure input PP, and 41 c denotes the first piezoelectric sense panel for sensing a center pressure input PC toward the reference position S.

FIG. 4 is a sectional view of the sense unit 30 according to another embodiment of the present invention.

Referring to FIG. 4, the sense unit 30 includes a second piezoelectric sense panel 42 for sensing the vertical pressure to generate the second direction input signal and a third piezoelectric sense panel 43 provided to touch the bottom of the second piezoelectric sense panel 42 to sense the pushing of the second piezoelectric sense panel 42 that touches the third piezoelectric sense panel 43 during the horizontal pressure and to generate the first direction input signal.

That is, the vertical pressure input PP is sensed through the second piezoelectric sense panel 42 positioned on the top and the horizontal pressure input PM is sensed by the pushing of the second piezoelectric sense panel 42 by the pressure force of the finger in the third piezoelectric sense panel 43 that touches the second piezoelectric sense panel 42.

In addition, as illustrated in (c) of FIG. 4, the vertical pressure input and the horizontal pressure input may be sensed by one piezoelectric sense panel. At this time, in the drawing, such a piezoelectric sense panel is illustrated as the second piezoelectric sense panel 42. However, the piezoelectric sense panel may be the third piezoelectric sense panel 43 and may be a sense panel that may distinguish the vertical pressure input from the horizontal pressure input to sense the vertical pressure input and the horizontal pressure input.

FIG. 5 is a sectional view of the sense unit 30 according to another embodiment of the present invention.

Referring to the drawing, the sense unit 30 includes a fourth piezoelectric sense panel 44 that touches the finger to sense the vertical pressure input PP and to generate the second direction input signal, a plurality of vertical protrusions 37 that protrude downward from the fourth piezoelectric sense panel 44, and a first movement sense unit 31 provided in the horizontal pressure directions around the vertical protrusions 37 to touch or press the vertical protrusions 37 during the horizontal pressure input PM and to generate the first direction input signal.

The finger is put on the fourth piezoelectric sense panel 44 for sensing the vertical pressure input PP.

The vertical protrusions 37 protrude downward from the fourth piezoelectric sense panel 44, move in a horizontal direction when the fourth piezoelectric sense panel 44 is pushed by the pressure force during the horizontal pressure input PM, and touch or press the first movement sense unit 31 so that the horizontal pressure input PM is sensed.

The vertical protrusions 37 and the first movement sense unit 31 may be provided only in the reference position S and may be distributed in the entire sense region. In the latter case, in the case where the reference position S moves, the horizontal pressure input PM may be performed in various positions.

FIG. 6 is a sectional view of the sense unit 30 according to still another embodiment of the present invention.

Referring to FIG. 6, the sense unit 30 includes a through hole 38 formed in the reference position S, a fifth piezoelectric sense panel 45 for sensing the vertical pressure input PP to generate the second direction input signal, and a second movement sense unit 32 inserted into the through hole 38 and provided to be leaned by the finger in radial directions to generate the first direction input signal corresponding to the horizontal pressure input PM.

A method of the second movement sense unit 32 to sense the horizontal pressure input PM is not limited. For example, the second movement sense unit 32 may sense the horizontal pressure direction by expansion or contraction of one side of a lower part while being leaned by the pressure force or the second movement sense unit 32 may sense the touch onto the fifth piezoelectric sense panel 45 or adhesive pressure force against the fifth piezoelectric sense panel 45 while being leaned by the pressure force.

FIG. 7 is a sectional view of the sense unit 30 according to still another embodiment of the present invention.

Referring to (a) of FIG. 7, the sense unit 30 includes sixth piezoelectric sense units 46 and seventh piezoelectric sense units 47.

As illustrated in (b) of FIG. 7, the sixth piezoelectric sense units 46 may be arranged in the form of a belt around the reference position S by different distances and may sense the vertical pressure input PP to generate the second direction input signal.

The seventh piezoelectric sense units 47 are arranged among the sixth piezoelectric sense units 46, have a smaller height than the sixth piezoelectric sense units 46 not to be pressed by the finger during the vertical pressure input PP, and are pressed by the sixth piezoelectric sense units 46 in the horizontal pressure direction during the horizontal pressure input PM to generate the first direction input signal.

Here, the height of the seventh piezoelectric sense unit 47 may vary, however, may be no more than the height, at which the pressure force of the finger or the cover 50 is not transmitted although the sixth piezoelectric sense units 46 are pressed by the vertical pressure input PP.

On the other hand, during the horizontal pressure input PM, the pressure force is transmitted to the seventh piezoelectric sense unit 47 by the sixth piezoelectric sense units 46 positioned in the reference position S so that the first direction input signal toward the corresponding horizontal pressure direction is generated.

On the other hand, as illustrated in (c) of FIG. 7, conductive elastic members 65 may be interposed between the sixth piezoelectric sense units 46 and the seventh piezoelectric sense units 47.

In this case, one end of each of the piezoelectric sense units 46 and 47 is electrically coupled to the controller through the conductive elastic members 65 and the other end is electrically coupled to the controller through a terminal 61 provided on a circuit board 115.

On the other hand, FIG. 11 illustrates a constitution, in which the embodiment of FIG. 5 is combined with the embodiment of FIG. 7. Vertical protrusions 37a press the seventh piezoelectric sense units 47 during the horizontal pressure input PM in a left direction to generate the first direction input signal. Vertical protrusions 37b press the seventh piezoelectric sense units 47b during the horizontal pressure input PM in a right direction to generate the first direction input signal. Vertical protrusions 37c generate the first direction input signal during the horizontal pressure input PM in a front direction (a direction that penetrates a plane). Vertical protrusions 37d generate the first direction input signal during the horizontal pressure input PM in a rear direction (a direction that rises from the plane).

FIG. 8 is a sectional view of the sense unit 30 according to still another embodiment of the present invention.

Referring to FIG. 8, the sense unit 30 includes an eighth piezoelectric sense panel 48 that touches the finger and that senses the vertical pressure input PP to generate the second direction input signal and a third movement sense unit 33 provided outside the eighth piezoelectric sense panel 48 to sense touch by the pushing of the eighth piezoelectric sense panel 48 during the horizontal pressure input PM to generate the first direction input signal.

Here, as illustrated in (b) of FIG. 8, the vertical pressure position may be provided in the third movement sense unit 33, however, may be provided in the eighth piezoelectric sense panel 48 like in the horizontal pressure direction.

On the other hand, a pressure protrusion 53 may be integrated with a display unit 55 in the case of the vertical pressure input PP and may be provided between the eighth piezoelectric sense panel 48 and the third movement sense unit 33 in the case of the horizontal pressure input PM.

On the other hand, (c) and (d) of FIG. 8 illustrate the shapes of a terminal 61 provided under the eighth piezoelectric sense panel 48. The terminal 61 may vary. As illustrated in (c), the terminal 61 may be in a latticed matrix to determine the horizontal pressure or the vertical pressure position from the X and Y coordinates of the position where a current value or a voltage value is output. As illustrated in (d), the plurality of terminals 61 may be distributed in the positions of the sense region.

FIG. 9 is a sectional view of the sense unit 30 according to still another embodiment of the present invention.

Referring to FIG. 9, the sense unit 30 includes a ninth piezoelectric sense panel 49 that touches the finger to sense the vertical pressure input PP and to generate the second direction input signal, and a fourth movement sense unit provided in the ninth piezoelectric sense panel 49 around the reference position S to correspond to the radial directions to sense the touch by the pushing of the ninth piezoelectric sense panel 49 during the horizontal pressure input PM and to generate the first direction input signal.

The fourth movement sense unit 34 may be provided in the ninth piezoelectric sense panel 49 to sense the horizontal pressure force by the pushing of the ninth piezoelectric sense panel 49 during the horizontal pressure input PM.

The number of fourth movement sense units 34 may vary. For example, as illustrated in FIG. 9, the fourth movement sense units 34 may be provided in the horizontal pressure directions.

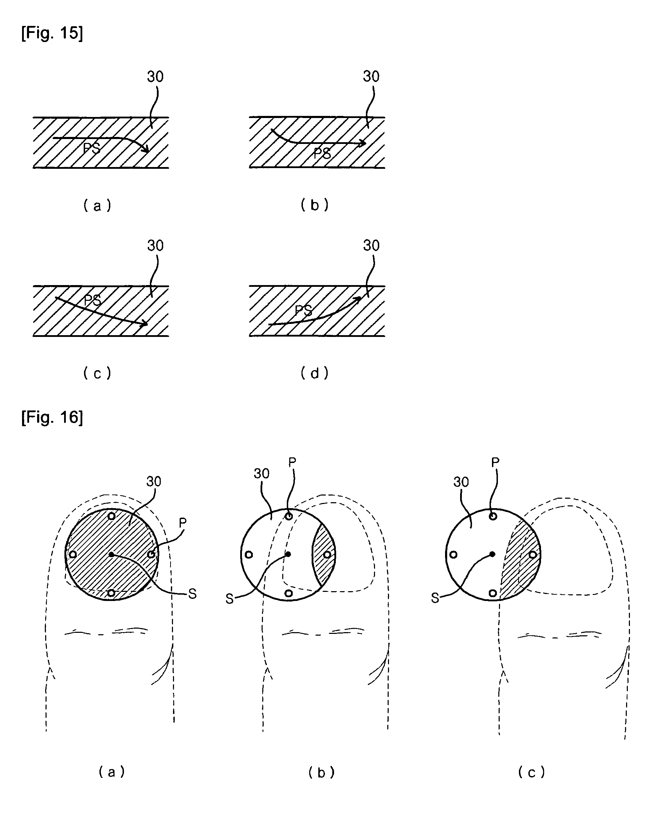

FIG. 15 is a plan view of the sense unit 30 according to still another embodiment of the present invention.

Referring to FIG. 15, as illustrated in (a) of FIG. 15, the sense unit 30 generates the first direction input signal by the vertical pressure input PP in the vertical pressure position and generates the second direction input signal by the horizontal pressure input PM in the horizontal pressure position. At this time, the horizontal pressure input PM is performed by the elastic member 65 of the sense unit 30 being transformed by the pressure force to be pressed by a ring-shaped horizontal pressure sense unit 66 outside the elastic member 65.

The elastic member 65 may be provided on a sense unit (not shown) for sensing the vertical pressure input PP, however, may be provided to sense the vertical pressure input PP.

On the other hand, as illustrated in (b) of FIG. 15, sensors 67 may be provided on the bottom of the elastic member 65 or in the elastic member 65 in the sense unit 30. At this time, the elastic member 65 is transformed by the vertical pressure input PP in the vertical pressure position in the sense unit 30. The transformation is sensed by the sensors 67 so that the vertical pressure input PP is performed.

In addition, since the elastic member 65 is transformed by the horizontal pressure input PM in the horizontal pressure direction, the transformation is sensed by the sensors 67 so that the horizontal pressure input PM is performed.

### <Second Embodiment>

A data input device according to a second embodiment of the present invention provided in a predetermined sense region in an electronic apparatus terminal consists of the sense unit 30 and a controller (not shown).

Describing in detail, the sense unit 30 senses a horizontal pressure input PM and a vertical pressure input PP for a reference position S displayed by the touch or pressure of a finger in a sense region and a plurality of first directing positions P displayed and arranged around the reference position S to generate the first direction input signal corresponding to the horizontal pressure input PM and the second direction input signal corresponding to the vertical pressure input PP.

At this time, the reference position S is displayed in the sense region by the touch or pressure of the finger, however, may be provided to be displayed on the sense region.

A sense unit such as a touch pad, a touch screen, or a piezoelectric sense panel may be used as the sense unit 30. When the touch pad or the touch screen senses touch or horizontal pressure, the piezoelectric sense panel may be used together with the touch pad or the touch screen.

A data input by the sense unit 30 may be divided into an entire input mode (refer to (b) of FIG. 16), in which the horizontal pressure input PM and the vertical pressure input PP for one of the first directing positions P are performed in the state (refer to (a) of FIG. 16) where the finger is put on the sense unit 30 and a partial input mode (refer to (c) of FIG. 16), in which the horizontal pressure input PM and the vertical pressure input PP are performed for one of the first directing positions P.

At this time, the entire input mode may be distinguished from the partial input mode by sensing the touch area of the sense unit 30 to determine whether the touch area is no less than a predetermined area.

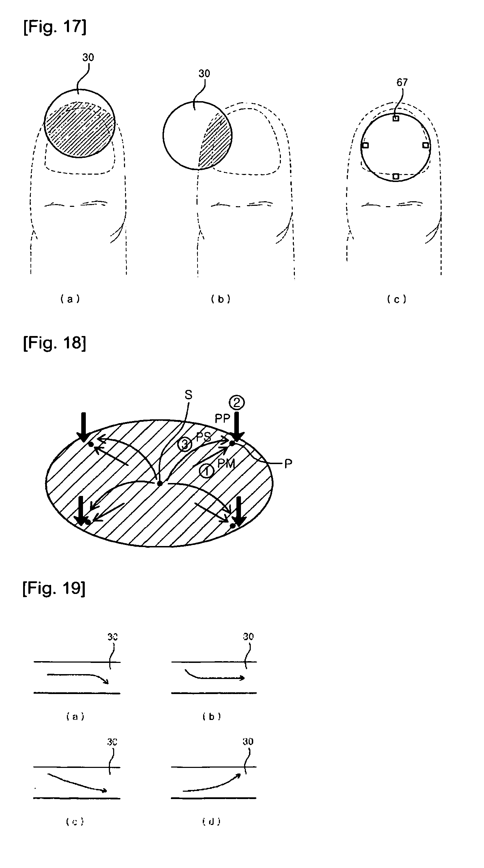

Describing in detail, as illustrated in (a) of FIG. 17, when the finger touches almost the entire sense unit 30, it is determined as the entire input mode. As illustrated in (b) of FIG. 17, when the finger touches only a part of the sense unit 30, it is determined as the partial input mode. At this time, the touch area for distinguishing the entire input mode and the partial input mode is not limited. That is, the limitations of the touch area may be determined in accordance with the size of the sense unit 30 and the number of first directing positions P arranged in the sense unit 30. For example, the entire input mode may be distinguished from the partial input mode in accordance with whether the touch area of the finger for the sense unit 30 is no less than 30%.

In addition, when the sense unit 30 is formed in the sense region and sensors 67 for sensing the touch of the finger for the first directing positions on the sense unit are formed as illustrated in (c) of FIG. 17, the entire input mode and the partial input mode may be discriminated by sensing the touch of the finger put on the sense unit 30 by the sensors 67. For example, when the touch of the finger is sensed by at least two of the sensors 67, it is determined as the entire input mode.

As described above, when the entire input mode is distinguished from the partial input mode, an input by the horizontal pressure and the vertical pressure performed in the first directing positions P in the entire input mode may be distinguished from an input by the horizontal pressure and the vertical pressure performed in the first directing positions P in the partial input mode. Therefore, when there are four first directing positions in the sense unit 30 so that eight data may be input in the partial input mode, since eight different data may be input in the entire input mode, a data input capacity can be increased twice.

On the other hand, the sense unit 30 may generate a third direction input signal by a lean pressure input PS by lean pressure. That is, when the horizontal pressure and the vertical pressure performed in the sense unit 30 are sensed together in a set time range, the sense unit 30 generates the third direction input signal corresponding to the lean pressure input PS and the controller may input and process third data different from the horizontal pressure input PM and the vertical pressure input PP.

For example, as illustrated in FIG. 18, when '└' is assigned to the horizontal pressure (① of FIG. 18) performed in the first directing position in a 12 o'clock direction and '┴' is assigned to the vertical pressure (② of FIG. 18) performed in the first directing position in the 12 o'clock direction, not '└' or '┴' but ' 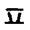 ' may be assigned to the lean pressure (③ of FIG. 18) performed in the first directing position in the 12 o'clock direction.

The lean pressure input PS may be performed by various methods as illustrated in FIG. 19. That is, the lean pressure input PS may be performed by performing the vertical pressure in the state of performing the horizontal pressure as illustrated in (a) of FIG. 19, may be performed by performing the horizontal pressure in the state of performing the vertical pressure as illustrated in (b) of FIG. 19, may be performed by increasing pressure in a downward diagonal direction as illustrated in (c) of FIG. 19, and may be performed by reducing the pressure initially applied in an upward diagonal direction as illustrated in (d) of FIG. 19.

A change in the pressure for the lean pressure input PS may be sensed by the piezoelectric sense panel. The sense unit 30 may be formed of an elastic material to easily perform the above-described various lean pressure input PS operations.

Data inputs by the horizontal pressure, the vertical pressure, and the lean pressure input will be described.

In the sense unit illustrated in FIG. 18, 'L' is input by the horizontal pressure input PM (① of FIG. 18) performed in the first directing position P in the 12 o'clock direction, '┴' is input by the vertical pressure input PP (② of FIG. 18) performed in the first directing position P in the 12 o'clock direction, and ' 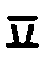 ' is input by the lean pressure input PS (③ of FIG. 18) performed in the first directing position P in the 12 o'clock direction. Therefore, the horizontal pressure input, the vertical pressure input, and the lean pressure input are sequentially performed so that a character ' 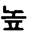 ' may be input.

At this time, the inputs may be distinguished from each other in accordance with the positions where the inputs are performed, pressure values for the inputs, and time intervals between inputs.

In the distinction by the pressure values, it is determined as the horizontal pressure input PM when the pressure value for the first directing position P is no more than 30 and it is determined as the vertical pressure input PP when the pressure value for the first directing position P is no less than 50. Therefore, when 20 is added to the pressure value in the state where the horizontal pressure input PM is performed, the vertical pressure input PP is obtained so that it is grasped that the horizontal pressure input PM and the vertical pressure input PP are continuously performed.

In addition, when 50 that is the pressure value corresponding to the vertical pressure is added in the state where the horizontal pressure input PM is performed, it is grasped that the horizontal pressure PM and the vertical pressure input PP are continuously performed.

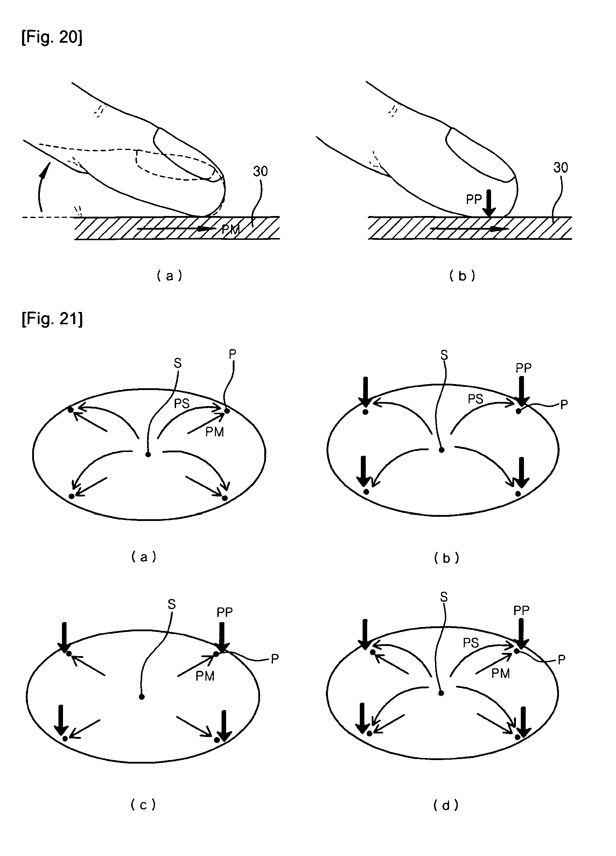

At this time, as illustrated in FIG. 20, when the continuously performed horizontal pressure input PM (refer to (a) of FIG. 20) and vertical pressure input PP (refer to (b) of FIG. 20) are performed within a predetermined time, it is not grasped as the horizontal pressure input and the vertical pressure input but as the lean pressure input PS. That is, in the lean pressure input PS, the horizontal pressure and the vertical pressure are combined with each other. When the horizontal pressure and the vertical pressure are performed within a set time, it is not grasped as the horizontal pressure input or the vertical pressure input but as the lean pressure input so that data (' 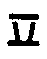 ' that is the 12 o'clock direction input of FIG. 18) different from the horizontal pressure input (' L' that is the 12 o'clock direction input of FIG. 18) or the vertical pressure input ('┴' that is the 12 o'clock direction input of FIG. 18) may be input.

The horizontal pressure input PM, the vertical pressure input PP, and the lean pressure input PS may be combined with each other to be input. That is, as illustrated in (a) of FIG. 21, the horizontal pressure input PM and the lean pressure input PS may be combined with each other so that new data may be input. As illustrated in (b) of FIG. 21, the lean pressure input PS and the vertical pressure input PP are combined with each other so that new data may be input. In addition, as illustrated in (c) of FIG. 21, the horizontal pressure input PM and the vertical pressure input PP may be combined with each other so that new data may be input. As illustrated in (d) of FIG. 21, the horizontal pressure input PM, the vertical pressure input PP, and the lean pressure input PS may be combined with each other so that new data may be input.

In addition, in the sense unit 30, second directing positions P2 may be arranged around the first directing positions P1 in a radial direction. At this time, data assigned to the horizontal pressures and the vertical pressures performed in the second directing positions P2 may be input.

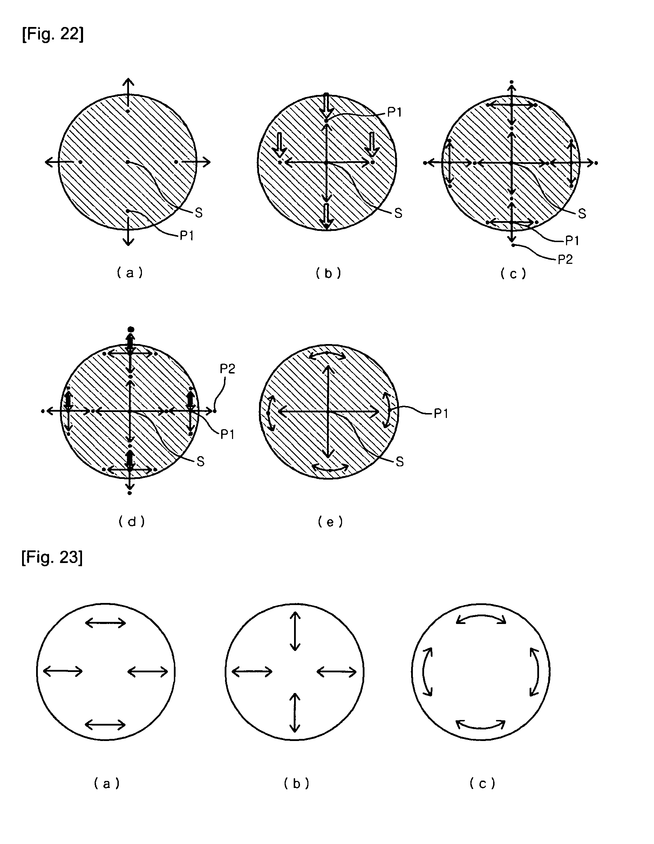

As described above, as the first directing positions P1 and the second directing positions P2 are arranged around the reference position S, various inputs may be performed. That is, as illustrated in (a) of FIG. 22, an input may be performed by movement in a first directing position P1 direction for the entire sense unit 30. As illustrated in (b) of FIG. 22, the horizontal pressure input and the vertical pressure input may be performed in the first directing positions P1. Although not shown, the lean pressure input may be performed in the first directing positions P1. In addition, as illustrated in (c) of FIG. 22, the horizontal pressure input may be performed from the first directing positions P1 to the second directing positions P2 together with the horizontal pressure input performed in the first directing positions P1.

Further, as illustrated in (d) of FIG. 22, the vertical pressure input may be performed in the first directing positions P1 and the horizontal pressure input may be performed from the first directing positions P1 to the second directing positions P2. In addition, as illustrated in (e) of FIG. 22, the horizontal pressure input may be performed in the first directing position P1 and an input may be performed by performing horizontal pressure from the first directing positions P1 in a circumferential direction.

As illustrated in (a) to (c) of FIG. 23, the horizontal pressure input in the first directing positions P1 may have various forms. That is, as illustrated in (a) of FIG. 23, the horizontal pressure input may be performed by the horizontal pressure in the first directing positions. As illustrated in (b) of FIG. 23, the horizontal pressure input may be inwardly and outwardly performed in the first directing positions in a radial direction. As illustrated in (c) of FIG. 23, an input may be performed by the horizontal pressure from the first directing positions in a circumferential direction.

In such various inputs, it is determined whether an input is performed in specific first and second directing positions P1 and P2 by sensing a point where the vertical pressure is generated since slight vertical pressure is generated during a horizontal pressure input to determine the first directing position P1 and the second directing position P2 corresponding to the point.

Elastic members 65 protrude in the first directing positions P1 and the second directing positions P2 so that various inputs may be easily performed in the first directing position P1 and the second directing position P2.

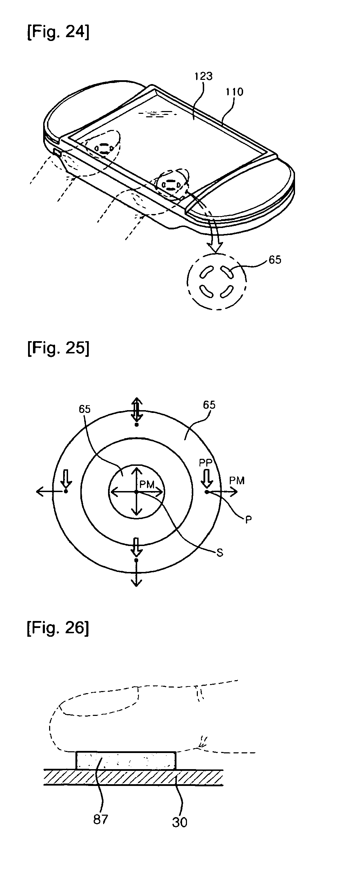

For example, on the above-described touch screen, the transparent elastic members 65 protrude in a predetermined shape as illustrated in FIG. 24 so that the pressure transmission property and the manipulation property of the finger are further improved.

In addition, in the sense region such as the touch screen, as illustrated in FIG. 25, the circular elastic members 65 may be provided to protrude in the reference position S and the ring-shaped elastic members 65 spaced from the reference position S in a radial direction may be provided to protrude. At this time, the horizontal pressure input PM may be performed in the reference position and the horizontal pressure input PM and the vertical pressure input PP may be performed in the first directing position provided in the ring-shaped elastic members 65.

In addition, the above-described various inputs may be realized on a common touch screen. That is, a sensor for sensing the horizontal pressure and the vertical pressure is provided under the touch screen so that the inputs may be performed.

In the touch screen that can sense the horizontal pressure and the vertical pressure, the inputs may be performed. Since the touch screen that may sense the horizontal pressure and the vertical pressure is well known to those skilled in the art, detailed description on a method of realizing the horizontal pressure and the vertical pressure through the touch screen will be omitted.

On the other hand, according to the present embodiment, since the sense unit 30 is constituted so that the reference position and the first directing positions are included in the range of one finger, inputs may be easily performed in the directing positions through an input instrument unit 87. That is, as illustrated in FIG. 26, the horizontal pressure and the vertical pressure performed in a specific first directing position may be more easily transmitted to the sense unit through the input instrument unit 87 made of an elastic material.

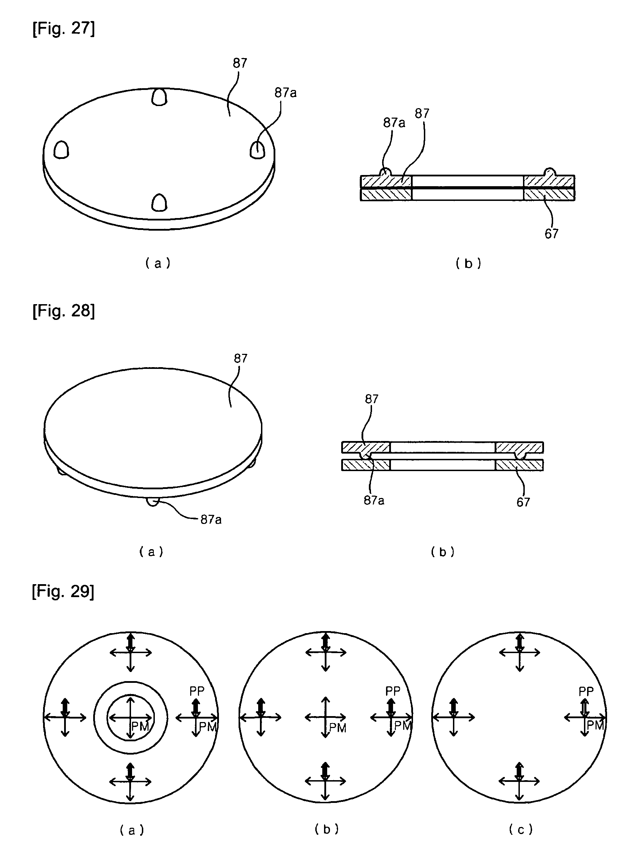

As illustrated in (a) of FIG. 27, the input instrument unit 87 is plate-shaped. In the plate, protrusions 87a are formed in the parts corresponding to the first directing positions so that an input may be easily performed in the first directing positions. The input instrument unit 87 is not limited to being circular but may have a shape corresponding to the sense unit 30. That is, as illustrated in (b) of FIG. 27, when the sensor of the sense unit 30 is ring-shaped, the input instrument unit 87 may be ring-shaped.

On the other hand, as illustrated in (a) of FIG. 28, the input instrument unit 87 is plate-shaped and the protrusions 87a corresponding to the first directing positions may be formed on the opposite side to (a) of FIG. 28, which helps an input to be minutely performed in the input instrument unit 87 when the input is performed in the first directing positions by the finger put on the input instrument unit 87.

The input instrument unit 87 is not limited to being circular but may be ring-shaped in accordance with the shape of the sensor of the sense unit 30 as illustrated in (b) of FIG. 28.

In the various input forms illustrated in FIG. 29, the same data group may be assigned to the four horizontal pressure inputs PM performed in the reference position S and the four horizontal pressure inputs PM performed in the first directing positions P1 in (a) of FIG. 29. As described above, when the same data group is assigned to the reference position and the first directing positions in the sense unit 30 illustrated in FIG. 25, the horizontal pressure input PM is performed in an adjacent first directing position promptly after the horizontal pressure input PM is performed in the reference position in a specific direction so that data can be rapidly input.

In the case illustrated in (b) of FIG. 29, the same data group is assigned to the reference position S and the first directing position P1 in the sense unit 30 illustrated in (d) of FIG. 22 so that data may be rapidly performed. In (c) of FIG. 29, the same data group is assigned to the first directing positions P1 so that data are input by the above method.

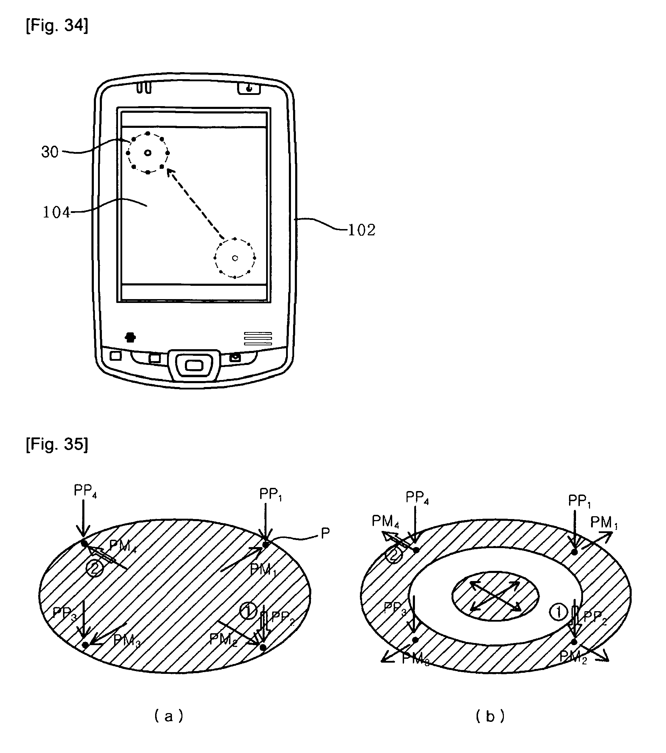

On the other hand, since the directing positions are arranged in a range to be covered by one finger in the sense unit according to the present invention, the vertical pressure input PP or the horizontal pressure input PM in another directing position may be rapidly performed after the vertical pressure input PP or the horizontal pressure input PM is performed in the directing positions. That is, as illustrated in (a) of FIG. 35, after a vertical pressure input PP₂ is performed in a directing position in a three o'clock direction in the state where the finger is put on the oblique-lined part, a horizontal pressure input PM₄ may be continuously performed in a directing position in a 9 o'clock direction.

In addition, as illustrated in (b) of FIG. 35, after performing the vertical pressure input PP₂ in the three o'clock direction directing position in the state where the finger is put on the oblique-lined part in the sense unit illustrated in FIG. 25, the horizontal pressure input PM₄ may be continuously performed in a nine o'clock direction directing position.

In addition, as described above, when the finger is put on a predetermined position in the touch screen, a character input mode is activated so that the sense unit 30 may be realized on the touch screen. At this time, a character board is displayed around the finger in a radial direction so that data may be input. When the finger is taken off from the touch screen, the character board may disappear.

The sense unit 30 activated in a predetermined position may be moved to another position on the sense region as illustrated in FIG. 34 in the state where the finger touches the sense unit. The position displacement is performed based on the reference position. When the reference position moves, first reference positions are spaced from the reference position and arranged around the reference position in a radial direction.

According to the present embodiment, the first directing positions are provided in four directions. However, the first directing positions are not limited to the four directions and may be provided in five directions, six directions, seven directions, eight directions, and more directions.

As the horizontal pressure and the vertical pressure are performed together, when a mode is converted into a mouse or joystick mode, the movement of a mouse pointer or the movement of the game character of a joystick may be performed by the horizontal pressure and the left and right buttons of a mouse are pressed by the vertical pressure so that dragging or file drawing may be performed or that characters are moved during a game. The horizontal pressure and the vertical pressure are used as various command keys so that the game character manipulating function of the joystick may be performed.

The movement of the mouse pointer may be performed by the horizontal pressure and the function of the left button of the mouse may be performed by pressing the reference position of the sense unit.

When the mouse pointer is moved only by the horizontal pressure or the vertical pressure, the mobility of the pointer is limited so that it is difficult to rapidly manipulate the mouse pointer during a game like in a desktop computer. That is, when the mouse pointer is moved to be symmetrical with the movement of the finger in a portable apparatus, the mouse pointer may be rapidly and precisely moved by the movement of the finger. However, due to the limitations on a space in the portable apparatus, it is difficult to realize a mouse pointer manipulating method like in the desktop computer.

Therefore, when the vertical pressure or the horizontal pressure capable of applying pressure to the touch movement, in which the finger and the mouse pointer correspondingly move, is used together, it is possible to have the mouse pointer rapidly and precisely move to correspond to the movement of the finger and to control the speed of the mouse pointer to be larger so that the movement of the mouse pointer may be effectively controlled even in a narrow space such as the portable apparatus.

In order to rapidly manipulate the mouse pointer, it is preferable that the movement form of the finger may be the touch movement. However, when the touch position of the finger moves, since the finger deviates a vertical pressure region, the touch movement and the vertical pressure input may not be performed together. Therefore, according to the present embodiment, in the case where the finger makes the touch movement, when the position of the sense unit may be changed in accordance with the movement position of the finger, although the finger makes the touch movement to a certain position, the vertical pressure input may be always performed.

As described above, in the data input device according to the present invention, the mouse pointer rapidly moves in a narrow input region in accordance with the touch movement position of the finger and the sense unit capable of performing the vertical pressure in a plurality of radial directions in accordance with the touch movement position of the finger moves so that more commands may be performed than in the left and right buttons of the conventional mouse. Therefore, game characters may be rapidly and precisely moved and a plurality of commands may be performed together with the movement of the characters so that remarkably high effect may be obtained by a character control method in the portable apparatus.

In a three-dimensional object graphic work mode realized on a computer, the movement of the object is performed by the horizontal pressure and the object is rotated by the vertical pressure or the lean pressure in a vertical pressure or lean pressure direction.

### <Third Embodiment>

Next, a third embodiment of the data input device according to the present invention will be described.

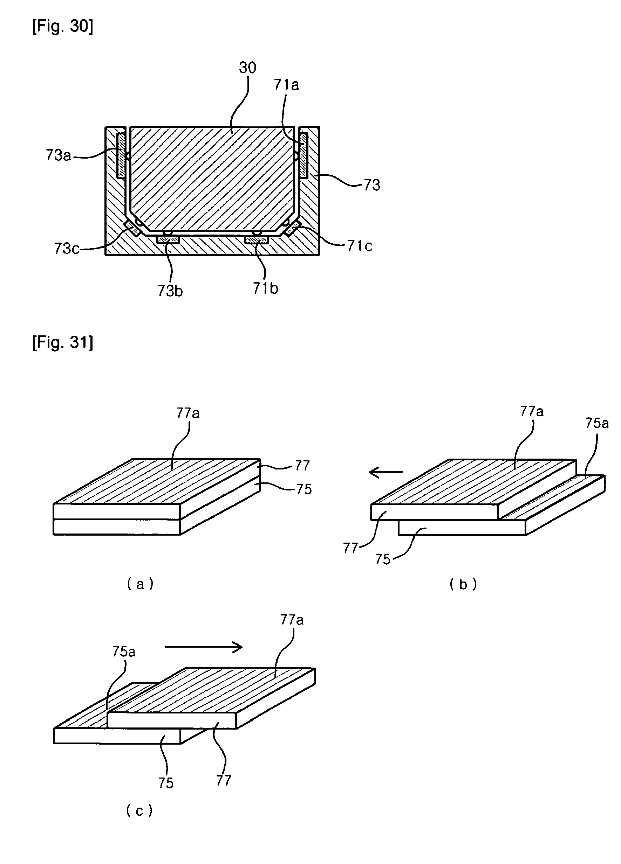

The data input device according to the present embodiment, as shown in FIG. 30, includes an input unit 71, a sensor 73, and a controller (not shown). The input unit 71 made of an elastic material is elastically transformed by the horizontal pressure, the vertical pressure, and the lean pressure performed in the first directing positions provided on the input unit to press the sensor 73.

The sensor 73 provided over the side and the bottom of the input unit 71 senses the horizontal pressure, the vertical pressure, and the lean pressure applied to the input unit 71 to generate a first direction input signal for the horizontal pressure, a second direction input signal for the vertical pressure, or a third direction input signal for the lean pressure.

Describing in detail, the input unit 71 includes a side, a bottom, and a slope between the side and the bottom and the sensor 73 includes surfaces corresponding to the side, the bottom, and the slope of the input unit 71. At this time, a horizontal pressure sensor 73a for sensing pressure on the side of the input unit 71 and a vertical pressure sensor 73b for sensing pressure on the bottom of the input unit 71, a lean pressure sensor 73c for sensing pressure on the slope of the input unit 71 are provided in the sensor 73.

In the input unit 71, a horizontal pressure protrusion 71 a is provided on the side, a vertical pressure protrusion 71b is provided on the bottom, and the lean pressure protrusion 71 c is provided on the slope in order to correctly transmit pressure to the horizontal pressure sensor 73a, the vertical pressure sensor 73b, and the lean pressure sensor 73c.

As described above, according to the present embodiment, the lean pressure is input to the input unit 71 and the sensor 73 in addition to the horizontal pressure and the vertical pressure to be sensed. When interference is generated between the inputs, a method of distinguishing the inputs from each other is determining that an input is performed in the sensor, to which the largest pressure is applied, among the sensors 73a, 73b, and 73c.

For example, when the horizontal pressure input PM is performed in the input unit 71, partial pressure is applied to the lean pressure sensor 73c. However, since most pressure is sensed by the horizontal pressure sensor 73a, the input is sensed as the horizontal pressure input PM.

In addition, when the lean pressure input PS is performed by the input unit, partial pressure is sensed by the horizontal pressure input unit 73a and the vertical pressure input unit 73b. However, since pressure larger than the pressure is sensed by the lean pressure sensing unit 73c, the input is sensed as the lean pressure input PS.

First to third direction input signals are generated for the separately sensed horizontal pressure input PM, vertical pressure input PP, and lean pressure input PS. The controller extracts data assigned from the first to the third direction input signals to the input signals from a memory to input the extracted data.

At this time, when the horizontal pressure input PM, the vertical pressure input PP, and the lean pressure input PS are continuously performed within a set time, it is grasped as a combination input so that data different from the inputs may be input.

### <Fourth Embodiment>

Next, a fourth embodiment of the data input device according to the present invention will be described.

As illustrated in FIG. 31, the data input device according to the present embodiment includes a sense unit having a plurality of sense lines and a controller. The sense unit includes a reference plate 75, on which first sense lines 75a are arranged, and a movement plate 77, under which second sense lines 77a corresponding to the first sense lines 75a are arranged. In the drawing, it is illustrated that the second sense lines 77a are arranged on the movement plate 77 for convenience sake. Actually, the second sense lines 77a are provided under the movement plate 77.

At this time, the sense lines 75a and 77a are arranged in parallel in one direction as illustrated in (a) of FIG. 31. The finger touches the movement plate 77 so that the movement plate 77 may move to make a right angle with the sense lines 75a and 77a against the reference plate 75. As described above, when the horizontal pressure is applied in the state where the finger touches the movement plate 77, the movement plate 77 moves against the reference plate 75 so that the touch positions of the first sense line 77a and the second sense line 75b that has been initially touched each other change.

That is, when the initial n^{th} first sense line 75a and the n^{th} second sense line 77a touch or face each other, while the movement plate 77 moves by the horizontal pressure, the n^{th} second sense line 77a touches the (n+x)^{th} first sense line 75a. At this time, x is a natural number such as 1, 2, and 3 and, as the x value is larger, it means that the movement plate moves more. Therefore, when data assigned to the first sense line 75a that the n^{th} second sense line 77a finally touches is input by the strength of the horizontal pressure against the movement plate 77, a multiple stage horizontal pressure input may be performed.

That is, as illustrated in (b) and (c) of FIG. 31, the movement amount of the movement plate 77 may vary in accordance with the horizontal pressure so that various data may be input.

In addition, the first sense lines 75a and the second sense lines 77a initially touch each other or are spaced from each other. At this time, after the finger touches the movement plate 77, when the vertical pressure is performed, the second sense lines 77a press the first sense lines 75a to perform the vertical pressure input PP.

At this time, a plurality of sense films coupled to different input ports may overlap on the movement plate 77 or the reference plate 75 or between the movement plate 77 and the reference plate 75 so that touch may increase in multiple stages in accordance with the strength of the vertical pressure. Insulating layers may be further provided among the sense films like in a membrane printed circuit board (PCB) method.

The first and the second sense lines 75a and 77a are not arranged at uniform intervals but are non-uniformly arranged so that a smaller number of sense lines touch each other when the reference plate 75 and the movement plate 77 cross each other.

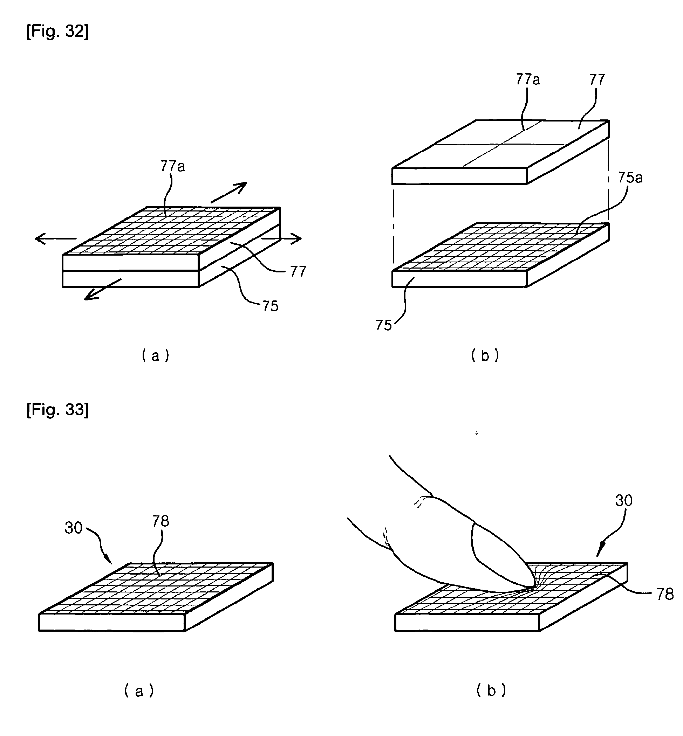

FIG. 32 is a perspective view illustrating a modification of a fourth embodiment according to the present invention.

As illustrated in (a) of FIG. 32, according to the present modification, the first sense lines 75a and the second sense lines 77a are arranged in a matrix. Therefore, radial horizontal pressure applied to the movement plate 77 may be sensed by touch between the first and the second sense lines 75a and 77a. When the force of the horizontal pressure increases, a degree of deviation of the second sense line 77a from the initially corresponding first sense line 75a increases so that new data may be input.

The second sense lines 77a provided in the movement plate 77 may be cross-shaped as illustrated in (b) of FIG. 32. When the second sense lines 77a are cross-shaped, the deviation of the second sense lines 77a from the movement plate 77 by the horizontal pressure may be sensed by the method illustrated in (a) of FIG. 32.

In addition, a return member (not shown) having elasticity to be returned to an original state after being moved by the horizontal pressure of the movement plate 77 may be coupled to the movement plate 77.

FIG. 33 is a perspective view illustrating another modification of the fourth embodiment according to the present invention.

In the present modification, the sense unit 30 is formed of an elastic body and a plurality of sense lines 78 are arranged in the elastic body in a matrix so that the sense lines 78 can be touched each other by the horizontal pressure and the vertical pressure applied to the elastic body. Therefore, the first direction input signal is generated by the horizontal pressure and the second direction input signal is generated by the vertical pressure.

Describing in detail, since the sense unit 30 is formed of an elastic body, due to the horizontal pressure applied to the sense unit 30, the elastic body is contracted on one side, to which the horizontal pressure is applied, and is relaxed on the other side. At this time, since the plurality of sense lines 78 are provided in the elastic body in a matrix, the distance between the sense lines 78 is reduced by the contraction of the elastic body so that adjacent sense lines touch each other. Therefore, the horizontal pressure direction is grasped by the touch of the sense lines 78 in the points contracted during the horizontal pressure and the degree of contraction may be grasped by the number of touching sense lines 78.

At this time, since the number of touching sense lines 78 increases as the contraction of the elastic body proceeds, the degree of contraction may be grasped in accordance with the increased number of sense lines 78 and a multiple stage input may be performed through the number of touching sense lines 78.

In addition, the plurality of sense lines 78 horizontally arranged in a matrix may be laminated at uniform intervals in a vertical direction. Therefore, when the vertical pressure is applied to the elastic body, the vertically laminated sense lines 78 touch each other so that the vertical pressure input PP may be performed in the point where the vertical pressure is applied.

At this time, the number of touching sense lines 78 varies in accordance with the degree of the vertical pressure. That is, as the force of the vertical pressure increases, the number of touching sense lines 78 increases. Therefore, a vertical pressure input may be performed in multiple stages through the number of touching sense lines 78.

In addition, the shape of the sense unit capable of sensing the horizontal pressure, the vertical pressure, or the leaning (upward and downward diagonal pressure) is not limited to the above embodiment. Recently, sense units capable of sensing the operations (the horizontal pressure and the vertical pressure) of the finger such as a touch sensor using a force sensor are actively developed and forwarded. When a method of inputting predetermined data through the horizontal pressure and the vertical pressure or the leaning using the finger around the reference position in a plurality of radial directions such as the number (it is determined as the vertical pressure when the number is four and it is determined as the horizontal pressure when the number is two) of sense units such as sensors capable of sensing the horizontal pressure and the vertical pressure of the finger, a sensed position (north or east in a radial direction), or a difference in sensed values (horizontal pressure when the sensed value is no more than a predetermined sensed value and vertical pressure when the sense value is no less than a predetermined sensed value) is adopted, it is considered as belonging to the scope of the present invention.

### <Fifth Embodiment>

Next, a fifth embodiment of the data input device according to the present invention will be described.

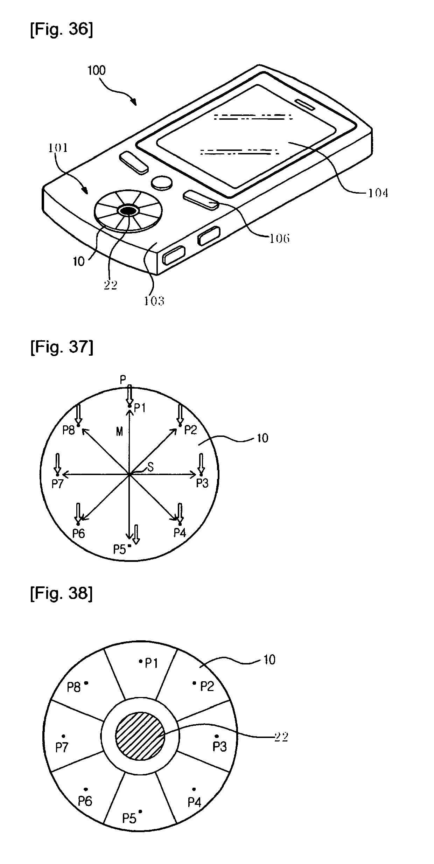

FIG. 36 is a perspective view of a portable mobile communication terminal mounted with the data input device according to the present invention.

Referring to FIG. 36, the data input device 101 according to the present invention is provided on a base 50 and includes an input unit 10 for performing a direction pressure input P and a touch movement input M, a first sensor 21 for sensing the direction pressure input P performed by the input unit 10, a second sensor 22 for sensing the touch movement input M performed by the input unit, and a controller (not shown) for extracting data assigned to corresponding direction directing positions to correspond to the direction inputs based on the sense results of the first sensor 21 and the second sensor 22 from a memory (not shown) to input the extracted data.

In addition, a display unit 104 for displaying the data or various contents input by the data input device 101 and a plurality of functional keys 106 for performing various functions are provided in the portable mobile communication terminal 100.

Hereinafter, the constitution and the embodiment of the data input device according to the present invention will be described in detail with reference to the accompanying drawings by input operations.

### Direction Pressure Input P

According to the present specification, a direction pressure input P means that the input unit 10 presses one of a plurality of direction directing positions P1, P2, P3, ... spaced from a reference position S and arranged around the reference position S in a radial direction to input characters assigned to the corresponding direction directing positions P1, P2, P3, ... to correspond to the direction pressure inputs P.

As illustrated in FIG. 37, the reference position S is provided in the center of the input unit 10 and eight direction directing positions P1, P2, P3, ... are assigned around the reference position to be spaced from the reference position in a radial direction. At this time, when one of the direction directing positions is pressed, the input unit 10 is pressed so that first sensors 21 provided under the input unit to correspond to the direction directing positions P1, P2, P3, ... sense the direction pressure inputs P.

When the first sensors 21 sense the direction pressure inputs P, the controller extracts first characters assigned to the corresponding direction directing positions P1, P2, P3, ... to correspond to the direction pressure inputs P from the memory to input the first characters based on the sense signals of the first sensors 21.

At this time, when the first sensors 21 can sense pressure on the input unit 10, the kind of the pressure is not limited.

Here, the number of direction directing positions P1, P2, P3, ... may vary as occasion demands. The number of direction directing positions P1, P2, P3, ... may be eight, four, and six as illustrated in FIG. 37.

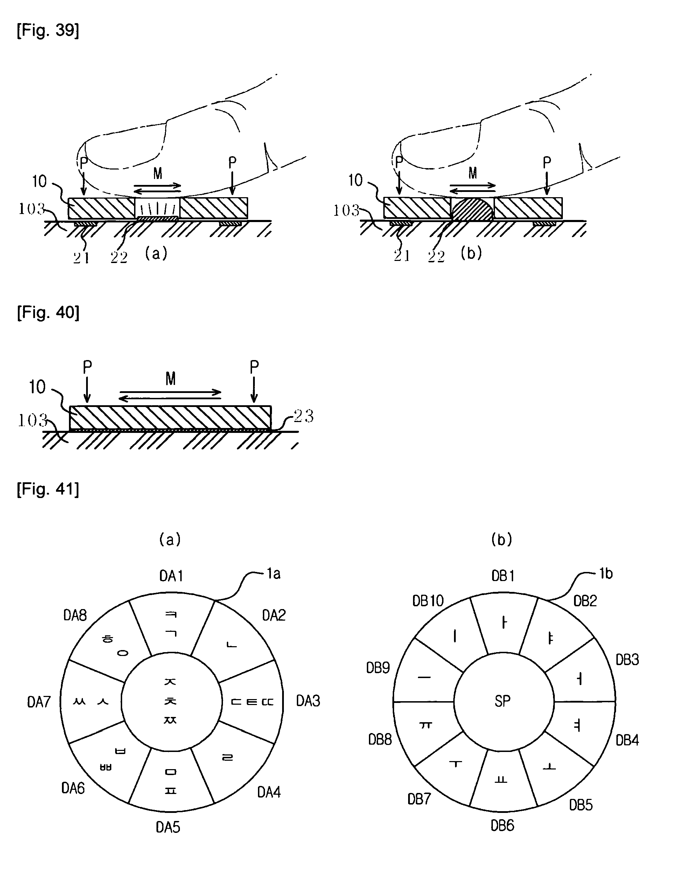

The direction pressure inputs may be performed on the input unit whose center is penetrated as illustrated in (a) and (b) of FIG. 39. At this time, the input unit 10 may be provided so that the direction directing positions are partitioned off as illustrated in FIG. 38 so that the direction pressure inputs P may be independently performed in the direction directing positions P1, P2, P3, .... Thus, when the direction pressure inputs P are performed in the direction directing positions P1, P2, P3, ..., the input unit corresponding to adjacent direction directing positions is not pressed so that interference during the direction pressure inputs may be prevented.

As illustrated in FIG. 40, the direction pressure input P may be performed by pressing one of the direction directing positions P1, P2, P3, ... on a plate-shaped input unit 10. At this time, a first sensor is provided on or under the input unit to sense the direction pressure input P. In FIG. 40, a touch sensor 23 is provided under the input unit 10 as the first sensor.

### Touch Movement Input M

In the present specification, a touch movement input M means that touch movement is made to one of the direction directing positions P1, P2, P3, ... from or via the reference position S in the center of the input unit 10 to input second characters assigned to the corresponding direction directing positions P1, P2, P3, ... to correspond to the touch movement input M.

At this time, the direction directing position, in which the direction pressure input P is performed, may be the same as the direction directing position, in which the touch movement input M is performed. However, the number of direction directing positions, in which the direction pressure input P is effective, may be different from the number of direction directing positions, in which the touch movement input M is effective. For example, meanwhile eight different data may be input by pressing eight direction directing positions in the direction pressure input P, four different data are input by the touch movement toward the four direction directing positions among the eight direction directing positions in the touch movement input M. According to the present embodiment, as illustrated in FIG. 37, the direction pressure input P and the touch movement input M are constituted to input the same number of data.

As illustrated in FIGs. 38 and 39, the touch movement input M may be sensed by a second sensor 22 having the center corresponding to the reference position S penetrated in the input unit 10 and mounted in the center.

Describing in detail, the second sensor 22 is provided in the center of the input unit 10 to sense the touch movement of the finger on the input unit 10. At this time, the movement of the finger is directly sensed by the second sensing unit 22 without passing through the input unit 10.

In particular, in (a) of FIG. 39, an optical sensor is used as the second sensor 22. A change in light in accordance with the movement of the finger is sensed by the second sensor 22 so that the direction directing position that the finger faces is grasped.

In addition, in (b) of FIG. 39, a pressure sensor is used as the second sensor 22. A change in pressure in accordance with the movement of the finger is sensed by the second sensor 22 so that the direction directing position that the finger faces is grasped.

On the other hand, the input unit 10 may not have the center penetrated but may be plate-shaped as illustrated in FIG. 40. At this time, a second sensor for sensing the touch movement of the finger on the input unit is provided on or under the input unit 10. According to the present embodiment, a touch sensor 23 as the second sensor is provided under the input unit. Since the touch sensor 23 may sense pressure or touch movement, the touch sensor 23 may simultaneously function as the first sensor and the second sensor.

When the touch movement input M is to be sensed by the touch sensor 23 illustrated in FIG. 40, during the touch movement input on the input unit 10, the touch movement is to be performed in the state where pressure is applied by the finger to a certain degree. At this time, the touch sensor 23 senses the movement direction of the finger so that the touch movement input M may be performed in the corresponding direction directing position.

When the touch sensor 23 is provided on the input unit 10, the touch movement is performed on the input unit without pressing the input unit to perform the touch movement input M.

Since eight data may be input by the direction pressure input P and eight data may be input by the touch movement input M, the number of data that may be input is 16. The number of data that can be input is 16, which looks small. However the number is not small considering that 12 buttons are currently used by a portable terminal in order to input data.

In addition, in the present embodiment, the direction pressure input P and the touch movement input M are separately performed. The direction pressure input P and the touch movement input M may be combined with each other to be performed. For example, the touch movement input M is performed after the direction pressure input P or the direction pressure input P is performed after the touch movement input M so that different data may be input. In such a case, since the number of data that can be input is increased to 32, Hangeul or English alphabets may be input enough by the data input device according to the present invention.

### <Sixth Embodiment>

Next, a sixth embodiment of a data input device and a data input method according to the present invention will be described.

The data input device and the data input method according to the present invention require additional input arrangement for performing input operations as well as the input operations for inputting data. In the present embodiment, the input arrangement and the data input through the input arrangement will be described using the term of "direction input". In addition, the input operations of the "direction input" are divided into four such as 'pressure', 'touch movement', 'pressure movement', and 'leaning'. In order to understand and perform the present invention, the above is to be understood first. Therefore, before describing the data input device and he data input method according to the present embodiment, the four input operations will be described first in order to help understanding of the present invention.

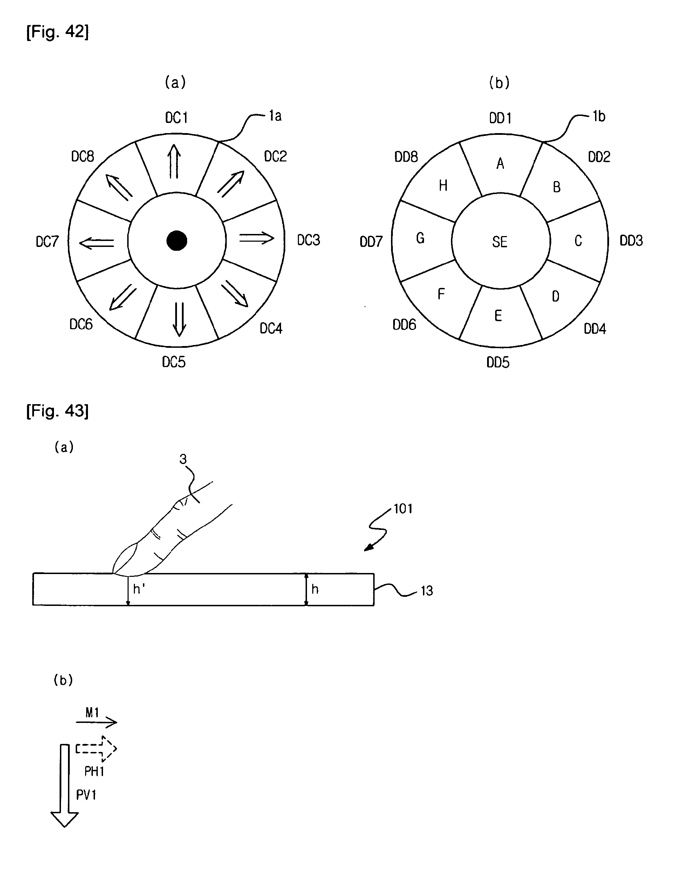

FIGs. 41 and 42 are views illustrating input arrangements according to the embodiment of the present invention. FIG. 41 is a view illustrating an example of input arrangements for inputting characters and FIG. 42 is a view illustrating an example of input arrangements for inputting commands.

Referring to FIGs. 41 and 42, the data input method according to the present invention is performed by key input arrangements 1 (1a, 1b, 1 c and 1 d) having directions D (DA and DB) and a center input CI as illustrated in FIGs. 41 and 42. That is, inputs of first directions DA1 and DB1 may be different from inputs of second directions DA2 and DB2 around the center of the input arrangement 1. In addition, ' 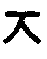 , 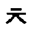 , and 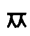 , 'SP', '**●** ', and 'SE' that are the center input CI may be used as one data input. (a) of FIG. 41 and (a) and (b) of FIG. 42 are examples of the input arrangement 1 for recognizing eight directions DA1 to DA8, DC1 to DC8, and DD1 to DD8 as different inputs. (b) of FIG. 41 is a view illustrating the input arrangement I for sensing 10 directions DB1 to DB10 as different inputs. The direction D of the input arrangement I is not necessarily set as 8 directions D or 10 directions D. If necessary, no less than two directions D may be used. As the directions D that constitute the input arrangement 1 increase, the correctness of an input deteriorates and the input becomes inconvenient so that the number of directions D must be determined in consideration of the above. The input arrangement 1 is constituted so that data input by a left hand and a right hand vary when both hand inputs may be performed to be provided to a user. In addition, when an input is performed by one hand or one touch pen, the input arrangement 1 may be changed in accordance with an input state to be provided. However, the present invention is not limited to the above and the use examples of the input arrangement 1 will be described in detail hereinafter.

As illustrated in FIGs. 41 and 42, the input arrangement 1 having the direction D may be used for inputting direct commands as well as inputting simple characters. Describing in detail, the input arrangement 1 according to the present invention may be easily used for a touch type input device such as a touch pad or a touch screen. Therefore, a user directly designates an avatar, a game character and an icon, etc. on the screen of the touch screen and the input arrangement 1 is used as a means for inputting commands. That is, as illustrated in FIG. 41, the input arrangement 1 is divided into consonants (a) and vowels (b) so that the inputs of characters may be performed. As illustrated in FIG. 42, the input arrangement 1 is divided into direction directing (a) and operation directing (b) so that commands may be performed through inputs. In the input arrangement 1, an input is performed by distinguishing directions where one of the movement, the touch, and the pressure of an input means (the finger or the touch pen) is generated around the center of the input arrangement 1. The input may be performed by simply touching one part of the input arrangement 1. However, according to the present invention, a method of distinguishing inputs in accordance with the directions for the inputs of high input speed, a convenient input, and the input of various data and a data input method that may be conveniently used by the touch type input device, in which different data are input although the same direction is used, are provided. Therefore, according to the present embodiment, the methods of 'pressure', 'touch movement', 'leaning', and 'horizontal pressure' to be described hereinafter are used so that the input using the input arrangement 1 is performed. Therefore, in the present embodiment, the input arrangement 1 and the input method optimized to the touch type input device such as the touch pad and the touch screen are provided.

FIG. 43 is views illustrating 'pressure'.

The example of the pressure of FIG. 43 illustrates an example of an ideal case. The input by pressure is performed by applying pressure PV1 to the input surface 13 of an input device 101 in a vertical direction. The pressure input exists only in the vertical direction pressure PV1 in an ideal case and horizontal direction pressure PH1 and movement M1 are not generated against the input surface. A pressure input may be recognized by the input device 101 sensing the vertical direction pressure PV1. In (a) of FIG. 43, the input surface 13 of the input device 101 is made of an elastic body. When the user performs the pressure input, the vertical pressure PV1 is applied to the input surface 13 by an input means 3. Therefore, the input surface 13 is pressed by the vertical pressure PV1 and the thickness h of the input surface 13 is reduced by the pressure to be changed into a second thickness 'h'. When the input surface 13 of the input device 101 is not made of an elastic body, the thickness h may not be changed. A method of performing an input by the pressure input, in particular, an example, in which the pressure input, the lean input, the touch movement input, and the horizontal pressure input are mixed with each other, will be described in detail hereinafter.

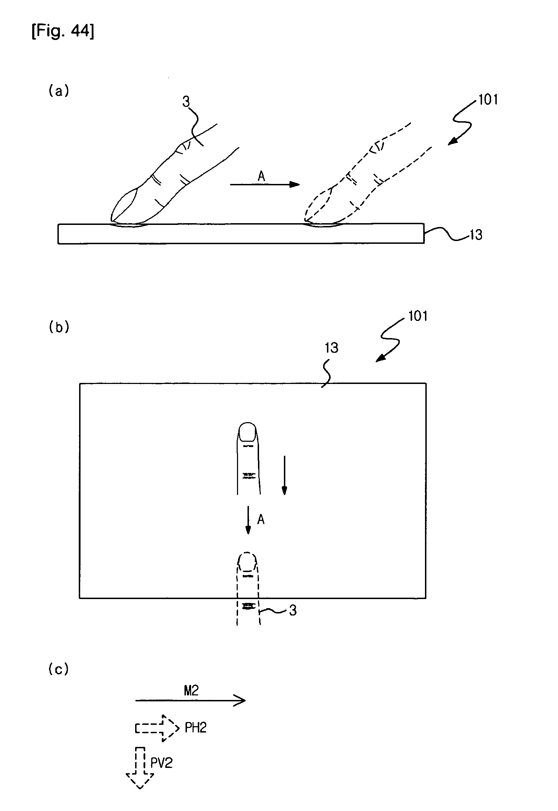

FIG. 44 is a side view and a plan view illustrating that the touch movement input is performed, in which a relationship between pressure and movement is illustrated.

Referring to FIG. 44, the touch movement input is performed by user's touching the input surface 13 of the input device 101 using the input means 3. The touch movement input is distinguished from the above-described pressure input in that only the vertical direction pressure PV1 exists in the case of the pressure input in an ideal state, however, the vertical direction pressure PV2 is hardly generated in the touch movement input but only movement M2 on the input surface 13 exists. In the case of the touch movement input, the vertical direction pressure PV2 maintains minimum magnitude by which the input unit 3 touches the input surface 13 so that the touch movement input has much smaller vertical direction pressure PV2 than the above-described pressure input. In particular, in the case of the touch movement input, in an ideal state, horizontal direction pressure PH2 for the horizontal movement M2 does not exist like the vertical direction pressure PV2. When the touch movement pressure is actually realized, the horizontal direction pressure PH2 for the horizontal movement M2 may slightly exist. However such a case will be described in detail hereinafter.

The touch movement input is similar to the method used for the conventional input device. The input by the conventional touch movement is used for moving a pointer such as a mouse from a point to another point or is used for a partial command of drawing a line in an image generating program such as a CAD. However, according to the present invention, the touch movement input is used for the above-described input arrangement 1 of FIG. 41 so that different input values are obtained in accordance with the direction and the distance of the touch movement and that various data may be input. That is, when the touch movement is generated from the input arrangement 1 of (a) of FIG. 41 to the first direction DA1 by the touch movement input, ' 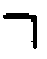 ' is input by the input device. When the touch movement is generated to the fifth direction DAS, ' 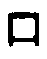 ' is input. That is, unlike in the conventional art, in the touch movement input according to the present invention, the touch movement generated by the user, that is, the movement of the input means 3 on the input surface 13 performs the same operation as pressing a key in the input device such as a keyboard, which will be described in detail through a combination with other inputs.

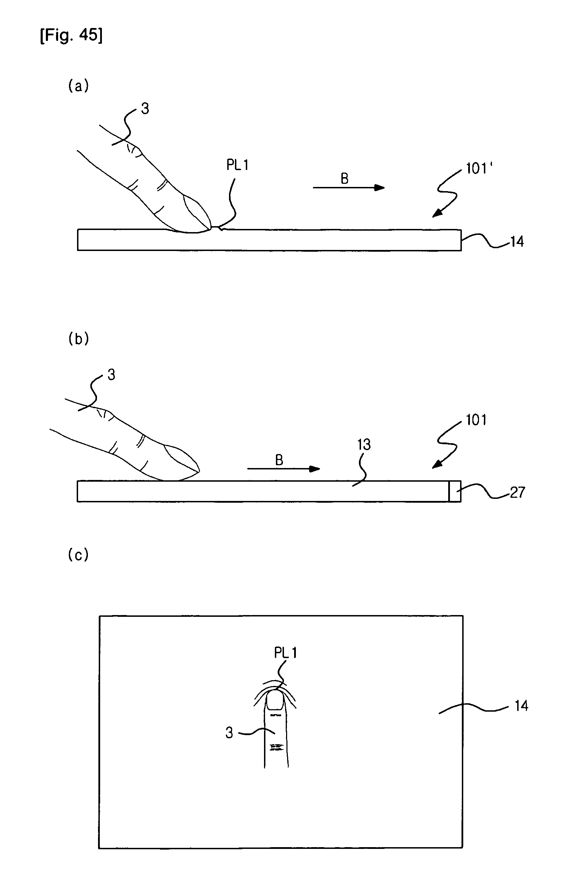

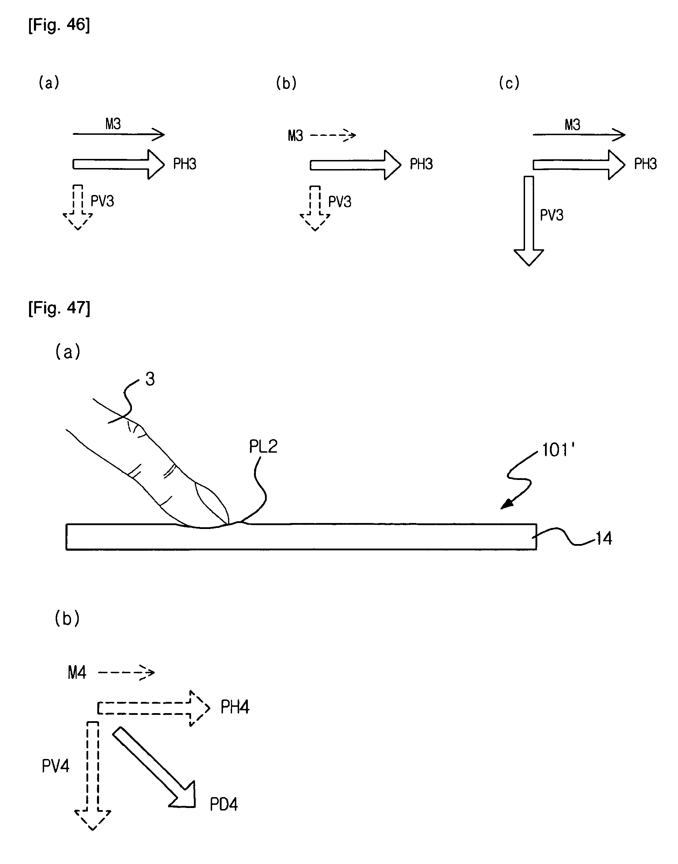

FIGs. 45 and 46 are views illustrating the horizontal pressure input. FIG. 45 is a view illustrating the horizontal pressure input from side and top. In addition, FIG. 46 is a view illustrating a relationship between pressure and movement in accordance with the horizontal pressure input.

As illustrated in FIGs. 45 and 46, the horizontal pressure input is performed by applying pressure to the input surface 13 in a horizontal direction. In the horizontal pressure input, like in the pressure input and the touch movement input, different data may be input in accordance with the direction of the input arrangement 1. That is, horizontal direction pressure PH3 is generated in the specific direction of the input arrangement 1 like in the above-described touch movement input so that data for the corresponding direction may be input. In particular, in the same direction, different data may be input by the touch movement input and the horizontal pressure input so that the amount and the kind of data that may be input may vary.

In the ideal case, in the horizontal pressure input, the pressure PH3 exists only in the direction horizontal to the input surface 13, which will be illustrated in (a) and (b) of FIG. 46. In the horizontal pressure input in the ideal case, vertical direction pressure PV3 is not generated but only the horizontal direction pressure PH3 exists and movement M3 in a horizontal direction may exist or may not exist. Whether the movement M3 is generated may vary in accordance with the sense method by the input device 101. That is, as illustrated in (a) of FIG. 46, when the horizontal direction pressure PH3 exists and the horizontal direction movement M3 has no less than a uniform distance, it may be determined as the horizontal pressure input. In addition, as illustrated in (b) of FIG. 46, although the horizontal direction movement M3 does not exist or is hardly generated, when the horizontal direction pressure PH3 is generated, it may be determined as the horizontal pressure input.

Unlike the above, considering actual use, as illustrated in (c) of FIG. 46, both the horizontal direction pressure PH3 and the vertical direction pressure PV3 may exist. In the actual horizontal pressure input, the horizontal direction pressure PH3 has a larger value than the pressures PH1 and PH2 of the pressure input and the touch movement input. In addition, in the actual horizontal pressure input, the vertical direction pressure PV3 is similar to or the same as the vertical direction input PV1 of the pressure input and may have a larger value than the vertical direction pressure PV2 of the touch movement input. The relationship between the pressure and the movement is to be properly defined to be easily distinguished. The relationship between the pressure and the movement for distinction will be described in detail hereinafter.

In (a) of FIG. 45, the input surface 13 is made of an elastic body. In (b) of FIG. 45, the input surface 13 is made of a non-elastic body and a sensor 27 for sensing the horizontal direction pressure PH3 is provided. In the input device 101 having the constitution of (b) of FIG. 45, when the horizontal direction pressure PH3 is applied to the input surface 13, the movement or the pressure is transmitted to the direction, in which the pressure is applied to the input surface 13. In order to measure the movement or the pressure, the sensor 27 is provided in the direction where the horizontal direction pressure may be transmitted to sense the movement or the pressure. Here, the sensor 27 for measuring the horizontal direction pressure may be provided under the input surface 13. FIG. 45, in which the position of the sensor 27 is illustrated, is a view describing a constitution example of measuring the horizontal direction pressure. The present invention is not limited to the above.

On the other hand, in (b) of FIG. 45, when the horizontal direction pressure PH3 is generated, pressure PL1 is generated on the surface of the input surface 13 due to the applied pressure. Changes in the electric field, the electrostatic capacity, the sheared force and the pressure on the surface where the pressure PL1 is generated are electrically signalized and the electric signals are detected to detect the horizontal direction pressure PH3. Preferably, a plurality of sensors 27 that measure the electric field, the electrostatic capacity, the sheared force, and the pressure are provided and changes in various variables are measured to be sensed. Therefore, more correct sense results may be obtained. A relationship between the constitution of such an apparatus and another input will be described in detail hereinafter.

FIG. 47 is a view illustrating a lean input.

Referring to FIG. 47, in the data input method according to the present invention, data may be input by the lean input as well as the pressure input, the touch movement input, and the horizontal pressure input. The lean input may be distinguished by the pressure and the movement like the above-described pressure input, touch movement input, and horizontal pressure input. Various data may be input by the direction input using the input arrangement 1.

In an ideal case, in the lean input, diagonal pressure PD4 applied to an input surface 14 in a diagonal direction is recognized so that whether the input is performed is determined. The lean input is similar to the pressure input and the horizontal pressure input in that the pressure is applied to the input surface 14 as illustrated in (a) of FIG. 47. However, the largest difference between the lean input and the pressure input and the horizontal pressure input lies in that the pressure is applied to the input surface 14 in a diagonal direction and another difference between the lean input and the pressure input and the horizontal pressure input lies in that movement M4 is hardly generated during the lean input.

As illustrated in (b) of FIG. 47, in the lean input, the diagonal pressure PD4 is applied to the input surface 14 in the diagonal direction and the movement of a pressure point, that is, the movement M4 is hardly generated or, in an ideal case, the movement M4 is not generated. The diagonal pressure PD4 may be distinguished from horizontal direction pressure PH4 and vertical direction pressure PV4 as illustrated in the right side of (b) of FIG. 47 and the pressures PH4, PV4, and PD4 may be measured to recognize an input. Therefore, in the case of the lean input, the pressure input and the horizontal pressure input are combined with each other and the combined pressure input and horizontal pressure input are recognized as one input operation to be recognized as the lean input. That is, the pressure input is performed after the horizontal pressure input or the horizontal pressure input is performed after performing the pressure input so that the lean input may be realized. However, the present invention is not limited to the above.

In an input device 101' illustrated in (a) of FIG. 47, the input surface 14 is made of an elastic body. Since the input surface 14 is made of an elastic body, when the pressure is applied to the input surface 14 like the lean input, the pressure PL2 of the input surface 14 is generated. The shape of the pressure PL2 is different from the shape of the pressure PL1 by the above-described horizontal pressure input. The pressures PL1 and PL2 are slightly different from each other in accordance whether the direction in which the pressure is applied is horizontal or diagonal and a change in electrostatic capacity, a change in shear force, and a change in pressure generated by the pressures PL1 and PL2 are different from each other. Therefore, at least one of factors such as the change in the electrostatic capacity, the change in the sheared force, and the change in the pressure is measured so that the lean input and the horizontal pressure input may be distinguished from each other. Furthermore, in actual use, at least one of changes in the electrostatic capacity, the sheared force, and the pressure is minutely measured and inputs may be clearly distinguished from each other through an algorithm and data correction through the actual use.

Hereinafter, processes of inputting data by the pressure input, the touch movement input, the horizontal pressure input, and the lean input using the above input arrangement 1 will be described in detail.

In the data input method according to the present invention, the input of data is performed by the input arrangement 1 arranged in a radial direction around the point that the input means 3 touches, that is, the point where the input means 3 touches the input surfaces 13 and 14, and by the input operation using the input arrangement 1. In the input arrangement 1, in the case where the touch is generated, when an input operation for a specific direction is generated around the touch point, input data are listed and an input is not necessarily performed by touching the corresponding part. That is, the input arrangement 1 of FIG. 41 illustrates a display form displayed around touch to be provided to the user when the touch is generated for convenience sake. Describing in detail, when the user performs one of the pressure input, the touch movement input, the horizontal pressure input, and the lean input so that such an operation faces a specific direction D, data directing the corresponding direction are input through the input device. That is, although the input arrangement 1 is not displayed, data is input by the input operations of the pressure input, the touch movement input, the horizontal pressure input, and the lean input performed in one direction D.

Therefore, such input operations are combined with each other so that various and a large amount of data may be freely input fast. The input operations are distinguished by the pressure and the movement distance so that inputs may be continuously performed by the variously combined input operations. Describing in detail, although inputs are continuously performed in a first direction DD1 in (a) of FIG. 41, when the first input is the lean input and the next input is the pressure input, it may be recognized that different data are input so that the speed and continuity of the data inputs may be guaranteed. In addition, although continuous inputs are generated in the same kind and in the same direction D, since the point where one input operation is completed is distinguished so that the continuous inputs may be recognized, the speed, the convenience, and correctness of the inputs may be remarkably improved in comparison with the conventional input method.

In particular, in the data input method according to the present invention, the input operations are generated in a specific direction D, that is, in one direction so that inputs are distinguished to be performed. Therefore, hereinafter, for convenience sake, the term "direction input" is used to describe the embodiment. Here, the direction input may be interpreted such that the input arrangement having the direction D is performed by the above-described input operations. Therefore, hereinafter, in order not to have the pressure input, the touch movement input, the horizontal pressure input, and the lean input distinguished from in the order, a firstly performed input is referred to a first direction input, a secondly performed input is referred to as a second direction input, and a thirdly performed input is referred to as a third direction input. The device for realizing the input method according to the present invention will be described later after describing the data input method.

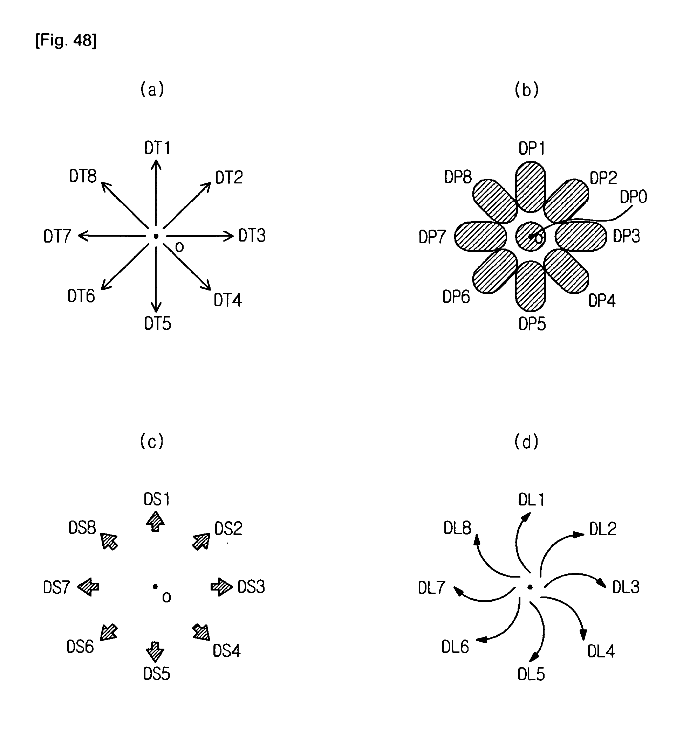

FIG. 48 is a view illustrating the directions and the symbols of the pressure input, the touch movement input, the horizontal pressure input, and the lean input.

Referring to FIG. 48, the data input method according to the present invention is performed by selectively combining the pressure input, the touch movement input, the horizontal pressure input, and the lean input. The operation inputs are determined in accordance with the number of previously determined directions and in accordance with data determined by the directions. For example, as illustrated in FIG. 48, the touch movement input, the pressure input, the horizontal pressure input, and the lean input are determined by eight directions D, respectively, so that different data may be input. Among the symbols illustrated in FIG. 48, (a) illustrates the touch movement input, in which touch movement input symbols and touch movement directions DT (DT1 to DT8) are illustrated. And (b) illustrates the pressure input, in which pressure input directions DP (DP1 to DP8 and DPO) are illustrated as pressure symbols. In addition, (c) and (d) illustrate horizontal pressure symbols and directions DS (DS1 to DS8) for the horizontal pressure symbols and lean input symbols and directions DL (DL1 to DL8) for the lean input symbols. Here, the pressure input directions DP may include an input of pressing the center. Therefore, the center direction DPO among the pressure input directions DP is further included. Hereinafter, inputs will be described using the same symbols and directions on the drawing.

On the other hand, in FIG. 48, the inputs are determined by eight directions D (DT, DP, DS, and DL), respectively. However, the number of directions D may vary with an input. For example, like in the input arrangement of FIG. 41, the pressure input is determined by eight directions DP and the touch movement input may be determined by ten directions DT.

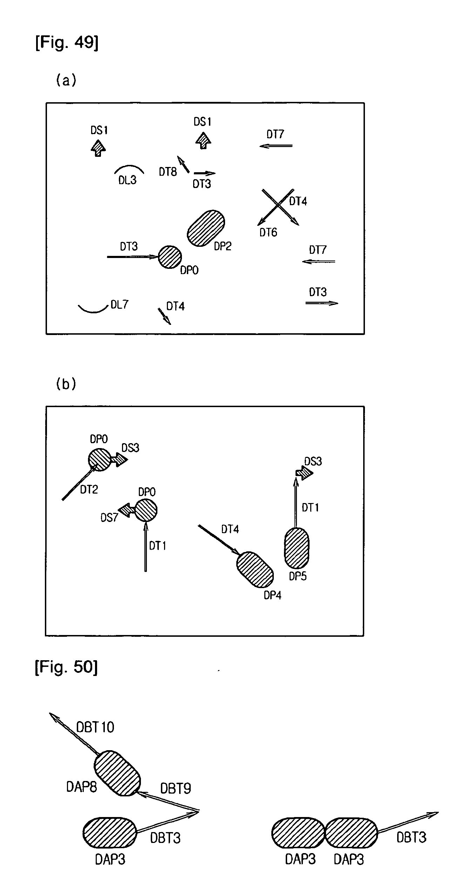

FIG. 49 is a view illustrating continuous and intermittent inputs on an input surface. (a) illustrates that data inputs are performed by separate input operations and (b) illustrates data inputs are continuously performed by combining the input operations.

The inputs by FIGs. 41 to 48 may be independently or continuously performed in an arbitrary point on the input surface 14 as illustrated in FIG. 49. Referring to (a) of FIG. 49, the user may input data in an arbitrary position on the input surface 14 using the input means 3. In particular, in accordance with the items previously set by data to be input as illustrated in (a) of FIG. 49, the pressure input DP, the touch movement input DT, the horizontal pressure input DS, and the lean input DL may be arbitrarily or independently (or intermittently) performed. The independently performed inputs are replaced by proper data to be processed by the input device 101 and may be processed as continuous data inputs if necessary. That is, the user has the input means 3 touch an arbitrary position of the input surface 14 for convenience sake to perform the above-described input operations and to perform data inputs.

On the other hand, referring to (b) of FIG. 49, the input operations may be continuously performed as described above. In (b) of FIG. 49, the touch movement input DT, the pressure input DP, and the horizontal pressure input DS are continuously performed to be combined with each other. However, the present invention is not limited to the above. It will be described in detail hereinafter. Four input operations are arbitrarily selected in accordance with the purpose for which the input device 101 is used and the data input may be performed by combination between the selected input operations. Hereinafter, examples of such combinations and example of actual inputs through the combinations will be described in detail.

### Data Input by First Direction Input + Second Direction Input

An input by a combination of a first direction input and a second direction input is to perform a data input by combining two inputs selected among the above-described pressure input, touch movement input, horizontal pressure input, and lean input. When the four inputs are combined with each other the following six combinations are generated.
1) Data input by pressure input and touch movement input
2) Data input by pressure input and horizontal pressure input
3) Data input by pressure input and lean input
4) Data input by touch movement input and horizontal pressure input
5) Data input by touch movement input and lean input
6) Data input by horizontal pressure input and lean input

When it is assumed that the pressure input is a first direction input and the touch movement input is a second direction input in the case of 1) of the above-described combinations, the first direction input does not necessarily precede the second direction input. For convenience sake, the touch movement input may be the first direction input and the pressure input may be the second direction input. In addition, the second direction input is not necessarily performed after the first direction input is performed. Only the first direction input may be continuously generated, only the second direction input may be continuously generated, the second direction input may be performed after repeating the first direction input several times, or the first direction input may be performed after repeating the second direction input. In addition, an input is not completed by performing the first direction input once and by performing the second direction input once but may be continuously performed by alternately performing the first direction input and the second direction input several times.

Hereinafter, the examples of inputs in accordance with the six combinations will be described in detail. Several examples of distinguishing inputs will be described when the inputs are realized by the touch type input device.

### 1) Data input by the pressure input and the touch movement input

FIG. 50 is a view illustrating an example of a data input by the combination of the pressure input and the touch movement input, in which an example of inputting character data is described.

Referring to FIG. 50, the pressure input and the touch movement input are divided into a first direction input and a second direction input and character data may be input by the first direction input and the second direction input. Here, the first direction input and the second direction input mean that data is input by combining two selected among the above-described four input operations. For example, when it is assumed that the pressure input is the first direction input and that the touch movement input is the second direction input, in order to input characters, consonants may be input by the first direction input and vowels may be input by the second direction input. Here, the first direction input and the second direction input are not divided into the consonants and the vowels but partial consonants and partial vowels may be input by the first direction input and the remaining consonants and vowels may be input by the second direction input. FIG. 50 illustrates an example of inputting a word of " 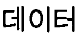 " by the first and the second direction inputs. For convenience sake, it is assumed that the first direction input has the input arrangement 1a of (a) of FIG. 41 and the second direction input performs an input by the input arrangement 1b of (b) of FIG. 41. In addition, for convenience sake, other elements such as the input device 101 and the input surface 14 will be omitted and an example of inputs will be described based on the symbols illustrated in FIG. 48. It is assumed that the above items are applied to the following description. In order to input the word "data" by the input arrangements 1 a and 1b, first a user performs a pressure input DP3 in a third direction DT3 by the first direction input. Therefore, data corresponding to '⊏' is input by the input device 101. In the state of performing the first direction input, that is, in the state of having a hand touch the input surface 14, a touch movement input DT3 is performed in a third direction DB3 by the second direction input. Therefore, data corresponding to ' 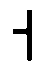 ' is input by the input device 101. Then, a touch movement input DT9 is performed in a ninth direction DB9, a pressure input DP8 is performed in an eighth direction DA8, and a touch movement input DT10 is performed in a tenth direction DB10. Therefore, '|', '○', and '|' are input after '⊏' and'┤' so that the characters "[┤|O|" are input. In order to input "⊏┤|○|", the user continuously performs inputs without taking off the input means 3 from the input surface 14. The pressure input DP3 is repeatedly performed in the third direction DA3 from another point of the input surface 14, because the input surface 14 is insufficient or an input is inconvenient, to select ' 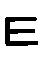 ' and the touch movement input DT3 is performed in the third direction DB3 so that ' 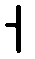 ' is input. Through these input steps the characters ' 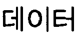 ' are completed and are input.

As described above, in an ideal state, in the pressure input, only the vertical direction pressure PV1 exists against the input surface 14 and, in the touch movement input, only the touch movement in a direction horizontal to the input surface 14 exists. However, in order to realize the pressure input and the touch movement input, in the touch movement input, slight pressure may be generated to be vertical and horizontal to the input surface. In addition, in the pressure input, not only the vertical direction input PV1 against the input surface 14 but also horizontal direction pressure PH1 or movement M1 may be generated. Therefore, it is necessary to distinguish the pressure input from the touch movement input by the pressure and the movement.

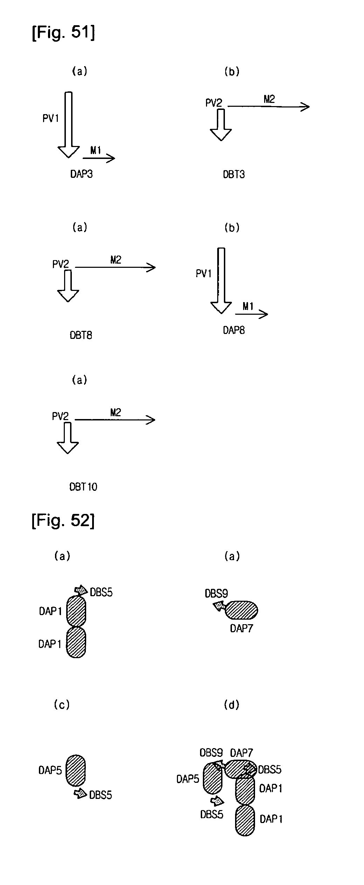

FIG. 51 is a view illustrating a relationship between the pressure and the movement applied to the input surface in accordance to an input.

Referring to FIG. 51, when the pressure input is realized by the actual device, as illustrated in (a) and (d) of FIG. 51, the movement M1 or the horizontal pressure PH for selecting the direction D other than the vertical direction input PV1 may be generated. When the touch movement input is realized by the actual device, as illustrated in (b), (c), and (e) of FIG. 51, slight vertical direction pressure PV2 for maintaining the touch between the input means 3 and the input surface 14 may exist other than horizontal direction movement M2. In order to distinguish the horizontal direction movement M2 from the vertical direction pressure PV2 by the input device 101, a difference in the strength of pressure PV and/or a movement M distance or length is set so that the touch movement input may be distinguished from the pressure input. For example, in FIG. 50, a pressure reference value PP and a movement reference value MM are set and pressure PV and the input reference value PP and the movement M and the movement reference value MM are compared with each other for inputs so that the inputs may be distinguished. However, the present invention is not limited to the above.

The pressure input and the touch movement input may be distinguished by such a method so that the first direction input and the second direction input may be distinguished from each other. However, when the same direction inputs such as a third direction touch movement input DBT3, a ninth direction touch movement input DBT9, and a third direction pressure input DAP3 are continuously input in FIG. 50, it may be vague to distinguish the inputs by the above distinction. As described above, when the same kind of inputs are continued, a clear method of distinguishing the inputs is necessary. In order to distinguish the same inputs, the time points of the inputs, release time points, and direction points may be compared with each other. Describing in detail, in order to compare the inputs with each other through the points of the inputs, when pressure for a pressure input is applied or movement for touch movement is made, it is determined that one input is generated so that a data input is performed. That is, the moment when a vector is generated during the pressure and the movement for an input is determined as a pressure input or a touch movement input and a sustain period after determination is grasped regardless of the input. The point of time when the vertical pressure PV1 applied to the pressure input is released, the point of time when the horizontal movement M is completed by the touch movement input, and the point of time when the horizontal movement M is performed no less than a uniform distance are detected so that, when the above conditions are satisfied, it is determined as an input. In particular, according to the present invention, input operations designate a plurality of directions so that an input is performed. Therefore, when the direction by the input varies, it is determined as a new input so that inputs may be distinguished from each other. Furthermore, when such a distinction is used to be mixed with the method of comparing the pressure reference value PP with the movement reference value MM, the input may be correctly determined.

### 2) Data input by pressure input and horizontal pressure input

FIG. 52 is a view illustrating an example of a data input by the combination of the pressure input and the horizontal pressure input.

Referring to FIG. 52, the pressure input and the horizontal pressure input are divided into the first direction input and the second direction input to input character data. The pressure input and the horizontal pressure input may be defined for the input of consonants by the first direction input and the input of vowels by the second direction input. In addition, as described above, the first direction input and the second direction input may be used for inputting partial consonants and partial vowels. However, the present invention is not limited to the above.

An example of inputting the word ' 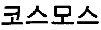 ' using the input arrangement of FIG. 41 by the pressure input and the horizontal pressure input will be described as follows. As illustrated in (a) of FIG. 52, a pressure input DP1 is continuously performed in a first direction DA1 by the first direction input to select ' 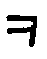 ' and then a horizontal pressure input DS5 is performed in a fifth direction DB5 by the second direction input to input '┴'. As illustrated in (b) and (c) of FIG. 52, a seventh direction pressure input DAP7, a ninth direction horizontal pressure input DBS9, a fifth direction pressure input **DAP5,** and a fifth direction horizontal pressure input DBS5 are performed and the input of (b) is performed once more to complete the characters ' 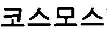 '.

The input may be performed by continuously having the input means 3 continuously touch the input surface 13 as illustrated in (d) of FIG. 52. (d) of FIG. 52 illustrates an example of continuously performing an input by one input means 3, for example, by one finger. As noted from the above, in the data input method according to the present invention, characters or data may be conveniently input by using one finger without a complicated selection process.

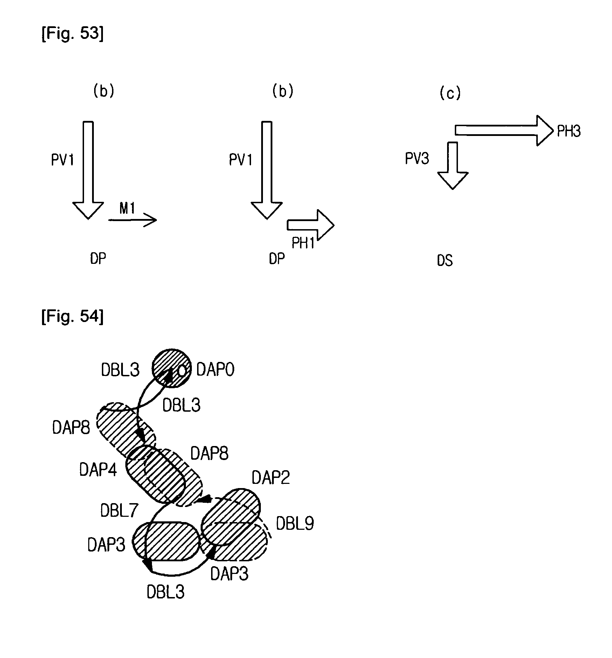

FIG. 53 is a view illustrating a relationship between the pressure and the movement generated by the input surface in accordance with the input of FIG. 52.

As illustrated in FIG. 53, unlike in the above-described ideal state, in the pressure input and the horizontal pressure input, pressure other than the vertical direction pressure PV1 and the horizontal direction pressure PH3 may be generated. Therefore, it is necessary to distinguish the pressure input and the horizontal pressure input from each other by the pressure and the movement. As described above, when the pressure input is realized by the actual device, as illustrated in (a) and (b) of FIG. 53, movement M1 or horizontal pressure PH1 for selecting the direction D other than the vertical direction input PV1 may be generated. When the horizontal pressure input is realized by the actual device, as illustrated in (c) of FIG. 53, vertical direction pressure PV3 for applying the horizontal pressure PH3 may be generated. Therefore, in order to distinguish these pressures by the input device 101, a difference in accordance with the magnitude of the pressures PV and PH and the distance of the movement M is set or another method is used to distinguish the pressure input and the horizontal pressure input from each other. As described above, in order to distinguish the pressure input from the horizontal pressure input, a reference value is set and the pressure input and the horizontal pressure input are compared with each other so that the pressure input may be distinguished from the horizontal pressure input. However, the present invention is not limited to the above.

In the input using the pressure input and the horizontal pressure input, one of the pressure input and the horizontal pressure input is continuously performed and an input may be performed through the pressure input or the horizontal pressure input. In this case, as described above, the input may be determined by determining the direction D of the input, the point of time of starting the input, the point of time of finishing the input and the equivalent factor thereof. In particular, since the input by the pressure may be confused, a reference value for the pressure is set and a method of distinguishing inputs from each other based on the reference value may be used.

### 3) Data input by pressure input and lean input

FIG. 54 is a view illustrating an example of a data input by a pressure input and a lean input.

Referring to FIG. 54, the pressure input and the lean input may be divided into the first direction input and the second direction input as described above to be used for the input of character data. In the pressure input and the lean input, the first direction input is in charge of consonants and the second direction input is in charge of vowels. In the combination input of the first direction and the second direction and the combinations to be described later, when commands and other data as well as characters are input, the first direction input and the second direction input are in charge of the commands of a uniform part, respectively, to be used for the input. However, the present invention is not limited to the above.

An example of inputting the word ' 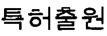 ' using the input arrangement 1 of FIG. 41 by the pressure input and the lean input is as follows. When a third direction pressure input DAP3 is repeatedly performed, a ninth direction lean input DBL9 and an eighth direction pressure input are repeatedly performed, a third direction lean input DBL3 and a 0^{th} direction pressure input DAP0 are repeatedly performed, and a seventh direction lean input DBL7, a fourth direction pressure input DAP4, an eighth direction pressure input DAP8, a seventh direction lean input DBL7, a third direction lean input DBL3, and a second direction pressure input DAP2 are performed, the consonants and the vowels are selected so that the characters of ' 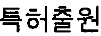 ' may be input.

The above-described data input method according to the present invention, data may be continuously input. An example of the continuous data input is illustrated in FIG. 54. In FIG. 54, an orbit for inputting ' 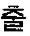 ' and ' 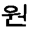 ' is not repeatedly displayed but illustrated one by one. In particular, in order to input ' 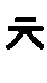 ' the 0^{th} direction pressure input DAP0 is repeatedly performed and the fourth direction pressure input DAP4 and the eighth direction pressure input DAP8 for inputting ' 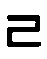 ' and '○' are performed in the same position. The input example of ' 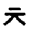 ' is described as follows. When the pressure input is repeatedly performed in the same position, the input device recognizes the application and release of the pressure by the pressure input to determine whether the input is one input or at least two repeated inputs. Therefore, when the user presses the same position, in accordance with the addition and reduction of the pressure or the above-described elements, the input device distinguishes the inputs from each other to perform the input process of the data. The case of the fourth direction pressure input DAP4 and the eighth direction pressure input DAP8 were described as being performed in the same position. When the input arrangement 1 of FIG. 41 is described, a fourth direction DA4 and an eighth direction DA8 are positioned on the same diagonal line around the input arrangement. Therefore, when the fourth direction pressure input DAP4 and the eighth direction pressure input DAP8 are continuously performed, the eighth direction pressure input DAP8 is performed in the opposite direction to the fourth direction pressure input DAP4 in the position where the fourth direction pressure input DAP4 is performed. Therefore, although it is illustrated as one input on the orbit of the input, actually, the input is performed twice. The inputs are distinguished from each other by the input device 101 recognizing various factors such as the generation of pressure, the direction of pressure, and the position in which the pressure is released as described above.

In order to distinguish the pressure input from the lean input, a difference between factors such as the pressure magnitudes and directions of the two inputs must be clarified like in the above-described combination.

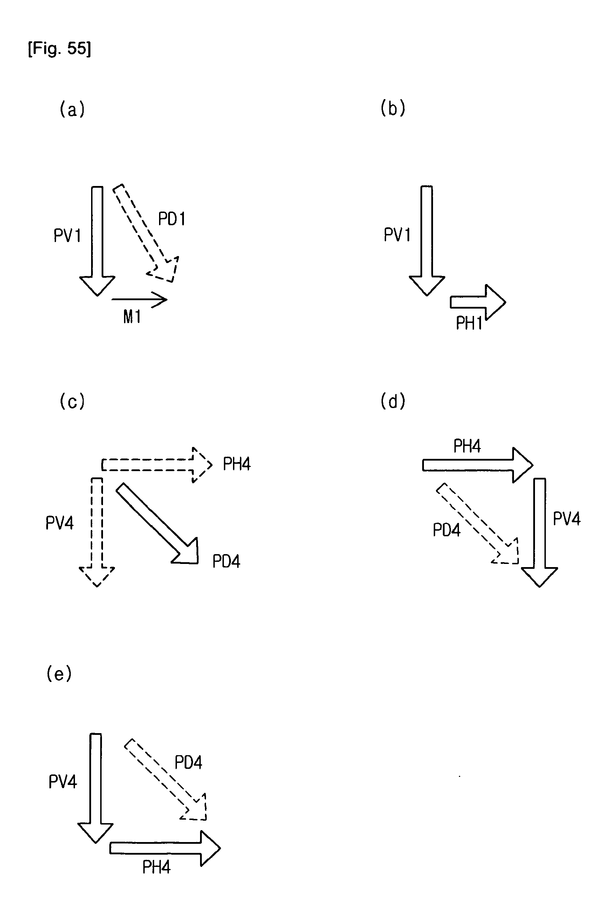

FIG. 55 is a view illustrating the vertical and horizontal pressures and the movement of the pressure input and the lean input by a vector.

Referring to FIG. 55, as described above, in the pressure input, as illustrated in (a) and (b), the movement M1 or the horizontal direction pressure PH1 for selecting a direction is added to the vertical direction pressure PV1. In the case of the 0^{th} direction pressure input, the movement M1 and the horizontal direction pressure PH1 may not be generated.

On the other hand, in the case of the lean input, in the ideal state as described above, only diagonal pressure PD4 is generated. The diagonal pressure may be expressed as the sum of horizontal direction pressure PH4 and vertical direction pressure PV4. When the input device 101 includes a sensor capable of directly measuring the diagonal pressure PD4, the necessity of measuring the horizontal direction pressure PH4 and the vertical direction pressure PV4 to distinguish the horizontal direction pressure PH4 from the vertical direction pressure PV4 is reduced. When the movement M1 or the horizontal direction pressure PH1 for selecting a direction in the pressure input is generated, the pressure input may be sensed as diagonal pressure PD1. Therefore, it is necessary to distinguish the diagonal pressure PD1 of the pressure input from the diagonal pressure PD4 of the lean input. When the sensor included in the input device 101 measures the angle of the pressure, a reference value is set for the angle of the pressure to easily distinguish the diagonal pressure PD1 from the diagonal pressure PD4. Unlike the above, when the sensor of the input device 101 does not directly measure the diagonal pressure PD, the horizontal direction pressure PH and the vertical direction pressure PV are measured to distinguish the lean input from the pressure input. That is, in the case of the lean input and the pressure input, the vertical direction pressures PV1 and PV4 may have almost the same magnitude. However, in the case of the lean input and the pressure input, there exists a remarkable difference in the horizontal direction pressure PH. Therefore, the vertical direction pressure and the horizontal direction pressure are compared with each other to distinguish the inputs from each other.

Another method may be induced in order to realize the lean input. In particular, when the device that does not directly measure the diagonal pressure PD is used, it may be more convenient. The example is illustrated in (d) and (e) of FIG. 55. As illustrated in (d) and (e) of FIG. 55, the diagonal pressure PD4 by the lean input may be expressed as the sum of the horizontal direction pressure PH4 and the vertical direction pressure PV4. Therefore, after the horizontal direction pressure PH4 for realizing the lean input is generated first, the vertical direction pressure PV4 is generated or, after the vertical direction pressure PV4 is generated first, the horizontal direction pressure PH4 is generated to realize the diagonal pressure PD4. Therefore, it is possible to perform the data input.

### 4) Data input by touch movement input and horizontal pressure input

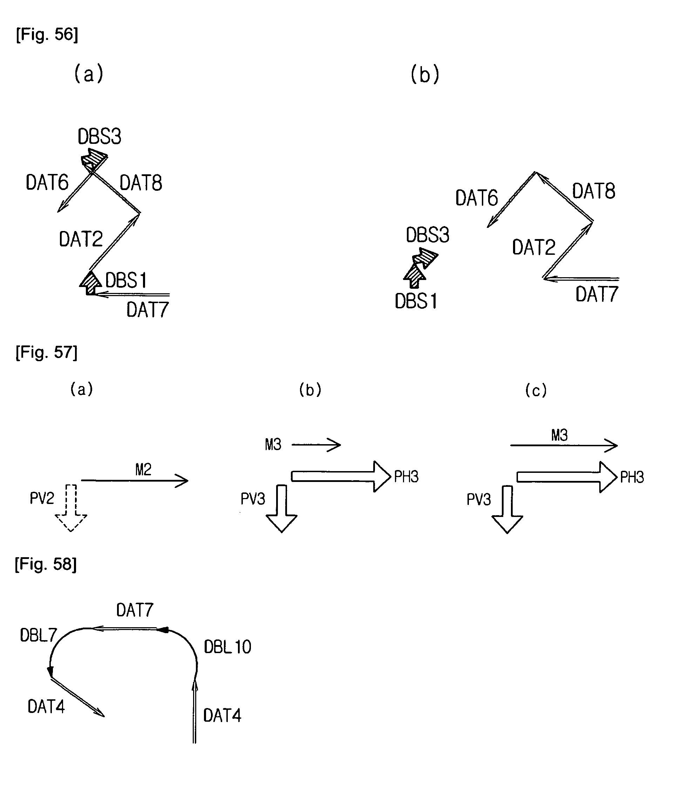

FIG. 56 illustrates an example of a data input by the touch movement input and the horizontal pressure input, in which an example of inputting characters' 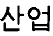 ' is illustrated.

Referring to FIG. 56, the data input by the touch movement input and the horizontal pressure input is similarly performed to the above-described combination of inputs. Referring to (a) of FIG. 56, when a seventh direction touch movement DAT7, a first direction horizontal pressure input DBS1, a second direction touch movement input DAT2, an eighth direction touch movement input DAT8, a third direction horizontal pressure input DBS3, and a sixth direction touch movement input DAT6 are performed, ' 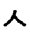 ', ' 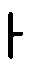 ', ' 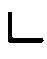 ', ' 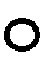 ', ' 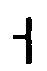 ', and ' 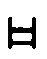 ' are input in the order so that the characters ' 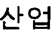 ' are completed.

On the other hand, in the combination of the input operations according to the present invention as well as in the character data by the combination of the touch movement input and the horizontal pressure input, the combined input operations are not necessarily continuously generated. For example, when it is assumed that the input means 3 is both hands of a person, data may be input using both hands. Such an example is illustrated in (b) of FIG. 56. In (b) of FIG. 56, an example in which a left hand inputs vowels through the horizontal pressure input and a right hand inputs consonants through the touch movement input is illustrated. The left hand may perform the touch movement input and the right hand may perform the horizontal pressure input or both hands perform the horizontal pressure input and the touch movement input. In addition, both hands may be in charge of parts of consonants and vowels meanwhile a hand inputs vowels and the other hand inputs consonants. In the above case, the input device 101 must have a function of sensing simultaneous touch. In the device of sensing only one touch at one moment like the conventional input device, such a simultaneous input may not be performed.

FIG. 57 is a view illustrating vectors for the pressure and the movement in accordance with the touch movement input and the horizontal pressure input.

Referring to FIG. 57, inputs in accordance with the combination of the touch movement input and the horizontal pressure input may be easily distinguished from each other when the presence of the horizontal direction pressure PH is determined. As described above, in the case of the touch movement input, in an ideal case, vertical direction pressure PV2 does not exist. However, in an actual case, in the touch movement input, the minimum vertical direction pressure PV2 for maintaining touch may be maintained. In the touch movement input, since an input is performed when the input means 3 moves by a uniform distance on the input surface 14, movement M2 exists.

On the other hand, in the horizontal pressure input, the horizontal direction pressure PH3 is remarkably larger than the touch movement input. In the horizontal pressure input, in order to apply the horizontal direction pressure PH3 to the input surface 14, vertical direction pressure PV3 may exist. In the case of the horizontal pressure input, in order to apply the pressure PH3 in a horizontal direction, movement M3 may be generated or not. Therefore, the horizontal pressure input is clearly distinguished from the touch movement input by the presence and the magnitude of the horizontal direction pressure PH. However, the present is not limited to the above and a suitable vector may be selected in accordance with the input device.

### 5) Data input by touch movement input and lean input

FIG. 58 is a view illustrating an example of a data input by the touch movement input and the lean input.

Like in FIG. 58, the example of the data input by the touch movement input and the lean input is almost the same as the above-described combination of the first direction input and the second direction input excluding that an input by the first direction input and the second direction input is performed by the combination of the touch movement input and the lean input. FIG. 58 illustrates an example of inputting characters ' 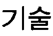 '. ' 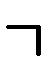 , 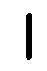 , 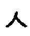 , 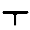 , and 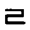 ' are sequentially input by a first direction touch input DAT1, a tenth direction lean input DBL10, a seventh direction touch input DAT7, a seventh direction lean input DBL7, and a fourth direction touch input DAT4 so that characters ' 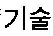 ' are input.

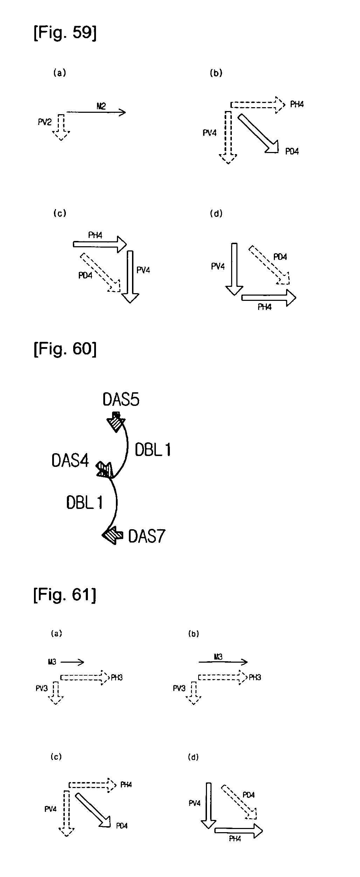

On the other hand, FIG. 59 is a view illustrating vectors for the touch movement input and the lean input.

Referring to FIG. 59, the touch movement input is an input operation, in which the movement M2 is performed on the input surface 14 by a uniform distance by the minimum vertical direction pressure PV2 as described above. In addition, in the lean input, the direct diagonal pressure PD4 or the horizontal and vertical direction pressures PH4 and PV4 are combined with each other to generate the diagonal pressure PD4.

Therefore, the touch movement input may be easily distinguished from the lean input by the presence and magnitude of the horizontal direction pressure PH4, the presence and magnitude of the diagonal direction pressure, and the magnitude of the vertical direction pressure PV.

### 6) Data input by horizontal pressure input and lean input

FIG. 60 is a view illustrating a data input by the horizontal pressure input and the lean input.

Referring to FIG. 60, the data input by the horizontal pressure input and the lean input has almost the same characteristic as the input by the combination of the first direction input and the second direction input. Regarding this, the above descriptions will be referred to and detailed description will be omitted.

FIG. 60 is a view illustrating processes of inputting characters ' 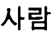 '. A seventh direction horizontal pressure input DAS7, a first direction lean input DBL1, a fourth direction horizontal pressure input DAS4, a first direction lean input DBL1, and a fifth direction horizontal pressure input DAS5 are performed to input the characters ' 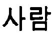 '.

FIG. 61 is a view illustrating vectors for the horizontal pressure input and the lean input.

Referring to FIG. 61, it is necessary to clearly distinguish the inputs by the combination of the horizontal pressure input and the lean input.

As illustrated in (a) and (b) of FIG. 61, in the horizontal pressure input, the horizontal direction pressure PH3 is mainly used and the movement M3 may be performed or not. In addition, as illustrated in (c) and (d) of FIG. 61, in the case of the lean input, the diagonal pressure PD4 is mainly used. When the horizontal pressure input and the lean input are combined with each other, among the above examples, it is difficult to use the example of performing the vertical pressure after performing the horizontal pressure. Since the horizontal pressure PH3 of the horizontal pressure input and the horizontal pressure PH4 of the lean input have the same vector, it is difficult to distinguish the lean input through the vertical pressure PV4 after the horizontal pressure PH4. When it is set to distinguish the lean input, input speed may be remarkably reduced. That is, it is possible to realize the lean input through the vertical pressure PV4 after the horizontal pressure PH3 in the combination of the horizontal pressure input and the lean input, which is not recommendable.

Therefore, in order to easily distinguish the horizontal pressure input from the lean input, the presence of the vertical pressure PV4 having a relatively large value in the lean input is determined or the magnitude of the diagonal pressure PD4 and the diagonal angle are directly measured to distinguish the horizontal pressure input from the lean input. However, the present invention is not limited to the above.

### Data Input by First Direction Input + Second Direction Input + Third Direction Input

In the data input method according to the present invention, two of the pressure input, the touch movement input, the horizontal pressure input, and the lean input are selected to perform combination of the first direction input and the second direction input and to improve the convenience of the data input. To be described hereinafter, in the data input method according to the present invention, three of the pressure input, the touch movement input, the horizontal pressure input, and the lean input are selected to perform combination of the first direction input, the second direction input, and the third direction input and to perform the data input.

The combination of the first direction input and the second direction input may be easily used by combining the two input operation to perform an input. However, in the input by the combination of the first direction input and the second direction input, the kind and the amount of data that may be input are limited and input arrangement is continuously changed in order to input various data. Such inconvenience may be easily removed by increasing the combination of the direction inputs.

As described above, in the data input method according to the present invention, unlike in the conventional art where an input may be easily performed by the pressure input, the touch movement input, the horizontal pressure input, and the lean input, the input arrangement 1 having the directions D is used. In the input arrangement 1, as described above, the user arranges data or commands that may be input around the position that touches the input surface 14 in a radial direction for data inputs. Therefore, a large amount of data and commands may be arranged in accordance with the number of directions D. The input arrangement 1 is variously constituted so that larger amounts and kinds of data may be easily input than the amounts and kinds of data that may be input through the conventional keyboard. In addition, the input means 3 is not taken off from the input surface 14 but data may be continuously input so that rapidity and convenience can be provided. Furthermore, in order to realize the correctness and rapidness of the input, data input by the input operations vary through the input operations that may be easily distinguished from each other so that it is possible to minimize the inconvenience of repeatedly calling an additional key arrangement for data input. Such convenience may be improved as the combination of the direction input increases. Hereinafter, three of the pressure input, the touch movement input, the horizontal pressure input, and the lean input are selected as such an example to combine the three inputs with each other and to input data by their combination.

Hereinafter, the selected three inputs are defined by the first direction input, the second direction input, and the third direction input to describe the first to the third direction inputs. However, such a definition does not define the order of an input. That is, the first direction input, the second direction input, and the third direction input may mean that three of the four input operations are selected to be combined with each other. Detailed description of similar or the same characteristics to or as the data input by the combination of the first direction input and the second direction input will be omitted. However, omitted description is not only applied to the above example but also applied hereinafter.

When the pressure input, the touch movement input, the horizontal pressure input, and the lean input are combined with each other to realize the first to the third direction inputs, the following four combinations may be obtained. Hereinafter, the input examples of each of the combinations and a method of easily distinguishing inputs during the combination will be described in detail through examples.

### 1) Data Input by Pressure Input, Touch Movement Input, and Horizontal

### Pressure Input

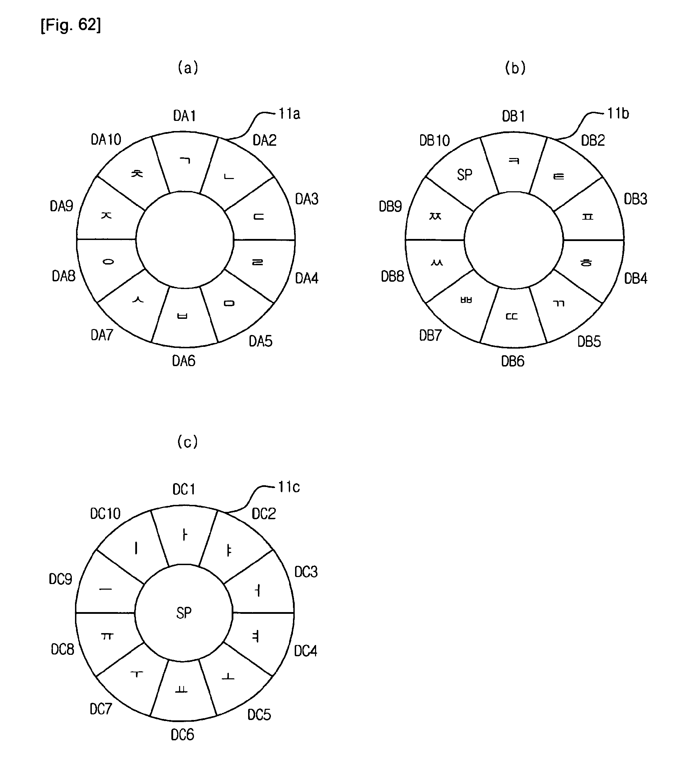

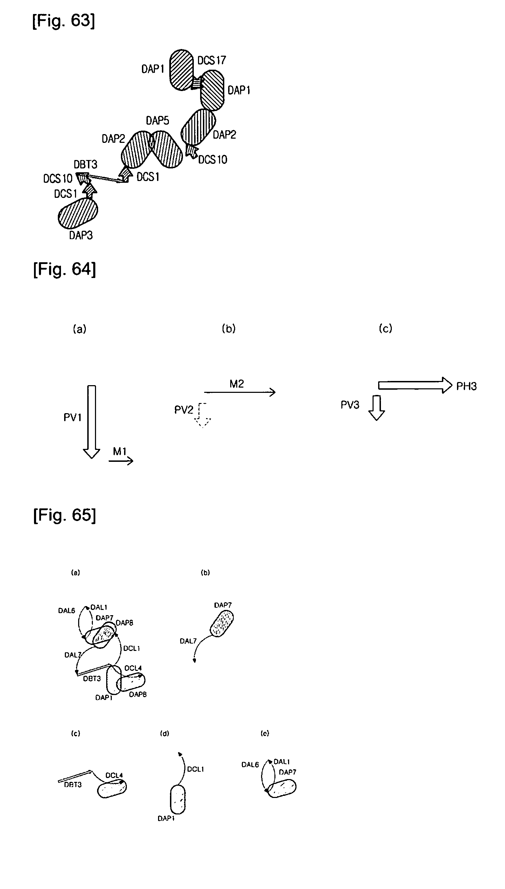

FIG. 62 is a view illustrating an example of an input arrangement for a data input by first to third direction inputs. FIG. 63 is a view illustrating an example of a data input by a combination of the pressure input, the touch movement input, and the horizontal pressure input.

Referring to FIGs. 62 and 63, a method of inputting data by combining the first to the third direction inputs is convenient to inputting commands and functional calls as well as characters. In the Korean characters, the first direction input is in charge of an initial consonant, the second direction input is in charge of a vowel, and the third direction input is in charge of a final consonant. The first direction input may be used for inputting the initial consonant and the final consonant, the second direction input may be used for inputting the vowel, and the third direction input may be used for inputting symbolic characters such as a period, a question mark, an exclamation mark, and a comma. In addition, the first direction input may be in charge of the phonemes of the initial consonant and the final consonant and one of the second and the third direction inputs may be in charge of a fortis. In addition, in the case of inputting foreign characters such as Chinese and Japanese, basic characters that are difficult to be displayed on the conventional keyboard may be used for displaying and inputting through the diversification of the input arrangement. Furthermore, in the case of the functional call, the input arrangement 1 may be set so that the first direction input calls a main menu, the second direction input calls a sub menu, and the third direction input selects the function of the sub menu. Therefore, various software such as a document editor, a graphic editor and a program creator may be conveniently and rapidly used. Furthermore, when various commands and functions are to be input at very high speed like in a recent game, the selection of characters, the movement of the selected characters, and the operation commands of the characters may be conveniently and easily performed through the input arrangement 1 and the combination of the direction inputs. The convenience of the input is not only limited to the first to the third direction inputs but is applied to the data input by the combination of the first direction input and the second direction input as described above and the combination of the first to the fourth direction inputs to be described below. As occasion demands, a suitable combination may be applied among the first to the fourth direction inputs. However, the present invention is not limited to the above.

FIG. 63 illustrates an example of inputting the characters ' 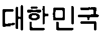 '. For convenience sake, it is assumed that the first direction input is a pressure input, the second direction input is a touch movement input, and a third direction input is a horizontal pressure input.

In order to input the characters ' 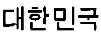 ', a third direction pressure input DAP3, a first direction horizontal pressure input DCS1, a tenth direction horizontal pressure input DCS10, the third direction touch movement input DBT3, the first direction horizontal pressure input DCS1, the second direction pressure input DAP2, the fifth direction pressure input DAP5, the tenth direction horizontal pressure input DCS 10, the second direction pressure input DAP2, a first direction pressure input DAP1, a seventh direction horizontal pressure input DCS7, and the first direction pressure input DAP1 are performed. Therefore, in the input arrangement 1, ' 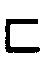 , 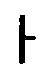 , 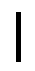 , 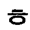 , 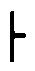 , 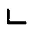 , 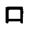 , 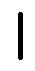 , 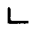 , 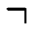 , 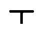 , and 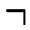 ' are sequentially selected to input the characters ' 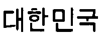 '. In FIG. 63, 12 input operations are continuously performed in order to input ' 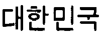 '. However, the continuous inputs are not necessary. The above is for describing an example of the data input according to the present invention. For convenience sake, in order to input a desired phoneme in a desired position, it may be enough if the input means 3 touches the input surface 14. That is, as described above, as occasion demands, the orbit illustrated in FIG. 63 may be performed again in the position where a previous input is performed. However, the present invention is not limited to the above.

FIG. 64 is a view illustrating an example of vectors for the pressure input, the touch movement input, and the lean input.

Referring to FIG. 64, when a plurality of direction inputs are combined with each other like the combination of the pressure input, the touch movement input, and the lean input, it is important to clearly distinguish the pressure input, the touch movement input, and the lean input in inputting data. Therefore, it is necessary to clearly distinguish the pressure input, the touch movement input, and the pressure input through the vectors for the pressure and the movement.

In the case of the pressure input as illustrated in FIG. 64, in the actual input, slight movement M1 for selecting the vertical direction pressure PV1 and the directions D for performing an input may be generated as mentioned above. In addition, in the touch movement input, minimum vertical direction pressure PV2 for maintaining touch other than the movement M2 for performing an input may be generated. In the horizontal pressure input, the vertical direction pressure PV2 may be generated together with the horizontal direction pressure PH3.

As noted from the above, when combination is performed using the pressure input, the touch movement input, and the horizontal pressure input, in order to distinguish the inputs from each other, a reference value for the vertical direction pressure PV, a reference value for the horizontal direction pressure PH, and a reference value for the movement M are set and at least one reference is applied among the above to distinguish the inputs. For example, in the case of the pressure input, the vertical direction pressure PV1 is much larger than in the other inputs and, in the case of the touch movement input, the magnitude of the movement M2 is larger than in the other inputs. In addition, since, in the case of the horizontal pressure input, the horizontal direction pressure PH is larger than in the other inputs, it is possible to easily distinguish the inputs from each other by determining whether the reference value is large or small.

### 2) Data Input by Pressure Input, Touch Movement Input, and Lean Input

FIG. 65 is a view illustrating a data input by the combination of the pressure input, the touch movement input, and the lean input.

FIG. 65 illustrates an example of inputting the characters ' 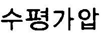 ' by using the pressure input, the touch movement input, and the lean input as the first direction input, the second direction input, and the third direction input. (a) illustrates an example of continuously performing inputs and (b), (c), and (d) illustrate example of inputting ' 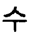 , 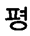 , 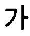 , and 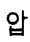 ', respectively. In order to input ' 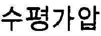 ', the user inputs ' 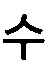 ' by performing the seventh direction pressure input DAS7 and a seventh direction lean input DCL7. Then, an input starts again in a convenient position or the third direction touch movement input DBT3, a fourth direction lean input DCL4, and an eighth direction pressure input DAP8 are performed after the seventh direction lean input DCL7 to input ' 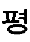 '. For convenience sake, an input is performed after the eighth direction pressure input DAP8 or a new input position is designated to perform the first direction pressure input DAP1, the first direction lean input DCL1, the eighth direction pressure input DAP8, the first direction lean input DCL1, and the sixth direction lean input DCL6 so that ' 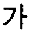 ' and ' 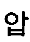 ' are input.

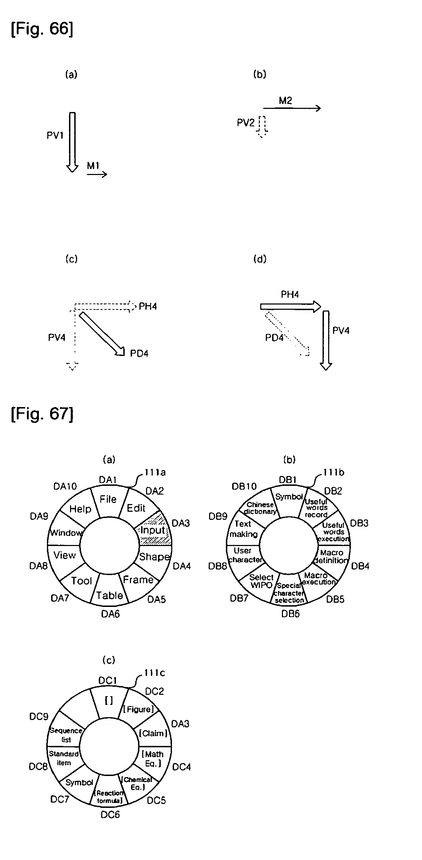

FIG. 66 is a view illustrating vector for the pressure input, the touch movement input, and the lean input.

In FIG. 66, (a) illustrates a vector for the pressure input, (b) illustrates a vector for the touch movement input, and (c) and (d) illustrate a vector for the lean input. As described above, in the pressure input, slight movement M1 for selecting a direction may exist in the vertical direction pressure PV1. In addition, in the touch movement input, minimum vertical direction pressure PV2 for maintaining touch may exist together with the movement M2. On the other hand, a method of applying the diagonal pressure PD4 after the lean input, a method of applying the vertical direction pressure PV4 after the horizontal direction pressure PH4, and a method of applying the horizontal direction pressure PH4 after the vertical direction pressure PV4 were described. Among the above methods, the method of applying the horizontal direction pressure PH4 after the vertical direction pressure PV4 may be slightly difficult to realize due to the pressure input. Therefore, in order to realize the lean input, one of the method of applying the diagonal pressure PD4 and the method of applying the vertical direction pressure PV4 after the horizontal direction pressure PH4 may be used.

In this case, when only the vertical direction pressure PV exists, it is recognized as the pressure input and, when the movement M2 and the vertical direction pressure PV2 no more than the reference value are generated, it is recognized as the touch movement input so that the pressure input and the touch movement input may be distinguished. In addition, when the generation of the diagonal pressure PD4 is recognized or when the vertical pressure PV4 is generated after the horizontal pressure PH4 is recognized and the horizontal pressure PH4 is generated, it is recognized so that the lean input may be recognized. Therefore, the pressure input, the touch movement input, and the lean input may be easily distinguished from each other.

### 3) Data Input by Pressure Input, Horizontal Pressure Input, and Lean Input

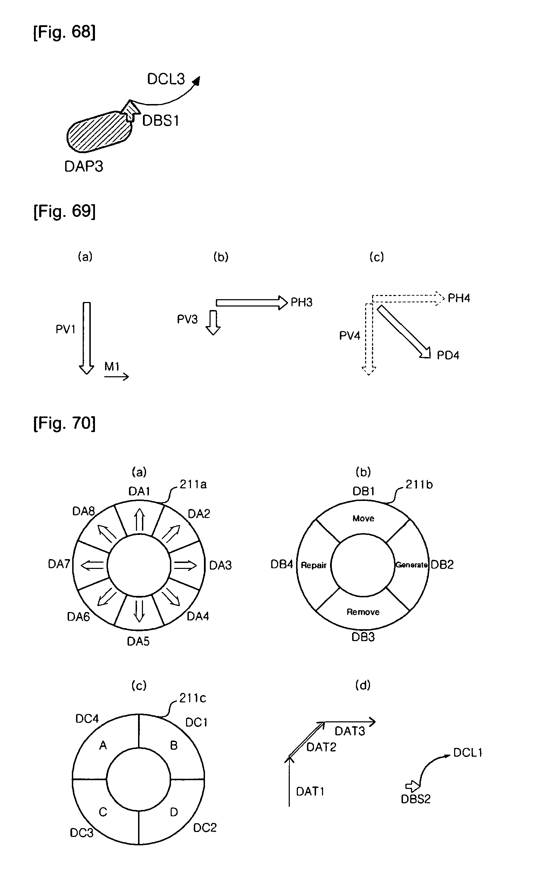

FIG. 67 is a view illustrating an example of an input arrangement for describing menu calls by the pressure input, the horizontal pressure input, and the lean input. FIG. 68 is a view illustrating an example of calling menus using the input arrangement of FIG. 67.

Referring to FIGs. 67 and 68, as described above, the first to the third direction inputs may be combined to be used for calling various commands and menus as well as character data. The input arrangements 111 (111a, 111b, and 111c) illustrated in FIG. 67 illustrate an example of listing functions for calling menus. Partial menus of an electronic document editor are illustrated as an example.

(a), (b), and (c) of FIG. 67 illustrate the first direction input, the second direction input, and the third direction input. (a) illustrates a main menu 111a, (b) illustrates a sub menu 111b, and (c) illustrates the selection item 111c of the sub menu. The main menu 111a, the sub menu 111b, and the selection item 111c are assigned to the pressure input, the horizontal pressure input, and the lean input to be used as the input arrangement 111 for the inputs. In the case of the pressure input, the entire items of the main menu 111a may be arranged by one input arrangement 111. In the case of the sub menu 111b and the selection item 111c, it must be set so that different items may be input in accordance with the items of the main menu 111a. Therefore, the sub menu 111b and the selection item 111c may be set to be plural in accordance with the items of the main menu 111a and the items of the sub menu 111b.

An example of FIG. 68 of calling the main menu 111a, the sub menu 111b, and the selection item 111c in accordance with the input to realize one function will be described as follows. The user performs the third direction pressure input DAP3 in order to select the input item DA3 in the main menu input arrangement 111a. Therefore, the second input arrangement 111b is activated so that sub menus for the selected input item DA3 are provided to the sub menu input arrangement 111b. Therefore, when the user selects the item input DB1 by the first direction horizontal pressure input DBS1, the lower selection item of the item input DB1 is provided to the user through the third input arrangement 111c. When the third input arrangement 111c is activated, the user selects one to call a desired function. In FIG. 68, an example of calling a claim input function DC3 by the third direction lean input DCL3 is described. The above method is applied to various programs such as various document creations, Internet explorer, and games to be used. Such an application may be performed by the first to the fourth direction inputs to be described hereinafter. The number of direction inputs may vary in accordance with a menu item.

FIG. 69 is a view illustrating vectors for the pressure input, the horizontal pressure input, and the lean input.

Referring to FIG. 69, the pressure input, the horizontal pressure input, and the lean input may have vectors of (a), (b), and (c) of FIG. 69. Among the above inputs, the lean input is not illustrated in FIG. 69, however, may be displayed or realized by the sum of the horizontal direction pressure PH4 and the vertical direction pressure PV4 as described above. Since the pressure input and the horizontal pressure input are formed of the vertical direction pressure PV1 or the horizontal direction pressure PH3, when the lean input is expressed as the sum of the horizontal direction pressure PH4 and the vertical direction pressure PV4, it is difficult to distinguish the horizontal direction pressure PH4 from the vertical direction pressure PV4. Therefore, the inputs may be distinguished from each other by recognizing the vertical direction pressure PV1 by the pressure input, the horizontal direction pressure PH3 by the horizontal pressure input, and the diagonal pressure PD4 by the lean input. However, the present invention is not limited to the above.

### 4) Data Input by Touch Movement Input, Horizontal Pressure Input, and Lean Input

FIG. 70 is a view illustrating an example of a data input by the touch movement input, the horizontal pressure input, and the lean input.

In FIG. 70, input arrangements 211 (211a, 211b, and 211c) for processing commands for the characters of a game, and input examples of commands of performing operations by the touch movement input, the horizontal pressure input and the lean input are illustrated. (a) of FIG. 70 is the input arrangement 211a for movement and (b) and (c) are the input arrangements 211b and 211c for operations.

When it is assumed that the user selects one character during the game, the movement of the character may be controlled using the first direction input and the movement input arrangement 211a. The touch movement input is assumed as the first direction input and the input of the movement command is illustrated in (d). The character selected by the user is moved to desired position by the first direction touch movement input DAT1, the second direction touch movement input DAT2, and the third direction touch movement input DAT3.

It may be commanded so that a specific unit is generated, moved, removed, or repaired in the game by the moved character. Therefore, the generation of the functional input arrangement 211b is selected by a second direction horizontal pressure input DBS2 so that the user generates a unit by a character. Then, the lower function corresponding to the generation is activated by the lower input arrangement 211c. The user selects a unit desired to be generated in the lower input arrangement 211c to select the generation of the unit through the first direction lean input DCL1.

In the case of being applied to an actual game, the input arrangement 211 and the input of commands may be different from the example. However, the data input method in which the input operations of the present invention are combined with each other may be used for various programs as well as the input of data such as characters as noted from the above embodiments.

Although not shown, the touch movement input, the horizontal pressure input, and the lean input may be easily distinguished from each other by the vertical direction pressure PH and the diagonal pressure PD so that data can be rapidly and correctly input.

### Data Input by First Direction Input + Second Direction Input + Third Direction Input + Fourth Direction Input

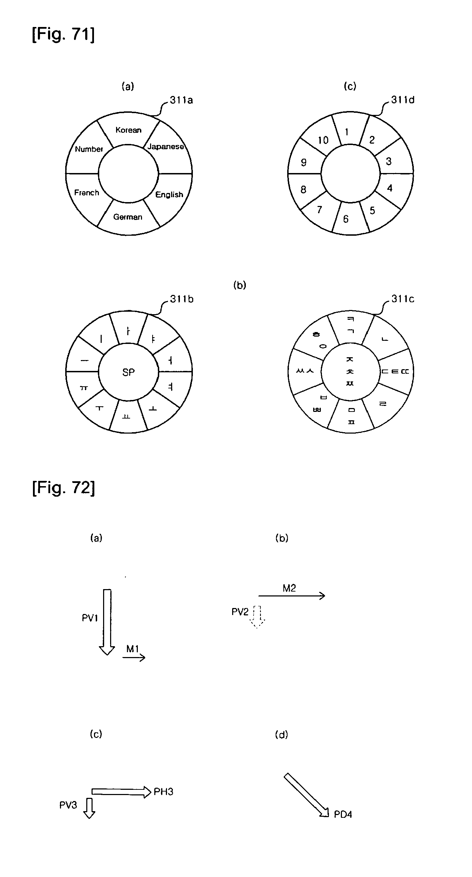

FIG. 71 is a view illustrating an input arrangement illustrating an example of a data input by first to fourth direction inputs.

Referring to FIG. 71, in the data input method according to the present invention, the pressure input, the touch movement input, the horizontal pressure input, and the lean input are combined with each other to realize the data input method. As noted through the above-described input example, the amounts and kinds of data that may be input in accordance with the input arrangement for the first to the fourth direction inputs are various. In particular, the data are input by the above-described four operations distinguished by the strength of pressure, the direction of pressure, the kind of pressure, the presence of movement, direction D, whether a previous input is completed, and whether an input is generated so that variety, rapidity, correctness, and convenience may be secured. In particular, such an input method may be advantageously applied to a touch type input device such as a touch screen and a touch pad and an input device whose screen has a limited size and may be used regardless of the size or the kind of an input surface and an input device.

Such characteristics become further clear in the data input in accordance with combination of the first to the fourth direction inputs. In particular, the first to the fourth direction inputs may be always used. However, when parts of the first to the fourth direction inputs are selected to be used as occasion commands, the convenience and applicability of an input are further improved.

For example, as illustrated in FIG. 70, input arrangements 311 (311a, 311b, 311c, and 311d) for inputting characters may be provided. When the first to the fourth direction inputs are used for inputting characters, languages, numbers, and special characters may be selected by the first direction input and the phonemes of the selected language are arranged by the second direction input, the third direction input, and the fourth direction input so that the characters may be input.

In addition, as described above, the user arbitrarily performs an input so that continuous inputs and intermittent inputs may be conveniently performed. Furthermore, the input arrangement is not only used for the input of characters but also may be used for a program by which commands are to be rapidly and easily input such as a game and for a program by which various commands are to be minutely input such as a graphic.

In the data input method by the first to the fourth direction inputs, input operations are to be clearly distinguished from each other.

FIG. 72 is a view illustrating a relationship among the pressure input, the touch movement input, the horizontal pressure input, and the lean input. In order to distinguish the pressure input, the touch movement input, the horizontal pressure input, and the lean input from each other, the presence of the movement is determined to distinguish the touch movement input and the pressure input may be distinguished in accordance with the strength and the presence of the vertical direction pressure PV. In addition, the horizontal pressure input is determined in accordance with the presence and the strength of the horizontal direction pressure PH to distinguish the lean input in accordance with the mixed presence of the diagonal pressure or the horizontal and the vertical direction pressures PV and PH. Furthermore, when various factors as in the combination of the first and the second direction inputs and the combination of the first to the third direction inputs are compared with each other, it is possible to clearly distinguish the four input operations from each other so that the data input method according to the present invention may be realized.

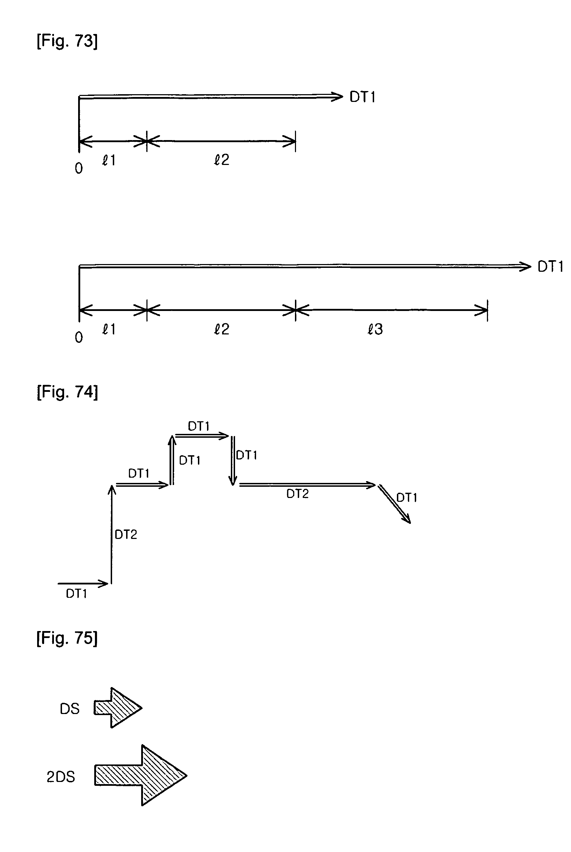

FIGs. 73 and 74 are views illustrating other embodiments of the touch movement inputs. FIG. 73 is a view illustrating a method of distinguishing the touch movement input by two stages and FIG. 74 is a view illustrating an example of the data input by the touch movement distinguished from each other by two stages.

Referring to FIGs. 73 and 74, although the touch movement inputs are performed by the same direction D as described above, it is possible to consider the touch movement inputs as different data inputs by the lengths 1 (11, 12, and 13) or the times taken for the touch movements. That is, although the touch movement inputs are generated in the same direction, it is possible to consider the touch movement inputs as different inputs in accordance with the distances 1 of the touch movements. First, when it is assumed that an input, in which the distance 1 of the touch movement is relatively small, is considered as a one stage input and that an input, in which the distance 1 of the touch movement is relatively large, is a two stage input, the two stage touch movement input has at least a length as long as a third length 13 than one stage. In addition, when the touch movement input is divided into multiple stages by the length, it is recognized as the touch movement input when the movement no less than a first length 11 that is the minimum movement distance is generated in order to distinguish the touch movement input from the pressure input, the horizontal pressure input and the lean input. When the movement distance is larger than the sum 11+12 of the first movement distance and the second movement distance and smaller than the sum 11+12+13 of the first to the third lengths, it is recognized as the one stage touch movement input. On the other hand, when the movement distance of the touch movement is larger than the sum 11+12+13 of the first to the third lengths, the touch movement input is recognized as the two stage touch movement input. Here, only the lengths of the touch movements that proceed in the same direction are included in the sum distance. When the touch movement input is formed of two stages in accordance with the length, the combination by the first to the fourth direction inputs increases. Although one of the first to the fourth direction inputs, that is, the pressure input, the touch movement input, the horizontal pressure input, and the lean input is not used due to the limitations of the input device, the one is replaced by the multiple stage touch movement input.

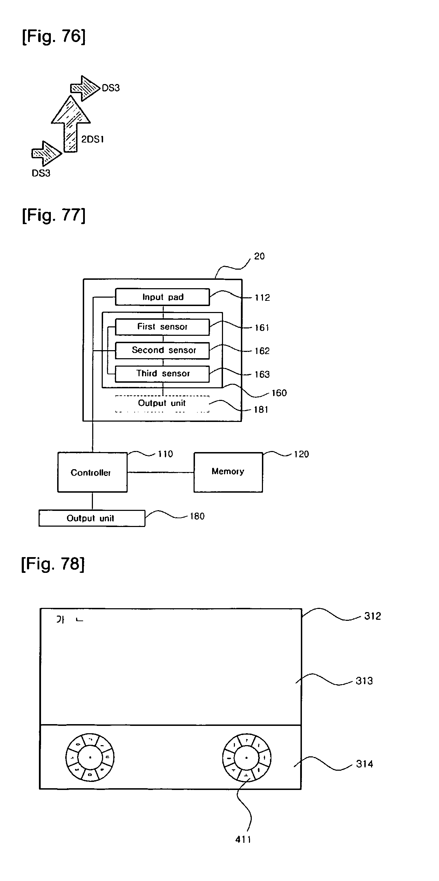

FIGs. 75 and 76 are views illustrating a method of distinguishing the horizontal pressure input in multiple stages in accordance with pressure to input data. FIG. 75 is a view illustrating the distinction of the horizontal pressure input by pressure and FIG. 76 is a view illustrating an example of the data input by the horizontal pressure input.

Referring to FIGs. 75 and 76, the horizontal pressure input is considered as no less than two stages by at least one of the strength of pressure, the maintaining time of pressure, and the length of the orbit of pressure like the above-described touch movement input to be used for the data input. In this case, a sensor or a means for determining at least one of the strength of pressure, the maintaining time of pressure, and the length of the orbit of pressure must be included in the data input device.

FIG. 75 illustrates a first horizontal pressure input DS by relatively small pressure and a second horizontal pressure input 2DS by relatively large pressure among multiple stage horizontal pressure inputs.

The multiple stage horizontal pressure input is combined with at least one of the pressure input, the touch movement input, and the lean input like the above-described multiple stage touch movement input to be used for the data input. In addition, when one of the pressure input, the touch movement input, and the lean input is not recognized by the input device, the horizontal pressure input is formed of multiple stages to replace the input that may not be used.

The multiple stage horizontal pressure input has division by the directions D other than division by pressures like the multiple stage touch movement input so that continuous inputs may be performed like the other inputs.

FIG. 77 is a view illustrating a constitution of the data input device according to the present invention.

Referring to FIG. 77, a data input device 101 according to the present invention includes an input unit 20, a controller 110, a memory 120, and an output unit 180.

The input unit 20 converts an input by a user into an electric signal to provide the electric signal to the controller 110. Therefore, the input unit 20 includes an input pad 112 and a sensor 160 so that the input may be performed by an input means 3. The input unit 20 may be coupled to the controller 110 by wire and radio. In addition, the input unit 20 is integrated with the output unit 180 to improve convenience of the user. That is, the input unit 20 is provided on the output unit 180 so that the user directly selects information output through the output unit 180 and that the user may feel as if the user directly performs an input on the output unit 180. However, the present invention is not limited to the above. The output unit 180 displayed as a dotted line in FIG. 77 is for describing that an example, in which the input unit 20 is integrated with the output unit 180. The input unit 20 and the separated output unit 180 have almost the same function. When the output unit 180 is integrated with the input unit 20, the input unit 20 is provided on the output unit 180 to project the contents of the output unit 180 so that the user check the output contents through the input surface 14. As illustrated in the drawing, both the output unit 180 integrated with the input unit 20 and the output unit 180 separated from the input unit 20 may be provided. However, the present invention is not limited to the above.

The input pad 112 is provided as a physical region, in which data is input by the user. The input pad 112 functions as paper. The user inputs data on the input pad 112 using the input means 3. The input pad 112 is made of a transparent plastic synthetic resin and glass and an equivalent material to have a uniform thickness in the form of a film and a board. In particular, the input pad 112 may be made of an elastic material to receive pressure for the convenience of the pressure input, the touch movement input, the horizontal pressure input, and the lean input. However, the present invention is not limited to the above. A plurality of sensors 160 having various forms for sensing pressure, touch, and movement and sub elements may be provided in at least one position of the edge of the input pad 112, the bottom of the input pad 112, and the input pad 112 itself. The sensors 160 may perform sensing using a method such as an electrostatic capacity measuring method or a capacitive shunt method. In this case, a mesh or matrix type conductive lines may be formed in the input pad 112. However, the present invention is not limited to the above.

The sensor unit 160 senses touches and operations of a user through the input pad 112, converts the same into electric signals, and transmits the converted electric signal to the controller 110. That is, the sensor unit 160 senses factors such as pressure, movement, touch, directions of the pressure and the movement, the level of the pressure, direction of the pressure, and a movement distance according to the pressure input, the touch movement input, the horizontal pressure input, and the lean pressure that are generated by the touch of the input pad 112 by the user, and transmits the sensed results to the controller 130. To this end, the sensor unit 160 may be constituted by installing at least one of a touch sensor, a pressure sensor, a displacement sensor, an acceleration sensor, and an equivalent sensor thereof or by combining at least two thereof. The installation position and the installation method of the sensor unit 160 must be selected according to properties of a sensor such as kind, sensitivity, size, and a sensing target of a sensor. In the present invention, it is assumed that the sensor unit 160 includes first to third sensors 161, 162, and 163 in order to easily sense and realize the pressure input, the touch movement input, the horizontal pressure input, and the lean input, and that each of the sensors 161, 162, and 163 senses the horizontal pressure, the vertical pressure, and the touches applied to the input pad 112 respectively. That is, it is assumed that the first sensor 161 senses whether the horizontal pressure PH is applied to the input pad 112 and measures the level and the direction of the horizontal pressure PH and variation by the horizontal pressure PH, that the second sensor 162 senses whether the vertical pressure PV is applied to the input pad 112 and measures the level and the direction of the vertical pressure PV and variation by the vertical pressure PV, and that the third sensor 163 senses whether the touch is generated and measures the direction of the touch and the movement distance and variation by the touch. However, the present invention is not limited to the above. Further, the number and kinds of the first to the third sensors 161, 162, and 163 are not limited. That is, the first to the third sensors 161, 162, and 163 may be combination of a plurality of various kinds of sensors, may be one sensor, or may share a single kind of sensors. In other words, the names of the first to the third sensors 121, 122, and 123 are terminologies used for the illustrative convenience, but these terminologies do not limit the physical number and kinds of the sensors. The first to the third sensors 161, 162, and 163 may be constituted by using at least one of an optical sensor, a pressure sensor, a magnetic sensor, an electrostatic sensor, an electromagnetic sensor, an ultrasonic sensor, and an equivalent sensor thereof or at least one kind thereof so that the constitution of the sensors may be slightly different from the constitution of this embodiment. In a case where the constitution of the sensor is changed, when the sensors may sense the pressure, displacement of the pressure, the maintaining time of the pressure, the movement under the pressure, and the movement under the touch, the data input method according to the present invention can be realized and this case may be considered as an example of application of the embodiments of the present invention.

The first sensor 161 senses the horizontal pressure PH applied to the input pad 112, converts the same into an electric signal, and transmits the converted electric signal to the controller 110. To this end, the first sensor 161 may be formed by installing a plurality of sensors under the input pad 112, that is, on a side facing a side on which a touch occurs by a user or an edge of the input pad 112, that is, on a horizontal direction end onto a side on which an input occurs. However, the present invention is not limited to the above. The first sensor 161 may be formed of a sensor including a pressure sensor, a magnetic sensor, and an equivalent sensor thereof in order to sense the horizontal pressure PH.

The second sensor 162 senses the vertical pressure PV applied to the input pad 112, converts the same into an electric signal, and transmits the converted electric signal to the controller 110. To this end, the second sensor 162 may be formed of a sensor installed under or around the input pad 112, like the first sensor 161 or a sensor for sensing a shear force. However, the present invention is not limited to the above.

The third sensor 163 assists the first sensor 161 and the second sensor 162 to sense the touch of a user applied to the input pad 112, converts the sensed touch into an electric signal, and transmits the converted electric signal to the controller 110. The third sensor 163 may be installed in the similar way to the first sensor 161 and the second sensor 162, but the present invention is not limited thereto.

The controller 110 controls the input unit 20, the memory 120, and the output units 180 and 181, processes the electric signals therefrom, receives the data input, and outputs the input data or the data demanded by a user to the user. In more detail, the controller 110 recognizes the data input according to the touch of a user applied to the input pad 112 of the input unit 20 by an electric signal from the sensor unit 160, processes the recognized electric signal according to a predetermined operating process, and datalizes the processed data input or performs a command to realize a function corresponding to the command. In addition, the controller 110 stores the data in the memory 120, processes or outputs the stored data by calling the data from the memory 120, and provides the processed data to the user. The controller 110 drives an apparatus using software stored in the memory 120, distinguishes the touches applied to the input pad 112 into the pressure input, the touch movement input, the horizontal pressure input, and the lean input using the distinguishing data of the input operations stored in the memory 120, and performs operations and functions according to the distinguished input. In addition, the controller 110, for the easy input of a user, calls data of the input arrangements 1, 11, 111, and 211 stored in the memory 120 and outputs the called data through the output units 180 and 181. That is, the controller 110 provides the virtual key pad through the output units 180 and 181 and assists a user to easily input data. The controller 110 may be a CPU or a CPU board applied to a mobile terminal such as a computer terminal and a mobile telephone, but the present invention is not limited to the above. The controller 110 may be formed of grouping a plurality of operating devices. In addition, the controller 110 includes an internal clock or an additional time operating device and is capable of measuring time using the time operating device.

The memory 120 stores various kinds of software for driving the data input device and data transmitted through the controller 110 and provides the software and the data according to the call by the controller 110. The memory 120 stores the distinguishing data for distinguishing the input operations and the input arrangement data for the easy input. Here, the distinguishing data for distinguishing the input operations includes data such as various reference values and determining conditions corresponding to the reference values. In addition, the input arrangement data, as described above, are stored by which input arrangements suitably set under the specific input condition and data input through the input arrangements are recorded. For example, when menus are called as described above, the input arrangements are stored by which the menus and the input arrangements for the sub-items of the menus are associated with each other. The memory 120 may be realized by only one or the combination of a semiconductor memory, an optical disc memory, a magnetic disc memory, a magnetic tape memory, and an equivalent memory thereof, but the present invention is not limited to the above.

The output units 180 and 181 are driven by the controller 110 and outputs data or information to a user. The output units 180 and 181 may be realized by various display devices and may include an image display device, a sound output device, and a printer. Particularly, the output units 180 and 181 may be flat display devices, but the present invention is not limited thereto. As described above, the output unit 181 may be integrated with the input unit 20, but the present invention is not limited thereto.

In the data input device 101 according to the present invention, the elements such as the input unit 20, the controller 110, the memory 120, and the output unit 180 are described and the others are omitted. The omitted elements are not required to describe the data input device 101 and the data input method and may be different according to the purpose to which the data input device 101 and the data input method are applied.

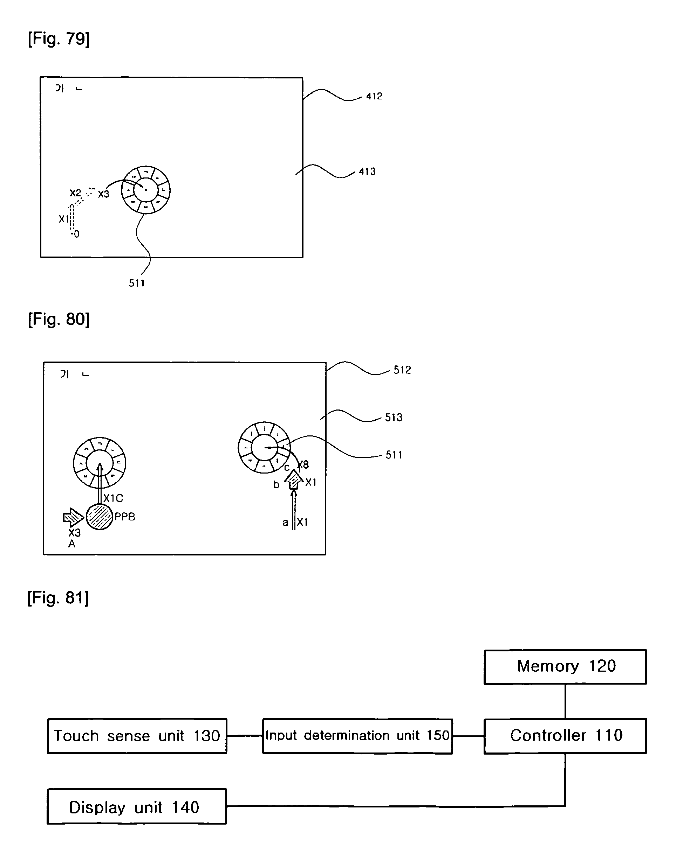

FIGs. 78 to 80 are views illustrating an input realizing example on an input pad. FIG. 78 is a view illustrating an example of distinguishing and using an input field and an output field. FIGs. 79 and 80 are views illustrating examples in which the input field is duplicated on the output field. FIG. 79 is a view illustrating an example in which an input is continuously performed by one hand or a single input unit. FIG. 80 is a view illustrating an example in which an input is performed in a combination way by two input units.

Referring to FIGs. 78 to 80, the data input method according to the present invention is realized in an input device in which the input unit 20 and the output unit 180 are separated from each other, or in an input device in which the input unit 20 and the output unit 181, as illustrated, are integrated with each other. In the latter case, the data input method may be more convenient.

In the device in which the input unit 20 and the output unit 181 are integrated with each other, as illustrated in FIG. 78, an output field 313 and an input field 314 are distinguished from each other. As illustrated in FIGs. 79 and 80, the output field 313 and the input field 314 may be used without distinguishing. These are subjects to be determined by considering the user convenience and the use form of the data input device, but the present invention is not limited to the above.

Firstly, referring to FIG. 78, in the data input method according to the present invention, the input field 314 in which an input is performed as illustrated and the output field 313 from which an output is generated by an input command are distinguished. In this case, the input unit 20 may be realized into the input field 314 in a restricted manner. On the other hand, when the input field 314 and the output field 313 are distinguished from each other as illustrated in FIG. 78, an input arrangement 411 is displayed on the input field 314 or the output field 313 such that the input of a user is easily performed. In particular, a user may freely input within the input field 314 as described above and the respective input operations may start at a specific position as occasion demands. That is, the input operation starts about at the center position of the input arrangement 411 as illustrated in FIG. 78 to restrict the input position, but the present invention is not limited to the above.

As illustrated in FIGs. 79 and 80, entire output unit 180 may be used as the input field. When the input unit 20 is provided to a large screen, the input field 314 and the output field 313 may be distinguished. On the contrary, in a small electronic apparatus, the output unit 180 and the input unit 20 are integrated with each other so that it is advantageous to use entire screen to be output as an input field 513.

On the other hand, as described above, the data input according to the present invention may be continuously performed by one input unit 3 or two input units, for example, with two hands. FIGs. 79 and 80 are views illustrating an example of such input method. As illustrated in FIG. 79, the data input method according to the present invention may be continuously performed by one input unit 3 and an input position may be any place of the input field 413. If the input device senses two or more touches and pressures simultaneously, as illustrated in FIG. 80, inputs may be performed at two places of the input field 513 simultaneously.

In particular, in this case, the input arrangement 511 is output as illustrated in FIG. 78 so that a user may conveniently input. In this output of the input arrangement 511, the input arrangement 411 may be output to a fixed position of the input field 513 as illustrated in FIG. 78 and positions of the input arrangements 411 and 511 may be changed according to the touch position of the input unit 3 as illustrated in FIGs. 79 and 80. However, this is to improve the user convenience and the present invention is not limited to the above.

### <Seventh embodiment>

Next, a seventh embodiment of the data input device according to the present invention will be described.

FIG. 81 is a block diagram of a data input device according to an embodiment of the present invention.

Referring to FIG. 81, the data input device according to the present invention includes a memory 120, a touch sense unit 130, a display unit 104, an input determination unit 150, and a controller 110.

The memory 120 stores input data or command data corresponding to forms of the touch inputs performed in a radial direction, wherein the forms of the touch inputs are distinguished according to touch types and the respective touch types are subdivided according to input directions performed in a radial direction to be assigned to the input data or the command data.

The touch sense unit 130 senses the forms of the touch inputs, outputs a sense signal of a touch position performed on a touch surface wherein the sense signal is different according to the touch types.

The input determination unit 150 determines the touch types from the sense signal of the touch sense unit 130 and the input direction according to the change of the touch positions. To this end, the input determination unit 150 sets the position where the touch input starts even when the touch input starts at any position on the sense surface of the touch sense unit 130 as a reference input point and determines the touch types and the input direction performed at the set reference input point.

In addition, when the touch type or the input direction is switched, the input determination unit 150 sets the switched point as the reference input point again, informs the determined results of the touch type and the input direction which are performed from the reference input point set prior to the switch point to the switch point to the controller 110, and newly determines the touch type and the input direction according to the form of the touch input starting based on the re-set reference input point (switch point).

The controller 110 reads the input data or the command data corresponding to the touch type and the input direction determined by the input determination unit 150 from the memory 130, inputs the input data, and performs a command performing process corresponding to the command data.

The display unit 104 outputs the command performing process according to the data or the command data which are input by the controller 110 by the command of the controller 110 such that a user can recognize the command performing process.

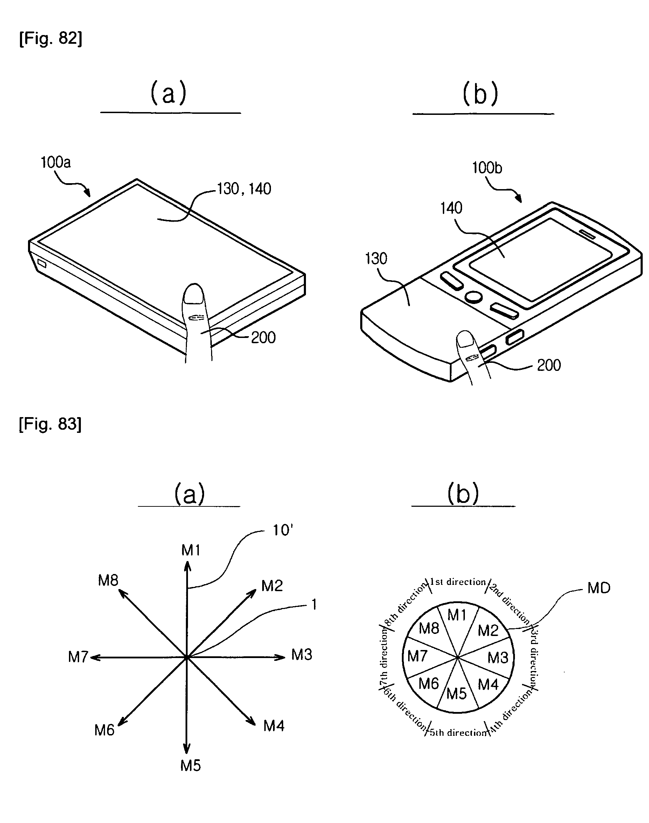

FIG. 82 is a perspective view illustrating an embodiment of the data input device according to the present invention. In a data input device 100a as illustrated in (a) of FIG. 82, the touch sense unit 130 is formed of a touch screen and integrated with the display unit 104. A data input device 100b as illustrated in (b) of FIG. 82 includes a touch pad type touch sense unit 130 separated from the display unit 104. That is, in the data input device according to the present invention, the touch sense unit 130 may be formed of a touch screen, a touch pad, or a touch sensor. The touch sense unit 130 outputs a sense signal according to a touch coordinate and a touch type inputted by a finger, a stylus, or an object suitable for the touch input.

In addition, in the data input device according to this embodiment of the present invention, the touch form includes at least one of the touch movement form, the vertical pressure form, the center pressure form, the horizontal pressure form, the lean form, and the vertical pressure movement form, and the respective touch forms will be described with reference to following FIGs. 83 to 92.

### Touch movement form

In this embodiment, the touch movement input form means that the touch moves from the reference input position in the radial direction while maintaining the touched state, and the input determination unit 150 determines that the coordinate of the touch position of the touch sense unit 130 is changed and the movement direction of the coordinate of the touch positions.

FIG. 83 is a view illustrating that data are assigned to each of the input directions in a touch form of the touch movement. According to FIG. 83, the touch movements are subdivided into a first, a second, a third, a fourth, a fifth, a sixth, a seventh, and an eighth direction touch movements M1, M2, M3, M4, M5, M6, M7, and M8 with respect to the movement directions divided into eight directions (the first, the second, the third, the fourth, the fifth, the sixth, the seventh, and the eighth directions) in the radial direction around the reference input position 1 respectively, and respective touch movement data MD are assigned to the first direction touch movement M1, the second direction touch movement M2, the third direction touch movement M3, the fourth direction touch movement M4, the fifth direction touch movement M5, the sixth direction touch movement M6, the seventh direction touch movement M7, and the eighth direction touch movement M8 and stored in the memory 120. For example, when the sense signal of the touch sense unit 130 is the touch movement form and the touch movement direction is the first direction, the input determination unit 150 determines the sense signal as the first direction touch movement M1 to inform the controller 110 that the first direction touch movement M1 has been performed so that the first direction touch movement data are processed.

Although the touch movement is depicted by an arrow in FIG. 83, it must be advised that the indications M' of the touch movement is for easy understanding of the touch movement form.

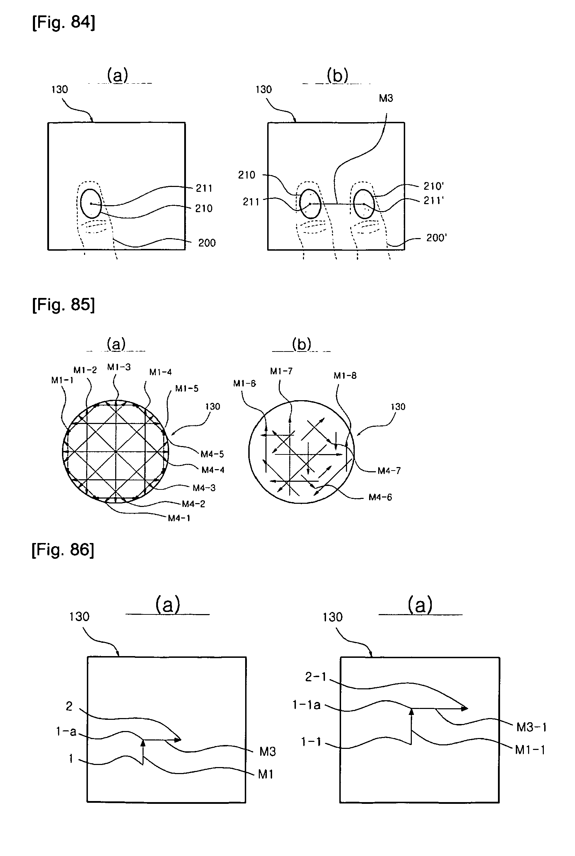

FIG. 84 is a view illustrating the forms of the touch movement. First, when a touch surface 210 is formed by which a finger 200 touches the touch sense unit 130 as illustrated in (a) of FIG. 84, the touch sense unit 130 transmits a touch signal corresponding to the position of the touch surface 210 to the input determination unit 150, and the input determination unit 150 selects a reference touch point 211 according to the transmitted touch signal and sets the selected reference touch point 211 as a reference input position 1. At this time, the reference touch point 211 is selected from the touch surface 210 according to predetermined patterns, and in an embodiment as illustrated in FIG. 84 the reference touch point 211 is selected as the center point of the touch surface 210. The reference touch point 211 may be selected as the upper end or another positions of the touch surface 210 and is selected from a changed touch surface according to the same patterns even when the touch surface 210 is changed. In addition, the touch means may be a stylus instead of the finger 200.

When the touch is performed at the touch sense unit 130 and the reference input position 1 is determined as illustrated in (a) of FIG. 84, the input determination unit 150 determines the change of the touch form and the input direction according to the sense signal transmitted from the touch sense unit 130 after that.

At this time, as illustrated in (b) of FIG. 84, when the finger 200 maintains the touch state and the third direction touch movement M3 is performed, the input determination unit 150 grasps the movement path of the reference touch point 211 between the touch surface 210 before the movement and a touch surface 210' after the movement to determine the movement is the third direction touch movement M3.

FIG. 85 shows various forms of the touch movement.

Referring to (a) of FIG. 85, it is understood that the touch movement is performed as if crossing the touch sense unit 130, and at this time the touch movement crossing in the same direction is considered as the same input. For example, first direction touch movements M1-1, M1-2, M1-3, M1-4, and M1-5 have different reference input position and different touch movement distances sensed by the touch sense unit 130 but are determined as the same first direction touch movement M1. In addition, fourth direction touch movements M4-1, M4-2, M4-3, M4-4, and M4-5 are determined as the fourth direction touch movement M4 samely. These forms of the touch movements show that the touch movement input may be easily performed even in a small area of the touch sense unit 130.

Referring to (b) of FIG. 85, it is understood that a touch movement is determined as the same input when the touch movement is performed in the same direction even if any position on the touch sense unit 130 is selected as the reference input position 1 and if the touch movement distance is short or long. For example, first direction touch movements M1-6, M1-7, and M1-8 are determined as the same first direction touch movement M1 even when the reference input position 1 is different from the movement distance and as the same input as the first direction touch movements M1-1, M1-2, M1-3, M1-4, and M1-5 of (a) of FIG. 85.

FIG. 86 is a view illustrating the continuous input forms of the touch movement.

The touch input form according to (a) of FIG. 86 is to touch a position '1', to continuously input the first direction touch movement M1 and the third direction touch movement M3 from the position '1' as the starting point, and to release the touch at a position '2'. When the touch input is received, the input determination unit 150 sets the position '1' as the reference input position 1 and determines the touch form and the input direction after that, transmits the determined results according to the touch movement from the position '1' to a switch point 1-a to the controller 110 to input data 'M1' (data according to the movement direction of the touch movement as illustrated in (b) of FIG. 83) as the first direction touch movement M1 is changed at the switch point 1-a, resets the reference input position as the switch point 1-a to determine the touch form and the input direction starting from the reset reference input position 1-a. In addition, when the touch is released at the position '2', the input determination unit 150 transmits the touch input form (here, the third direction touch movement M3) determined from the reset reference input position 1-a to the touch release position 2 to the controller 110 to input data 'M3' (data according to the movement direction of the touch movement as illustrated in (b) of FIG. 83). Therefore, the controller 110 processes the data 'M1' and the data 'M3' with respect to the touch input according to (a) of FIG. 86.

As illustrated in (b) of FIG. 86, it is understood that the data 'M1' and the data 'M3' are input in the same manner as that of (a) of FIG. 86 but the input forms thereof are different from each other. That is, in the touch input form according to (b) of FIG. 86, the position 1-1 where the touch starts, the position 1-1a of the switch point, the touch release position 2-1, and the movement distances in the first direction M1-1 and in the third direction M3-1 are different from those of (a) of FIG. 86, but the processed data 'M1' and 'M3' are identical.

Therefore, the data input device according to the present invention resets the reference input positions by switch points of the movement directions when only the movement directions are switched without switching the touch forms (the touch movement forms of FIG. 86) and processes the input according to the determination result of the movement directions.

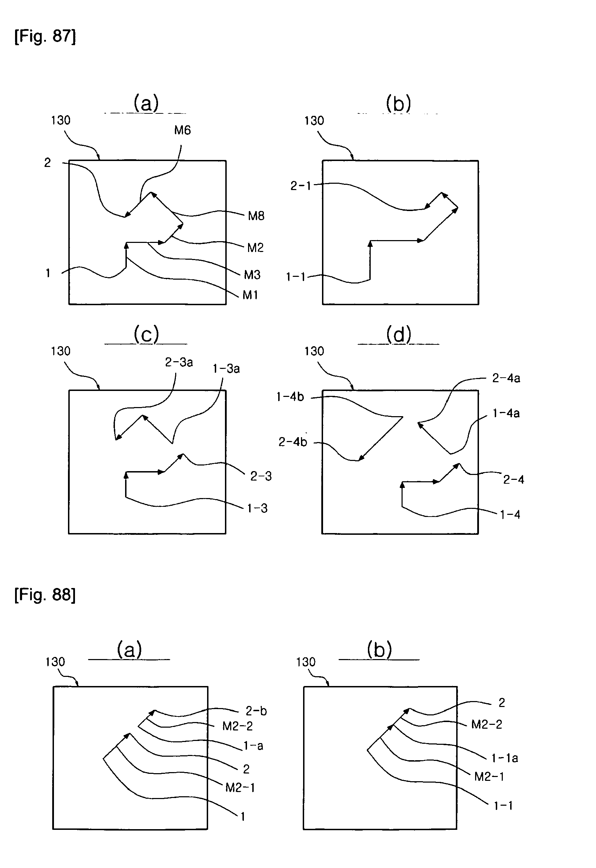

FIG. 87 is a view illustrating another form of the touch movement according to an embodiment of the present invention.

Referring to (a) of FIG. 87, it is understood that the first direction touch movement M1, the third direction touch movement M3, the second direction touch movement M2, the eighth direction touch movement M8, and the sixth direction touch movement M6 are switched in directions when that the touch starts from the position '1' and released at the position '2', and the controller 110 sequentially processes the inputs of the data 'M1', 'M3', 'M2', 'M8', and 'M6' according to such input forms.

(b) of FIG. 87 shows the process of the same input as (c) of FIG. 86 because the starting position 1-1 and the release position 2-2 of the touch and the directions of the respective touch movements are different but the input order of the movement directions are same.

In addition, as illustrated in (c) of FIG. 87, the first direction touch movement M1, the third direction touch movement M3, the second direction touch movement M2, the eighth direction touch movement M8, and the sixth direction touch movement M6 are input in the same manner as (a) and (b) of FIG. 87 but the touch occurs at the position '1-3a' again after the first direction touch movement M1, the third direction touch movement M3, and the second direction touch movement M2 are input and the touch is released at the position '2-3 so that the remaining eighth direction touch movement M8 and sixth direction touch movement M6 are input. In addition, as illustrated in (d) of FIG. 87, the first direction touch movement M1, the third direction touch movement M3, and the second direction touch movement M2 are input, the touch is released at the position '2-4', and the touch occurs at the position '1-4a' again so that the eighth direction touch movement M8 is input, that the touch is released at the position '2-4a', that the touch occurs at the position '1-4b' again to perform the sixth direction touch movement M6, and then that the touch is released at the position '2-4b' again. That is, the data input device according to the present invention continuously input an input generated after the re-touch by following the input before the release even when the touch input is released during the process of the touch input.

FIG. 88 is a view illustrating forms of continuously inputting touch movements in the same direction.

As illustrated in (a) of FIG. 88, in order to continuously input same second direction touch movements M2-1 and M2-2, a first second direction touch movement M2-1 is input, the touch is released 2, and the touch occurs again 1-a, and after that a second direction touch movement M2-2 is input. That is, the touch is released in the same form as those of (c) and (d) of FIG. 87 and then retouch occurs to continuously input.

(b) of FIG. 88 shows that, according to the present invention, the same direction touch movements can be continuously input in a method different from that of (a) of FIG. 88. As illustrated in (b) of FIG. 88, after the first second direction touch movement M2-1 is input and the reference input position is reset at the position '1-1a', the second direction touch movement M2-2 is input. As such, in order to reset the reference input position at the position '1-1a', the input determination unit 150 of the present invention re-determines a stop position as the reference input position by determining the stop when an input touch form and an input direction are not changed exceeding a predetermined stop critical time. That is, when movement is not generated at the position '1-1a' exceeding the predetermine stop critical time after the first second direction touch movement M2-1, the first second direction touch movement M2-1 is input and the determination of the touch form and the input direction generated after that starts.

### Vertical pressure form

In this embodiment of the present invention, the vertical pressure form means a touch form of maintaining the touch state facing vertical pressure regions 221, 222, 223, 224, 225, 226, 227, and 228 arranged in a radial direction within a predetermined vertical pressure critical radius 229 around the reference input position and of vertically pressing the vertical pressure regions of the moved positions after the movements.

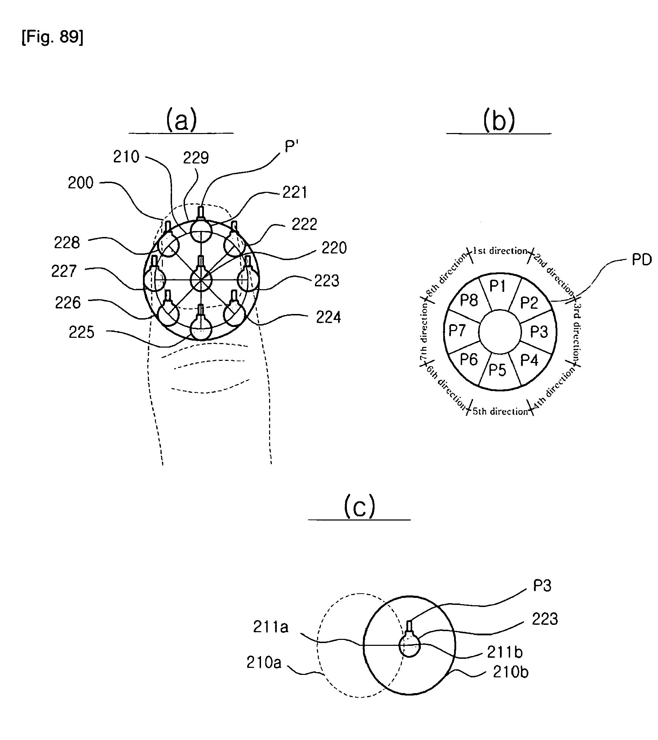

FIG. 89 shows arrangements of the vertical pressure regions 221, 222, 223, 224, 225, 226, 227, and 228 and data PD assigned to the vertical pressure regions. The vertical pressure regions 221, 222, 223, 224, 225, 226, 227, and 228 are respectively arranged in directions divided into eight directions in a radial direction around the center point of the touch surface 210. When a vertical pressure region positioned in the movement direction is vertically pressed after the movement in a radial direction at the touch state as illustrated in (a) of FIG. 89, a vertical pressure input of the corresponding direction is performed. Data PD are assigned to first to eighth direction vertical pressures P1, P2, P3, P4, P5, P6, P7, and P8 corresponding to the vertical pressure regions as illustrated in (a) of FIG. 89.

In more detail, when the reference input position is set, the touch movement is stopped within the vertical pressure critical radius 229, the input determination unit 150 determines that the vertical pressure form input is performed and the vertical pressure is performed, determines which directional vertical pressure region the pressure is applied to from the reference input position, finally determines that a corresponding direction vertical pressure is performed, and transmits the determined results to the controller 110.

(c) of FIG. 89 is a view illustrating an example of the vertical pressure input such that, in a state that a touch surface 210a is formed by touching, the vertical pressure region 223 positioned in the third direction is pressed at a reference touch point 211a of the touch surface 210a. At this time, when the vertical pressure region 223 in the third direction is pressed, the touch surface 210b is formed and the third direction vertical pressure P3 is input according to the pressure so that data 'P3' is input.

The touch form of the vertical pressure, for the easy understanding of the present invention, as illustrated in FIG. 89, is shown by a solid line indicating the movement direction and by a mark P' formed of an arrow at a pressure point.

### Center pressure form

In addition, referring to (a) of FIG. 89 again, the center pressure region 220 is shown at the center of the touch surface 210, that is, the position of the reference touch point.

The center pressure region 220 is a region where a center pressure as one of the touch forms of the present invention is performed, and in the center pressure region 220 the reference input position (the reference touch point of the touch surface 210 in (a) of FIG. 89) is vertically pressed without directional movement such that the center pressure is performed and data P0 is input.

### Horizontal pressure form

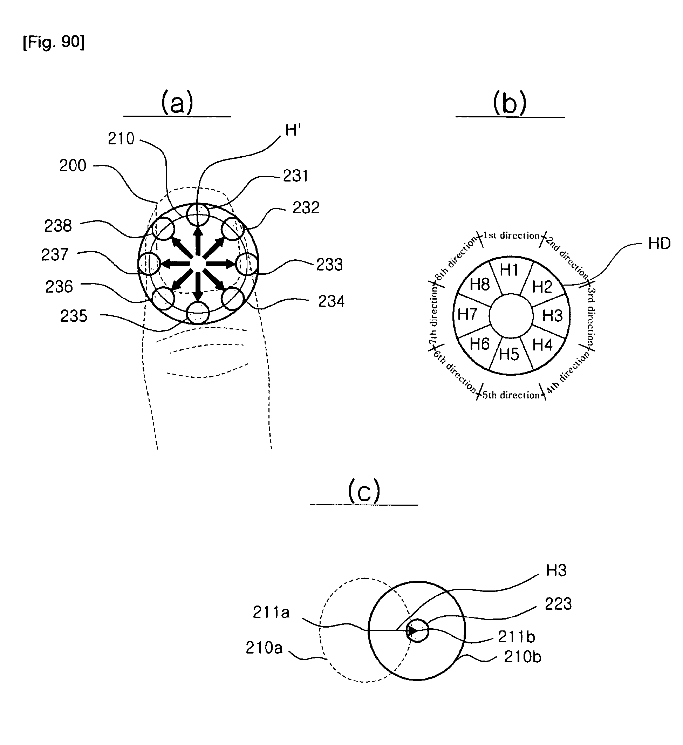

FIG. 90 is a view illustrating horizontal pressure forms of the touch forms according to the present invention.

In this embodiment, the horizontal pressure form means that the touch state is moved toward horizontal pressure regions 231, 232, 233, 2234, 235, 236, 237, and 238 arranged around the reference input position in a radial direction within a predetermined horizontal pressure critical radius 239 while maintaining the touch state. In addition, the horizontal pressure form may be performed in the form of applying a horizontal force to the touch sense unit 130 by a touch frictional force between a finger (or a stylus) and the touch sense unit 130.

The pressing to the respective horizontal pressure regions 231, 232, 233, 234, 235, 236, 237, and 238 is defined by a first direction horizontal pressure H1, a second direction horizontal pressure H2, a third direction horizontal pressure H3, a fourth direction horizontal pressure H4, a fifth direction horizontal pressure H5, a fifth direction horizontal pressure H5, a sixth direction horizontal pressure H6, a seventh direction horizontal pressure H7, and an eighth direction horizontal pressure H8 so that data HD to be processed as an input are assigned to H1, H2, H3, H4, H5, H6, H7, and H8 respectively.

In more detail, when the reference input position is set according to the touch and the horizontal pressure is performed within the horizontal pressure critical radius 239, the input determination unit 150 determines that the horizontal pressure input is performed and transmits the determined results of the horizontal pressure in the direction where the horizontal pressure is performed to the controller 110.

(c) of FIG. 90 shows an input form of the horizontal pressure 33 performed in the third direction. The third direction horizontal pressure H3 is performed in the form of moving toward the third direction horizontal pressure region 233 and of applying the horizontal pressure within the horizontal pressure critical radius 239 based on the reference input position by taking the reference touch point 211a of the touch surface 210a by a touch as the reference input position, wherein the touch surface 210b is formed after the movement and H3 is input.

### Lean form

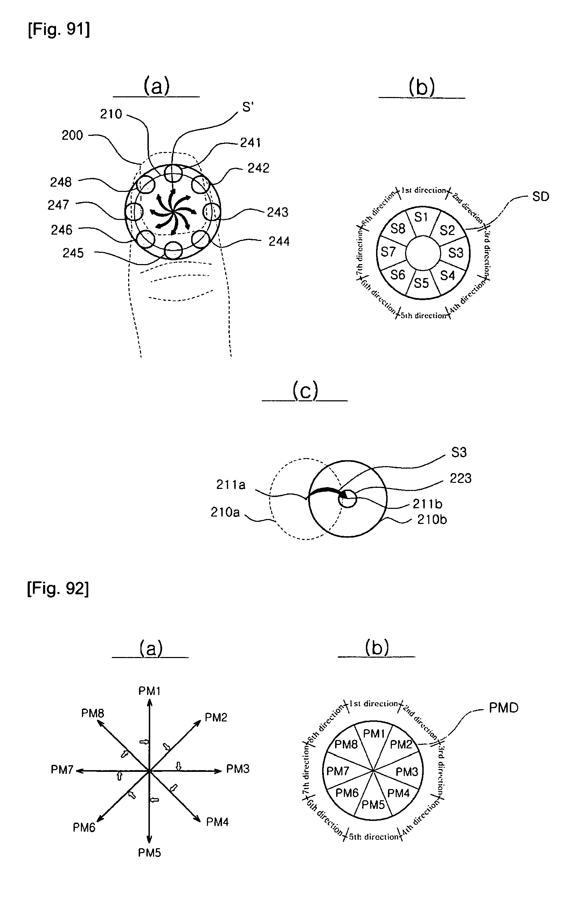

FIG. 91 is a view illustrating a lean form according to the embodiment of the present invention.
In this embodiment, the lean form means that the touch state is maintained and moved toward lean regions 241, 242, 243, 244, 245, 246, 247, and 248 arranged in a radial direction within a predetermined lean critical radius 249 around the reference input position so that a corresponding lean region is pressed and that a pressure force is increasing gradually during the movement. That is, the lean form means a form of leaning and pressing a section of the touch sense unit 130. In addition, the pressing of the respective lean regions 241, 242, 243, 244, 245, 246, 247, and 248 is defined as a first direction lean S1, a second direction lean S2, a third direction lean S4, a fourth direction lean S4, a fifth direction lean S5, a sixth direction lean S6, a seventh direction lean S7, and an eighth direction lean S8, and data SD to be processed as an input are assigned to S1, S2, S3, S4, S5, S6, S7, and S8 respectively.

In more detail, when the movement of a touch coordinate is performed within the lean critical radius 249, the pressure force is gradually increased, and the pressure is stopped within the lean region after the reference input position by the touch is set, the input determination unit 150 determines a lean input and a lean direction and transmits the determined results to the controller 110.

(c) of FIG. 91 shows an input form of the lean S3 performed in the third direction. The third direction lean S3 is performed in the form of taking a reference touch point 211a of the touch surface 210a by a touch as the reference input position, of moving toward the third direction lean region 243 within the lean radius 249 around the reference input position, and of moving while increasing a pressure force gradually. The touch surface 210b is formed after the movement and S3 is processed as an input.

### Vertical pressure movement form

FIG. 92 is a view illustrating the vertical pressure movement among the touch forms according to the embodiment of the present invention.

The vertical pressure movement form means a touch form of vertically pressing the reference input position and of moving while maintaining the touch state of the pressing. Referring to FIG. 92, when a first direction vertical pressure movement PM1, a second direction vertical pressure movement PM2, a third direction vertical pressure movement PM3, a fourth direction vertical pressure movement PM4, a fifth direction vertical pressure movement PM5, a sixth direction vertical pressure movement PM6, a seventh direction vertical pressure movement PM7, and an eighth direction vertical pressure movement PM8 distinguished according to the radial direction are input, respective data PMD are processed as inputs.

Although the respective touch forms have been described above, the data input device according to the present invention may be constituted to determine at least one of the touch movement form, the vertical pressure form, the center pressure form, the horizontal pressure form, the lean form, and the vertical pressure movement form.

In addition, in FIGs. 83 to 92, the eight input directions are formed by being divided into eight parts. However, it is advised that the present invention may set the divisional number of the input direction into various forms.

In addition, the vertical pressure critical radius 229, the horizontal pressure critical radius 239, and the lean critical radius 249 may be set to the same critical radius.

In addition, although not shown in FIGs. 89 to 92, the vertical pressure form, the horizontal pressure form, the lean form, and the vertical pressure movement form are formed in the radial direction within a critical radius around a selected reference input position 1 even when the reference input position 1 is selected as any position on the touch sense unit 130.

In addition, when the reference input position is changed, the vertical pressure regions 221 to 228, the horizontal pressure regions 231 to 238, and the lean regions 241 to 248 are arranged according to an input radius around the changed reference input position or are set to the same regions.

In addition, although not shown in FIGs. 89 to 92, the vertical pressure form, the horizontal pressure form, the lean form, and the vertical pressure movement are to enable the continuous input, the retouch continuous input after the touch release, and the continuous input according to the stop critical time in the same manner as that of the touch movement form of FIGs. 86 to 88.

In addition, the data input device employing at least two touch forms among the touch movement, the vertical pressure form, the center pressure form, the horizontal pressure form, the lean form, and the vertical pressure movement form, may be constituted to enable the continuous input, the retouch continuous input after the touch release, and the continuous input by the stop critical time as illustrated in FIGs. 86 to 88.

In addition, the data input device according to this embodiment of the present invention may be constituted not to process the movement form returning to the original position as an input even when the vertical pressure, the horizontal pressure, or the lean input is performed and returns to the reference input position 1 of the input front end. In this case, the data input device may continuously input the vertical pressure input, the horizontal pressure, or the lean in a radial direction based on the reference input position 1 of a point arbitrary selected by the touch sense unit 130.

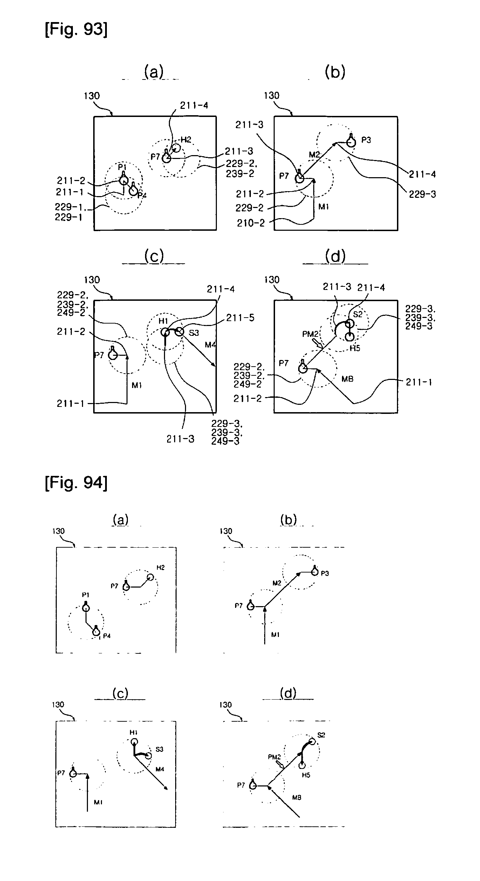

The above-described features of the present invention will be described with reference to the following FIGs. 93 and 94.

FIG. 93 is a view illustrating input forms of at least two touch forms in the touch sense unit 130 and it is advised that in this embodiment a critical radius (the vertical pressure critical radius, the horizontal pressure critical radius, and the lean critical radius) is same.

(a) of FIG. 93 shows inputs performed in the form of the vertical pressure form and the horizontal pressure form and the input order thereof is as follows. The position 211-1 is touched, the first direction vertical pressure P1 is performed within the critical radius 229-1 or 229-1 formed based on the position 211-1, the fourth direction vertical pressure P4 is input and the touch release is performed within a critical radius formed based on the position 211-2 where the first direction vertical pressure P1 is performed, the position 211-3 is touch again, the seventh direction vertical pressure P7 is performed within the critical radius 229-2 or 239-2 formed based on the position 211-3, the second direction horizontal pressure H2 is input within a critical radius based on the position 211-4 where the seventh direction vertical pressure P7 is performed, and the touch is released. According to the above touch input, the input determination unit 150 sets the position 211-1 as the reference input position 1, determines the first direction vertical pressure P1 input after that such that the controller 110 processes the data P1 as an input, resets the position 211-2 as the reference input position 1, determines the fourth direction vertical pressure P4 input after that such that the controller 110 processes the data P4 as an input, sets the position 211-3 to be retouched after the touch release as the reference input position 1, and determines the seventh direction vertical pressure P7 and the second direction horizontal pressure H2 touch-input after that such that the controller 110 processes the data P7 and H2 as inputs.

(b) of FIG. 93 shows inputs in the touch movement form and the vertical pressure form and the input order thereof is as follows. The position 211-1 is touched, the first direction touch movement M1 is performed and stopped at the position 211-2, the seventh direction vertical pressure P7 is performed within a critical radius 219-2 formed based on the position 210-2, the second direction touch movement M2 is performed, the third direction vertical pressure 23 is performed within the critical radius 229-3 based on the position 211-4 at the position 211-4, and the touch is released. When the input is performed as above, the data input device sequentially processes M1, P7, M2, and P3 as inputs.

(c) of FIG. 93 shows inputs in the touch movement form, the vertical pressure form, the horizontal pressure form, and the lean form. The position 211-1 is touched, the first direction touch movement M1 is performed, the movement toward the position 211-2 is performed, the seventh direction vertical pressure P7 is performed within the critical radius 229-2, 239-2, or 249-2 based on the position 211-2, the touch is released, the position 211-3 is retouched, the first direction horizontal pressure H1 is performed within the critical radius 229-3, 239-3, or 249-3 based on the position 211-3, the third direction lean S3 is input within the critical radius based on the position 211-4 where the first direction horizontal pressure H1 is performed, the fourth direction touch movement M4 is performed, and the touch is released. When the touch input is performed as described above, the data input device sequentially processes M1, P7, H1, S3, and M4 as inputs.

(d) of FIG. 93 shows inputs in the touch movement form, the vertical pressure form, the horizontal pressure form, the lean form, and the vertical pressure movement form and the input order is as follows. The touch is performed at the position 211-1, the eighth direction touch movement M8 is performed, the movement toward the position 211-2 is performed, the seventh direction vertical pressure P7 is performed within the critical radius 229-2, 239-2, and 249-2 based on the position 211-2, the movement toward the position 211-3 is performed by the second direction vertical pressure movement PM2, the second direction lean S2 is performed within the critical radius 229-3, 239-3, or 249-3 based on the position 211-3, the fifth direction horizontal pressure H5 is performed based on the position 211-4 of the second direction lean S2, and the touch is released. When the touch input is performed as described above, the data input device sequentially processes M8, P7, PM2, S2, and H5 as inputs.

It is understood that the input form of FIG. 94 processes data in the manner identical to the example of FIG. 93, but that the touch input is performed, in a case of inputting the vertical pressure, the horizontal pressure, or the lean, by returning to the reference input position 1 prior to the input after the input is performed and by taking the returning position as the reference input position 1. That is, even when returning to the reference input position 1 prior to the input after the vertical pressure, the horizontal pressure, or the lean input are performed, the input determination unit 150 does not process the movement distance when the returning as the data input.

As illustrated in FIGs. 93 and 94, the data input device according to the present invention may employ at least one touch form of the touch movement form, the vertical pressure form, the center pressure form, the horizontal pressure form, the lean form, and the vertical pressure movement form.

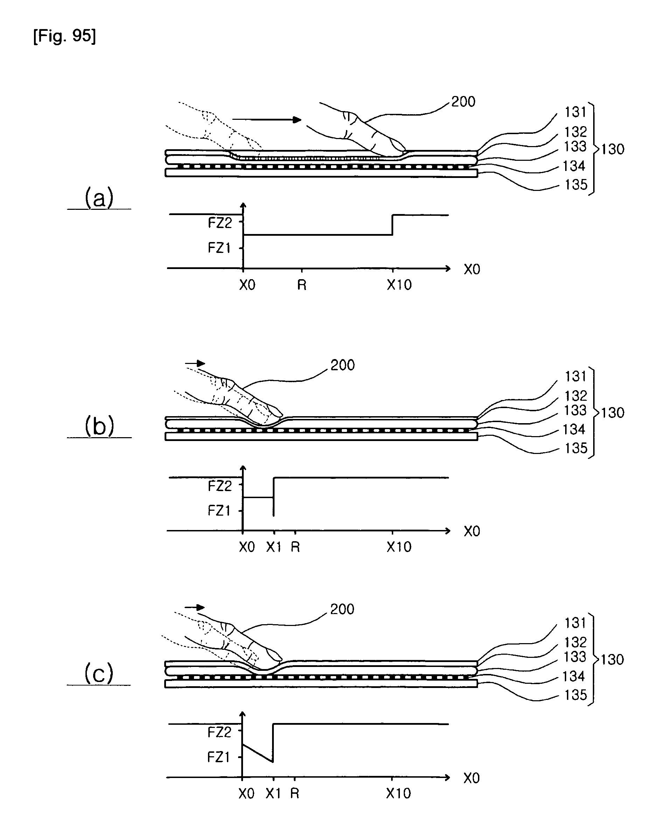

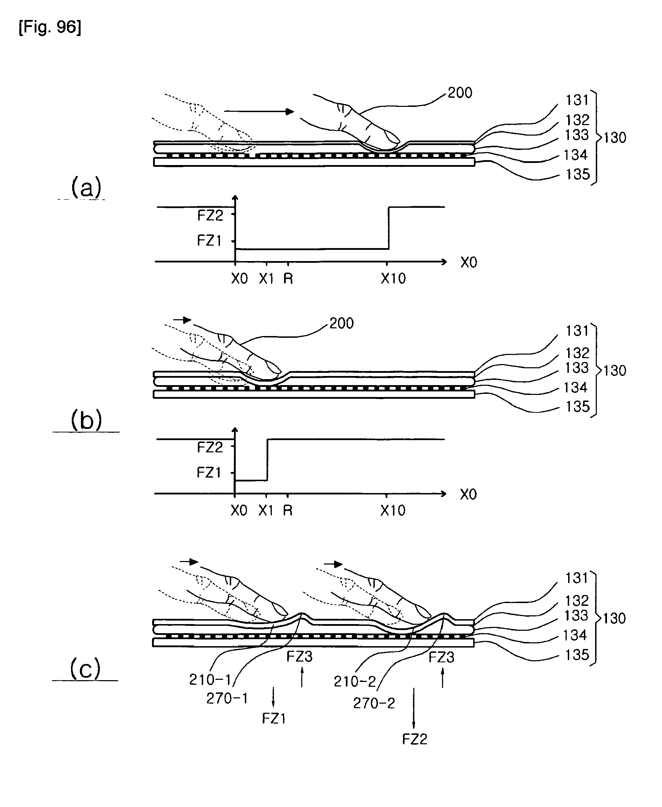

FIGs. 95 and 96 are sense signal waveform charts according to touch forms transmitted from the touch sense unit 130 to the input determination unit 150 in the data input device according to the embodiment of the present invention.

The touch sense unit 130 of FIGs. 95 and 96 is applied to a common touch screen or a touch pad. In brief, the touch sense unit 130 includes a surface elastic material layer 131, an upper conductive layer 132 arranged in a horizontal direction, a lower conductive layer 134 arranged in a vertical direction, an electrical insulating layer 133 provided between the upper conductive layer 132 and the lower conductive layer 134, and a substrate 135 for sensing an electric signal change between the conductive layers 132 and 134 and for supporting the elements 131, 132, 133, and 134. The touch sense unit 130 further includes a display unit provided under the lower conductive layer 134 and is realized in the form of a touch screen.

In addition, the data input device according to the present invention may be constituted with well-known various forms of touch screens or touch pads or touch sensors in addition to the above-mentioned touch sense unit 130.

In addition, in the respective signal waveform charts, the X-axis indicates a horizontal distance of the touch sense unit 130 where the touch input is performed and the Z-axis indicates a level of an electrical sense signal. In addition, the respective signal waveforms are levels of signals marked on the X-axis which are sensed on respective movement paths when the reference touch point 211 of the touch surface 210 starts from the reference input position X0 and touch-moves along the X-axis. In addition, a case when the level of a signal marked on the Z-axis is greater than FZ2 indicates the touch release state, a case when the level of a signal marked on the Z-axis is greater than FZ1 and less than FZ2 indicates the touch state, a case when the level of a signal marked on the Z-axis is less than FZ1 indicates the pressure state, and R on the X-axis indicates the critical radius (the vertical pressure critical radius, the horizontal pressure critical radius, or the lean critical radius).
(a) of FIG. 95 is a sense signal waveform chart when the touch movement form touch is performed from the position X0 to X10. In this signal waveform, it is understood that the signal (greater than FZ1 and less than FZ2) of the continuous touch state from the position X0 to X10 is sensed.
(b) of FIG. 95 is a signal waveform chart when the vertical pressure form touch taking the position X0 as the reference input position 1 is performed at the position X1, wherein the position X1 corresponds to one point of the vertical pressure region within the vertical pressure critical radius 229 based on the position X0. In the signal waveform chart, the signal (greater than FZ1 and less than FZ2) of the touch state is sensed from the position X0 to the position X1 and the pressure signal (a signal less than FZ1) is sensed at the position X1.
(c) of FIG. 95 shows a sense signal waveform chart when a lean form touch taking the position X0 as the reference input position 1 is performed in the direction X1, wherein the position X1 corresponds to one point of the horizontal pressure region within the lean critical radius 239 based on the position X0. As illustrated in the signal waveform of (c) of FIG. 95, the pressure force is gradually increasing as moving from the position X0 of the touch state to the pressure position X1.

(a) of FIG. 96 shows a sense signal waveform chart when the vertical pressure movement form touch taking the position X0 as the reference input position 1 is performed in the direction X10, wherein the pressure state signal (a signal less than FZ1) is maintained from the position X0 to the position X10.
(b) of FIG. 96 shows a sense signal waveform chart when the horizontal pressure form touch taking the position X0 as the reference input position 1 is performed in the direction X1, wherein the position X1 corresponds to one point of the horizontal pressure region within the horizontal pressure critical radius 239 based on the position X0. As illustrated in (b) of FIG. 96, the touch state signal (a signal greater than FZ1 and less than FZ2) from the position X0 to the position X1 is sensed.
(c) of FIG. 96 shows another example of the horizontal pressure form and the lean touch form. First, when the horizontal pressure form input is performed by the touch surface 210-1, the elastic material layer 131, the upper conductive layer 132, and the electrical insulating layer 133 are pushed by the horizontal pressure so that an upwardly protruding force FZ3 is generated on the front outer surface 270-1 corresponding to a movement direction part of outer surfaces of the touch surface 210-1. Therefore, since the distance between the upper and the lower conductive layers 132 and 134 that are positioned on the front outer surface 270-1 is increased, a signal is sensed. Since the vertically pressing force FZ1 is sensed the same as that before the horizontal pressure, the input determination unit 150 can determine the horizontal pressure according to signals corresponding to the two forces FZ1 and FZ3.

In addition, when the lean form input is performed by the touch surface 210-2, since the front outer surface 270-2 corresponding to a lean direction part of outer surfaces of the touch surface 210-2 is pushed upwardly, a signal corresponding to the force FZ3 protruding between the conductive layers 132 and 134 that are positioned under the front outer surface 270-2 is sensed. Since a signal corresponding to the vertical pressure force FZ2 is sensed on the touch surface 210-2, the input determination unit 150 can determine the lean according to the signals corresponding to the two forces FZ2 and FZ3.

As described with reference to FIGs. 95 and 96, since the signals sensed by the touch sense unit 130 form different waveforms according to the respective touch forms, the input determination unit 150 can determine the touch form according to the waveforms of the sensed signals. In addition, although FIGs. 95 and 96 show the touch sense unit 130 formed of a pressure method resistive touch screen (or touch pad), the touch sense unit 130 applied to the present invention may be constituted by a touch method capacitive touch screen (or touch panel).

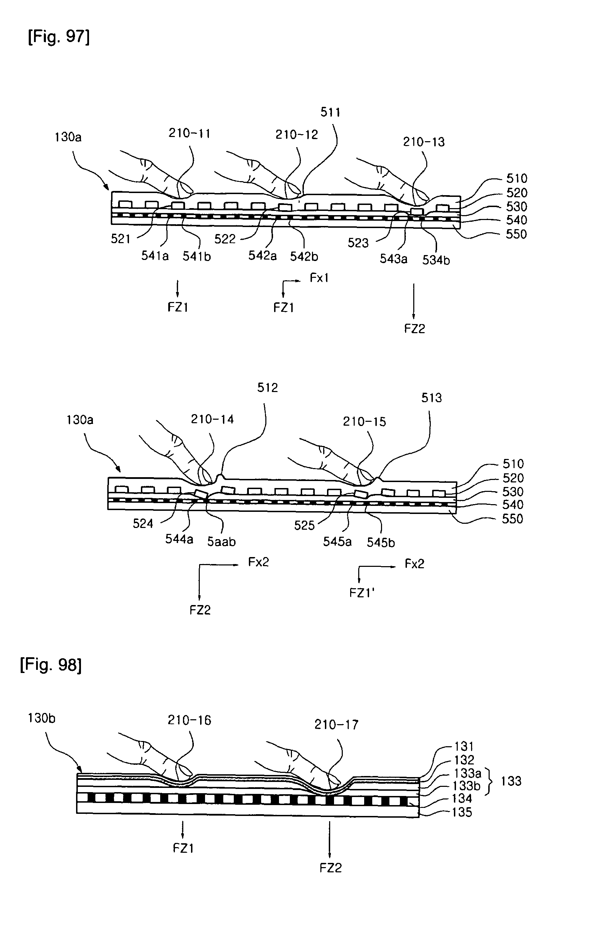

FIG. 97 shows a sectional view of a touch sense unit 130a formed of a touch sensor in the data input device according to the embodiment of the present invention.

Referring to FIG. 97, the touch sense unit 130a formed of a touch sensor includes a touch input transmitting medium 510 for receiving a touch input, a force transmitting column 520 pushed or leaned by a touch force that is transmitted through the touch input transmitting medium 510, a touch force transmitting medium 530 for transmitting the received force to the lower part according to the movement of the force transmitting column 520, a pressure resistor 540 provided for changing resistance according to the force transmitted from the touch force transmitting medium 530, and a flexible circuit board 550 for outputting a sense signal according to the change of the resistance of the pressure resistor 540 and for supporting the above elements.

A plurality of touch sensor units provided in the touch sense unit 130a will be described by an example of a position 210-11 as follows. When the touch force is transmitted to the force transmitting column 521, the pressure resistors 541a and 541b (since FIG. 97 is a sectional view, only two pressure resistors are depicted) which are positioned under the force transmitting column 521 and are arranged in four directions such as front, rear, right, and left directions are pressed. The input direction of the touch force can be determined using the change of the resistance of the pressure resistors 541a and 541b generated by the pressure. That is, the horizontal force applied along the horizontal plane of the touch sense unit 130a is calculated as a result of subtracting the change of the resistance of the pressure resistor 541b from the change of the resistance of the pressure resistor 541a, and the vertical force is calculated by summing the change of the resistance of the two resistors 541a and 541b. That is, the respective touch sensor unit can sense the horizontal force, the direction of the horizontal force, and the vertical force, which are applied thereto, simultaneously.

In FIG. 97, the touch form at the position 210-11 indicates the touch state. Since the resistance values of the two pressure resistors 541a and 541b are changed as the force transmitting column 521 is pushed in correspondence with the touch force FZ1, the touch sense unit 130a senses the touch force FZ1 from the changed values of the resistance of the two pressure resistors 541a and 541b to determine the touch form.

In FIG. 97, the touch form at the position 210-12 indicates the touch movement state. Since the resistance values of the two pressure resistors 542a and 542b are changed as the force transmitting column 522 is leaned in correspondence with the vertical touch force FZ1 and the horizontal pressure force FX1 according to the touch movement, the touch sense unit 130a senses the vertical touch force FZ1 and the horizontal pressure force FZ1 from the changed values of the resistance of the two pressure resistors 542a and 542b to sense the touch movement touch form. A part 511 of the touch input medium 510 corresponding to the front end of the movement direction of a touch unit (here, a finger) protrudes upwardly.

In FIG. 97, the touch form at the position 210-13 indicates the vertical pressure state. Since the resistance values of the two pressure resistors 543a and 543b are changed as the force transmitting column 523 is pushed in correspondence with the vertical pressure force FZ2, the touch sense unit 130a senses the touch force FZ1 from the changed values of the resistance of the two pressure resistors 543a and 543b to sense the vertical pressure touch form. At this time, the vertical pressure force FZ2 corresponds to a force stronger than the touch force FZ1 and the touch sense unit 130a determines the touch and the vertical pressure using the level of the vertical force.

In FIG. 97, the touch form at the position 210-14 indicates the lean state. Since the touch sense unit 130a receives a diagonal force F2 applied in the lean direction, the diagonal force F2 is transmitted to the force transmitting column 524 such that the force transmitting column 524 is leaned toward the lean direction. At this time, the diagonal force F2 applied by a finger corresponds to the sum of the vertical pressure force FZ2 and the horizontal pressure force FX2. Therefore, since the resistance values of the two pressure resistors 544a and 544b are changed large, the touch sense unit 130a senses the vertical pressure force FZ2 and the horizontal pressure force FX2 from the changed values of the resistance of the two pressure resistors 544a and 544b to sense the lean touch form. At this time, the horizontal pressure force FX2 is greater than the horizontal pressure force FX1 according to the touch movement.

In FIG. 97, the touch form at the position 210-15 indicates the horizontal pressure state and the vertical touch force FZ1' and the horizontal pressure force FX2 are simultaneously transmitted so that the force transmitting column 525 is leaned toward the input direction. At this time, since a changed value of a pressure resistor 544b of two pressure resistors 545a and 545b, positioned in the horizontal pressure movement direction (in FIG. 96, a front direction of a finger) is greater than that of the pressure resistor 544a positioned at the rear end so that the vertical pressure force FZ2 can be sensed. The vertical touch force FZ1' obtained by summing the changed values of the two resistors 544a and 544b can be determined as the touch state even when the vertical touch force FZ1' is slightly greater than the touch force FZ1 in the touch and the touch movement. Therefore, the input determination unit 150 can determine if the touch form of the horizontal pressure is performed in the touch state from the two sense signals FZ1' and FX2.

In addition, in the data input device according to this embodiment of the present invention, the touch input transmitting medium 510 may be formed of a flexible material movement direction parts 512 and 513 of which is pushes and protruded according to the lean touch form or the horizontal pressure touch form. Then, since the vertical force and the horizontal force of the touch sensor units positioned at the movement direction parts 512 and 513 are changed, sense signals of the movement direction parts 512 and 513 are additionally determined so that the lean touch form and the horizontal pressure touch form can be distinguished and determined more clearly from other touch forms (for example, the touch movement touch form).

As such, in the data input device according to this embodiment of the present invention, the touch sense unit 130 is constituted by the touch sensors to determine the touch forms according to the horizontal force and the vertical force and to process the touch input.

FIG. 98 is a sectional view of the touch sense unit 130b formed to easily distinguish and input a touch force FZ1 and a vertical pressure force FZ2 in the data input device according to the embodiment of the present invention.

Referring to FIG. 98, the touch sense unit 130a according to the present invention, different from the common touch sense unit 130 as illustrated in FIGs. 95 and 96, includes an electrical insulating layer 133, formed of two insulating layers 133a and 133b, between the conductive layers 132 and 134. The two insulating layers 133a and 133b are electrical insulating materials and have elasticity that is deformed by a touch pressure and returned to the original state when the touch pressure is released. In addition, a lower insulating layer of the two insulating layers 133a and 133b, contacting the lower conductive layer 134, is formed of material having flexibility lower than an upper insulating layer 133b so that the transform amount thereof when the same pressure is applied is less than that of the upper insulating layer 133a.

Since the electrical insulating layer 133 of the touch sense unit 130a is formed of two layers with different flexibilities, different inputs are easy input to the touch pressure in multiple stages when a finger touches the touch sense unit 130a. That is, as illustrated in FIG. 98, the upper insulating layer 133a is transformed when the touch pressure FZ1 corresponding to the touch state is applied and the lower insulating layer 133b is transformed when the vertical pressure force FZ2 corresponding to the pressure state is applied.

The data input device according to this embodiment of the present invention is formed to easily input data without a keyboard or a keypad. Preferably, since the data arrangements are seen by a user like a keyboard arrangement or a keypad arrangement, a novice who does not know the data arrangement can easily use.

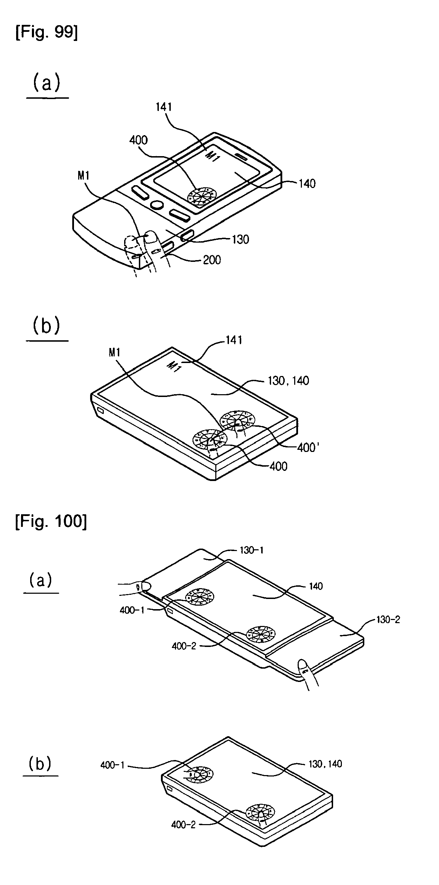

FIGs. 99 and 100 are views illustrating information of the data arrangement according to the embodiment of the present invention output on the display unit 104.

Referring to (a) of FIG. 99, when the touch input unit 130 provided in the lower side is touched with a finger 200, data input to the display unit 104 provided in the upper side is output, and preferably a radially arranged data arrangement chart 400 is output at an assigned position on the display unit 104.

According to the data arrangement chart 400 as illustrated in (a) of FIG. 99, data corresponding to the center vertical pressure is positioned at the center, data corresponding to the vertical pressure are arranged at inner concentric positions in a radial direction, and data corresponding to the touch movement are arranged at outer concentric positions in a radial direction. Therefore, a user looks at the data arrangement chart 400 outputted on the display unit 104 and selects a touch form and an input direction corresponding to desired data to input the selected ones to the touch sense unit 130. For example, a user looks at the data arrangement chart 400, recognizes the position of data M1 to be input, and performs the first direction touch movement M 1.

In the data input device according to this embodiment of the present invention as illustrated in (b) of FIG. 99, the touch input unit 130 is formed of a touch screen such that the touch input unit 130 is integrated with the display unit 104. The data arrangement chart 400 is outputted based on the position to which the finger is touched and is moved and outputted even when the touch position is changed.
(a) of FIG. 100 shows a data input device including two touch input units 130, that is, 130-1 and 130-2. In this case, two data arrangement charts 400-1 and 400-2 are outputted on the display unit 104 according to the number of the touch inputs 130: 130-1 and 130-2.

In addition, referring to (b) of FIG. 100, when two fingers are touched to the touch screen 130, the data arrangement charts 400-1 and 400-2 are outputted at the positions to which the respective fingers are touched and the respective data arrangement charts 400-1 and 400-2 move along with the touch positions of the corresponding fingers.

In (a) and (b) of FIG. 100, the two data arrangement charts 400-1 and 400-2 include different data from each other. For example, a finger inputs Hangeul consonants and the other finger inputs Hangeul vowels. As such, since the data arrangement charts 400-1 and 400-2 are formed, two fingers are simultaneously used to fast input data.

Since the data arrangement chart 400 may be formed in various ways according to the touch forms employed in the data input device, an example of the data arrangement chart formed of the combination of various touch forms will be omitted. In addition, in the data input device according to this embodiment of the present invention, the data arrangement chart 400 is selectively outputted on the display unit 104 so that the data arrangement 400 is not outputted when a user does not want.

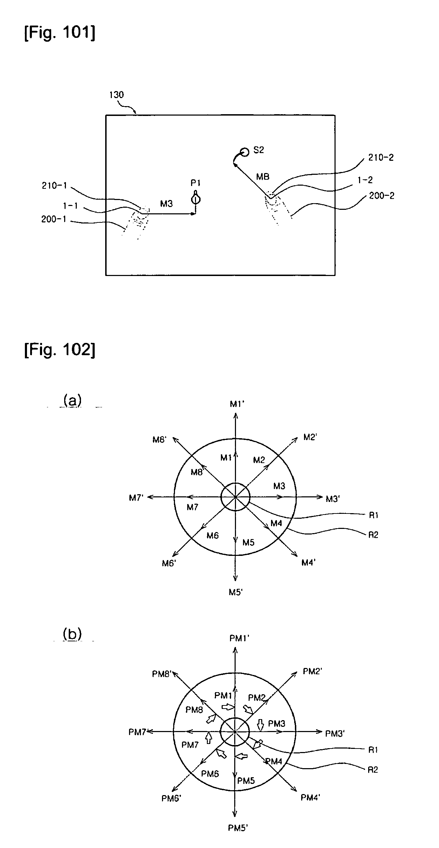

FIG. 101 is a view illustrating the data input device according to the embodiment of the present invention formed to process touch inputs of a multiple touch units 200-1 and 200-2.

Referring to FIG. 101, a touch surface 210-1 by a left touch unit 200-1 and a touch surface 210-2 by a right touch unit 200-2 are performed simultaneously, the third direction touch movement M3 and the first direction vertical pressure P1 are input by the left touch unit 200-1, and the eighth direction touch movement M8, the second direction lean S2, and the third direction touch movement M3 are input by the right touch unit 200-2.

As such when a plurality of touch inputs are performed, the input determination unit 150 according to the present invention sets respectively reference input positions 1-1 and 1-2 with respect to the plurality of touch surfaces 210-1 and 210-2 individually and separates and determines the touch forms and the input directions performed with respect to the respective reference input positions 1-1 and 1-2. That is, when the plurality of touch inputs are performed, the input determination unit 150 determines a plurality of inputs by separating the respective touch input positions.

Preferably, identifies are provided to the respective touch units 200-1 and 200-2 to transmit the performance of the plurality of inputs to the controller 110. To this end, the input determination unit 150 may provide identifiers to the respective touch units 200-1 and 200-2 according to the positions where the touches start. For example, the inputs are distinguished into a left input and a right input according to the touch starting positions. In addition, when any one of the touch units is performed first and the other is performed later, whether where the touch starting position of the touch unit touched later is positioned is determined based on the current position of the firstly touched touch unit to provide the identifiers.

The controller 110 processes the data according to the determined results of the input determination unit 150 which are separated into the identifiers and transmitted from the input determination unit 150. Preferably, the memory 120 may distinguish the data assigned according to the touch forms and the input directions according to the identifiers to store. The controller 110 processes data corresponding to the identifiers. For example, in FIG. 101, the data processed with respect to the third direction touch movement M3 of the left touch unit 200-1 are different from the data processed with respect to the third direction touch movement M3 of the right touch unit 200-2.

In addition, the memory 120 may be constituted not to distinguish and store the data according to the identifiers and the controller 110 may be constituted to continuously process a plurality of inputs by a plurality of touches according to the input order even when the plurality of inputs are performed by any touch means. At this time, the controller 110 sequentially processes the touch inputs according to the order of determination of the touch inputs that is transmitted to the controller 110 regardless of touch inputs by any touch unit. For example, data corresponding to the third direction touch movement M3 of the left touch unit 200-1 are identical to data corresponding to the third direction touch movement M3 of the right touch unit 200-2.

FIG. 102 is a view illustrating that the data input device according to the embodiment of the present invention may be constituted to process different data by a movement distance in the input direction in the touch movement and the vertical pressure movement. Referring to (a) of FIG. 102, when the touch movement is performed till a movement distance range corresponding to a range between a first movement critical radius R1 and a second movement critical radius R2, the touch movement is determined as the first touch movements M1, M2, M3, M4, M5, M6, M7, and M8 like as illustrated in FIG. 83. When the touch movement is performed over the second movement critical radius R2, the touch movement is determined as the second touch movements M1', M2', M3', M4', M5', M6', M7', and M8' which are different from the first touch movements. In addition, with respect to the second touch movement, data (not shown) different from FIG. 83 are processed. That is, different data are input and processed according to the movement distances of the touch movements. Referring to (b) of FIG. 102, the data input device according to the present invention may be constituted to input and process different data by the movement distance with respect to the touch form of the vertical pressure movement, identically to the touch movement as illustrated in (a) of FIG. 102. Although FIG. 102 shows the input processing in two stages by the movement distance, the data input device according to the present invention is not limited to the two stage input but may be constituted to set the movement distance range higher than three stages and to process different data by respective movement distances. The first movement critical radius R1 is set to a critical radius of the vertical pressure, the horizontal pressure, and the lean touch form to be distinguished from the touch movement.

While this invention has been particularly shown and described with reference to preferred embodiments thereof, these embodiments are provided so that this disclosure will be thorough and complete, and will fully convey the concept of the invention to those skilled in the art. It will be understood by those skilled in the art that various changes in form and details may be made therein without departing from the spirit and scope of the invention as defined by the appended claims.

## Claims

1. A data input device for using sense of operations of a finger, comprising:
a sense unit provided by forming a predetermined sense region at a side of a case of an electronic apparatus terminal, for generating a first direction input signal by sensing a horizontal pressure applied in a predetermined radial direction by the finger put on a reference position within the sense region, and for generating a second direction input signal by sensing a vertical pressure leaned in a predetermined direction while the finger is put on the reference position; and
a controller for determining a horizontal pressure direction or a vertical pressure position of the finger from the first direction input signal and the second direction input signal, and for extracting data assigned to a corresponding radial direction and a corresponding pressure position from a memory to input the extracted data.

2. The data input device of claim 1, wherein the sense unit comprises a first piezoelectric sense panel having a concave sense region corresponding to the shape of a touch surface of the finger, in which a plurality of the vertical pressure positions and the horizontal pressure directions are arranged in a radial direction by being differently and sequentially spaced from a reference position at the center of the touch surface.

3. The data input device of claim 2, wherein regions between the respective vertical pressure positions, between the respective horizontal pressure directions, and between the vertical pressure position and the horizontal pressure direction are divided by a transform preventing groove.

4. The data input device of claim 1, wherein the sense unit comprises:
a second piezoelectric sense panel for touching the finger and for sensing the vertical pressure to generate the second direction input signal; and
a third piezoelectric sense panel provided to touch the lower side of the second piezoelectric sense panel for sensing a push of the second piezoelectric sense panel touched, when the horizontal pressure is performed, to generate the first direction input signal.

5. The data input device of claim 1, wherein the sense unit comprises:
a fourth piezoelectric sense panel for touching the finger and for sensing the vertical pressure to generate the second direction input signal;
a plurality of vertical protrusions protruded downward from the fourth piezoelectric sense panel; and
a first movement sense unit provided in the respective horizontal pressure direction based on the respective vertical protrusions for touching or pressing the vertical protrusions, when the horizontal pressure is performed, to generate the first direction input signal.

6. The data input device of claim 1, wherein the sense unit comprises:
a fifth piezoelectric sense panel having a through hole formed at the reference position for sensing the vertical pressure to generate the second direction input signal; and
a second movement sense unit, inserted into the through hole and provided to be leaned in the respective radial directions by the finger, for generating the first direction input signal corresponding to the horizontal pressure.

7. The data input device of claim 1, wherein the sense unit comprises:
a plurality of sixth piezoelectric sense units arranged in the form of a belt by different spaced distances from the reference position for sensing the vertical pressure to generate the second direction input signal; and
a plurality of seventh piezoelectric sense units arranged between the respective sixth piezoelectric sense units, having a height lower than that of the sixth piezoelectric sense units not to be pressed by the finger when the vertical pressure is performed, and for generating the first direction input signal by being pressed in the horizontal pressure direction by the sixth piezoelectric sense units when the horizontal pressure is performed.

8. The data input device of claim 1, wherein the sense unit comprises:
an eighth piezoelectric sense panel for touching the finger and for sensing the vertical pressure to generate the second direction input signal; and
a third movement sense unit provided in the outside of the eighth piezoelectric sense panel for sensing a touch by a push of the eighth piezoelectric sense panel to generate the first direction input signal.

9. The data input device of claim 1, wherein the sense unit comprises:
a ninth piezoelectric sense panel for touching the finger and for sensing the vertical pressure to generate the second direction input signal; and
a fourth movement sense unit provided on the ninth piezoelectric sense panel in the respective radial direction based on the reference position for sensing a touch by a push of the ninth piezoelectric sense panel, when the horizontal pressure is performed, to generate the first direction input signal.

10. The data input device of claim 1, wherein the sense unit further comprises a ring-shaped sense unit provided in the outside of the vertical pressure position in order to sense the horizontal pressure.

11. The data input device of claim 1, wherein the sense unit is formed of a piezoelectric sense panel elastically transformed by pressing the finger and the controller determines putting of a finger when a pressure force sensed by the piezoelectric sense panel is less than one to three times of a predetermined value, determines the horizontal pressure when the sensed pressure force is greater than three times and less than seven times of the predetermined value, and determines the vertical pressure when the sensed pressure force is greater than seven times of the predetermined value.

12. The data input device of anyone of claim 1, wherein the sense unit further generates a center input signal of sensing the reference position is pressed by the finger.

13. The data input device of anyone of claims 1 to 12, wherein the sense unit distinguishes and generates at least one of the first direction input signal, the second direction input signal, and the center input signal into at least two multiple stage signal according to the intensity of the pressure force.

14. The data input device of anyone of claims 1 to 11, further comprising a cover formed of an elastic material and provided on the sense unit on which the finger puts.

15. The data input device of claim 14, wherein the cover comprises a slide preventing unit for preventing slide of the finger.

16. The data input device of anyone of claims 1 to 11, further comprising pressure protrusions provided at the respective vertical pressure positions for concentrating the pressure force.

17. The data input device of claim 14, further comprising a display unit provided on the cover for displaying the respective horizontal pressure direction and the respective vertical pressure positions.

18. The data input device of any one of claims 1 to 11,
wherein when characters are assigned to the respective horizontal pressure directions and the respective vertical pressure positions and the first direction input signal or the second direction input signal is received, the controller extracts characters assigned to the respective corresponding horizontal pressure direction or vertical pressure position from a memory to input the extracted character.

19. The data input device of anyone of claims 1 to 11,
wherein a movement function of a pointer of a mouse or a game character of a joystick is performed by the horizontal pressure and a manipulating function of right and left buttons of the mouse or the game character of the joystick is performed by the vertical pressure.

20. The data input device of anyone of claims 1 to 11,
wherein during a manipulation of a three-dimension object, a movement of the three-dimension object is performed by the horizontal pressure and a rotation of the three-dimension object is performed in the vertical pressure direction by the vertical pressure.

21. The data input device of claim 1, wherein the reference position is provided to move according to a touch position of the finger put on the sense unit and the vertical pressure position moves along the reference position.

22. The data input device of claim 21, wherein a movement of a pointer of a mouse or a game character of a joystick is performed by a touch movement of the finger and a manipulating function of right and left buttons of the mouse or the game character of the joystick is performed by the vertical pressure.

23. The data input device of claim 22, wherein during a manipulation of a three-dimension object, a movement of the three-dimension object is performed by the touch movement of the finger and a rotation of the three-dimension object is performed in the vertical pressure direction by the vertical pressure.

24. The data input device of claims 1 or 21, wherein the sense unit further generates a center sense signal of sensing that the finger puts on the reference position,
wherein the controller inputs first data assigned to the vertical pressure position when the center sense signal and the second direction input signal are generated simultaneously and inputs second data duplicated to the vertical pressure position when only the second direction input signal is generated.

25. The data input device of claim 24, further comprising a character board display unit on which data assigned to the respective horizontal pressure direction and vertical pressure position are displayed,
wherein the character board display unit displays the first data from the second data according to whether the center sense signal is generated.

26. The data input device of claims 1 or 21, wherein the sense unit further comprises a ring-shaped rotation sense unit spaced from the reference position by a predetermined interval and the three-dimension object rotates on two-dimension plane when the finger is rotated based on the reference position during the manipulation of the three-dimension object.

27. The data input device of claim 1, wherein a combination input is determined when the horizontal pressure and the vertical pressure are continuously input such that a third character different from the characters assigned to the horizontal pressure or the vertical pressure is input.

28. The data input device of claim 27, wherein the combination input is determined when the horizontal pressure and the vertical pressure are continuously performed within a predetermined time value.

29. The data input device of claim 27, wherein the combination input is determined when the horizontal pressure and the vertical pressure are performed within a predetermined pressure value range.

30. A data input device provided in a case of an electronic apparatus terminal for inputting various data, comprising:
a sense unit provided at a side of the case to form a determined sense region, including a first sense unit provided in a plurality of radial directions based on a reference position within the sense region to sense a horizontal pressure in the radial directions by a finger put on the reference position, and a second sense unit having a uniform spaced distance from the reference position and provided at a plurality of pressure positions arranged in a radial direction to sense a pressure by a finger; and
a controller for extracting data assigned to the respective radial directions and the pressure positions from a memory based on results sensed by the first sense unit and the second sense unit.

31. A data input device provided in an electronic apparatus terminal, comprising:
a sense unit including a reference plate in which first sense lines are arranged thereon and a movement plate in which second sense lines corresponding to the first sense lines are arranged thereunder and for generating a first direction input signal while the second sense lines move according to a horizontal pressure applied to the movement plate and touch the first sense lines; and
a controller for determining a movement direction and a movement distance of the movement plate from the first input signal to extract data assigned to the movement direction and the movement distance from a memory and to input the extracted data.

32. The data input device of claim 31, wherein the first and second sense lines are continuously arranged in the matrix form.

33. The data input device of claim 32, wherein at least one of the first and second sense lines is formed of two sense lines crossing each other.

34. The data input device of claim 31, wherein the sense unit senses a vertical pressure on the movement plate by pressing the second sense lines to the first sense lines and generates a second direction input signal.

35. The data input device of claim 34, wherein the reference plate and the movement plate of the sense unit comprise a plurality of sense films and a multiple stage vertical pressure input is performed while touches between the sense films are increased in multiple stages according to a degree of the vertical pressure to the movement plate.

36. The data input device of claim 31, wherein the sense unit is connected to a return member having elasticity to be returned to an original state in a state that a horizontal pressure is applied.

37. A data input device provided in an electronic apparatus terminal, comprising:
a sense unit, in which a plurality of sense lines have a matrix form and are arranged on an elastic member, for respectively generating a first direction input signal by a horizontal pressure and a second direction input signal by a vertical pressure as the sense lines touch each other by the vertical pressure and the vertical pressure to the elastic member; and
a controller for determining a touch point between the sense lines and a finger and the number of touches between the sense lines from the first direction input signal and the second direction input signal and for extracting data assigned to the touch point and the number of touches from a memory and to input the extracted data.

38. The data input device of claim 37,
wherein the matrix form sense lines are continuously provided by a predetermined interval according to a height direction of the elastic member,
the first direction input signal is generated as the horizontal direction sense lines touch each other by the horizontal pressure, and
the second direction input signal is generated as the vertical direction sense lines touch each other by the vertical press.

39. A data input device provided in an electronic apparatus terminal, comprising:
a sense unit, contracted and relaxed according to a pressure, for generating respectively a first direction input signal, a second direction input signal, and a third direction input signal according to a horizontal pressure, a vertical pressure, and a lean with respect to a plurality of directing positions through a current value changed by the contraction and the relax; and
a controller for determining a change of the current value from the first direction input signal, the second direction input signal, and the third direction input signal to extract data assigned to the change of the current value from a memory and to input the extracted data.

40. A data input device having a predetermined sense region in an electronic apparatus terminal, comprising:
a sense unit for sensing a horizontal pressure and a vertical pressure with respect to a reference position, which is displayed by a touch of a finger or a pressure of the sense region, and a plurality of first directing positions, which are displayed and are arranged in a radial direction based on the reference position, to generate a first direction input signal corresponding to the horizontal pressure and a second direction input signal corresponding to the vertical pressure; and
a controller for determining a horizontal pressure position and a vertical pressure direction of a finger from the first direction input signal and the second direction input signal to extract data assigned to the first direction input signal and the second direction input signal from a memory and to input the extracted data.

41. The data input device of claim 40, wherein the reference position can be displaced in position and the first directing positions move according to the position displacement of the reference position.

42. The data input device of claim 40, wherein the reference position and the first directing position are arranged within a range covered with a single finger, and
the sense unit distinguishes an entire input mode of performing a horizontal pressure input or a vertical pressure input with respect to one of the first directing positions in a state that a finger puts on the sense unit from a partial input mode of performing the horizontal pressure input or the vertical pressure input with respect to one of the first directing positions.

43. The data input device of claim 42, wherein the sense unit comprises a sensor provided at positions corresponding to the respective first directing positions for sensing touch of a finger to the first directing positions.

44. The data input device of claim 42, wherein the sense unit grasps a touch area of the finger when the finger is put on the reference position and the first directing position and an input to the first directing position is performed, and the input is performed in the entire touch mode when the area is greater than a predetermined area.

45. The data input device of claim 40, wherein the sense unit graphs a lean pressure when the horizontal pressure and the vertical pressure are sensed simultaneously within a predetermined time, and the controller inputs data different from the horizontal pressure and the vertical pressure with respect to the lean pressure.

46. The data input device of claim 40, further comprising an elastic input instrument unit in which protrusions are formed at positions corresponding to the first directing positions for making an input to the first directing positions easy.

47. A data input device provided in an electronic apparatus terminal, comprising:
an input unit elastically transformed by a horizontal pressure, a vertical pressure, and a lean pressure with respect to a plurality of first directing positions spaced in a radial direction;
a sense unit, provided over a side and a bottom of the input unit, for sensing a horizontal pressure, a vertical pressure, and a lean pressure to the input unit respectively, and for generating a first direction input signal with respect to the horizontal pressure, a second direction input signal with respect to the vertical pressure, and a third direction input signal with respect to the lean pressure; and
a controller for extracting data assigned to the respective input signal from the first direction input signal, the second direction input signal, and the third direction input signal from a memory to input the extracted data.

48. The data input device of claim 47,
wherein a horizontal pressure protrusion is provided on a side of the input unit;
a vertical pressure protrusion is provided on a bottom of the input unit corresponding to the first directing position;
a lean pressure protrusion is provided on a slope between the side and the bottom of the input unit;
the sense unit comprises:
a horizontal pressure sense unit for sensing a pressure by the horizontal protrusion;
a vertical pressure sense unit for sensing a pressure by the vertical pressure protrusion; and
a lean pressure sense unit for sensing a pressure by the lean pressure protrusion.

49. A data input device comprising:
an input unit in which a first direction input of pressing any one of a plurality of direction directing positions spaced in a radial direction based on a reference position within a predetermined input radius and a second direction input of touch-moving forward any one of the direction directing positions from or through the reference position are individually performed;
a first sense unit for sensing the first direction input;
a second sense unit for sensing the second direction input; and
a controller for extracting first data assigned to a corresponding direction directing position with respect to the first direction input, when the first direction input is sensed, and second data assigned to a corresponding direction directing position with respect to the second direction input, when the second direction input is sensed from the memory, to execute.

50. The data input device of claim 49, wherein the input unit has a penetrated center region corresponding to the reference position and the second sense unit is mounted at the center part to sense the second direction input.

51. The data input device of claim 50, wherein the second sense unit is formed of an optical sensor.

52. The data input device of claim 50, wherein the second sense unit is formed of a pressure sensor.

53. The data input device of claim 48, wherein the input unit has a plate shape and the first sense unit and the second sense unit are provided on or under of the input unit as a touch sense unit for sensing the first direction input and the second direction input simultaneously in the input unit.

54. A data input method using a touch type input device for touching an input unit on an input surface and for inputting data, in a state that an input arrangement is formed to have a plurality of directions and to arrange the data in the radial direction horizontal to the input surface based on a touch point where the input unit and the touch surface touch such that data corresponding to the directions by assigning the direction can be selected, of assigning the radial direction of the input arrangement by an input operation distinguished by at least one of a vertical direction pressure, a horizontal direction pressure, a diagonal direction pressure, and a movement on the input surface to input the data.

55. The data input method of claim 54, wherein the input arrangement further comprises a data input direction corresponding to the center of the input arrangement.

56. The data input method of claim 55, wherein the input operation is distinguished by at least one of a strength of the vertical direction pressure, a strength of the horizontal direction pressure, a direction of the horizontal direction pressure, a strength of the diagonal direction pressure, an angle of the diagonal pressure against the input surface, and an advancing distance of the pressures on the input surface.

57. The data input method of claim 56, wherein the input operation comprises one or more of:
a pressure input of assigning the direction by applying the vertical direction pressure to the input surface;
a horizontal pressure of assigning the direction by applying the horizontal direction pressure to the input surface;
a touch movement input of assigning the direction to a movement in a touch state to the input surface; and
a lean input of assigning the direction by applying the diagonal direction pressure to the input surface.

58. The data input method of claim 57, wherein one or more of the pressure input, the horizontal pressure input, and the lean input are distinguished into other input according to the comparison of a pressure applied to the input surface by the pressure input, the horizontal pressure input and the lean input with a predetermined reference pressure and whether the at least one of the pressure input, the horizontal pressure input, and the lean input is greater or less than the reference pressure.

59. The data input method of claim 57, wherein the touch movement input is distinguished into other input by comparing a distance of the touch movement on the input surface with a predetermined reference distance and according to whether the distance of the touch movement is shorter or longer than the reference distance.

60. The data input method of claim 57, wherein the input arrangement has different data arrangement according to the input operation.

61. The data input method of claim 57, wherein the input arrangement had different data arrangement by the input operations with respect to the same direction.

62. The data input method of claim 57, wherein the data input performs a next input by any one of the input operations at a time when the direction assignment is finished by any one of the input operations.

63. The data input method of claim 57, wherein the data input is generated at an arbitrary position on the input surface.

64. The data input method of claim 63, wherein the data input is generated at a plurality of positions on the input surface simultaneously.

65. The data input method of claims 63 or 64, wherein the data input is performed by combining two or more of the input operations.

66. The data input method of claim 65, wherein the combined input operation is firstly performed at a first position of the plurality of positions on the input surface and the data input is continuously performed at a second position of the plurality of positions by the combined input operation.

67. The data input method of claim 65, wherein the data input is performed such that the combined input operation is alternately performed at the first position of the plurality of positions and at the second position of the plurality of positions.

68. The data input method of claim 65, wherein the data input is performed such that any one of the combined input operations is performed at the first position of the plurality of positions and the remaining combined input operation is performed at the second position of the plurality of positions.

69. The data input method of claim 54, wherein the input arrangement is displayed at a position corresponding to a touch position generated by the input operation on the input surface of an output unit where the data are outputted.

70. The data input method of claim 54, wherein the input arrangement is fixedly displayed at a fixed position of the output unit where the data are outputted.

71. A data input method using a touch type input device for touching an input unit to an input surface to input data, in a state that an input arrangement is formed to have a plurality of directions and to arrange the data in the radial direction horizontal to the input surface based on a touch point where the input unit and the touch surface touch such that data corresponding to the directions by assigning the direction, of selecting data on the input arrangement by a first direction input and a second direction input of generating at least one a pressure and a movement on the input surface.

72. The data input method of claim 71, wherein the first direction input and the second direction input are a combination of input operations distinguished by any one of a vertical direction pressure on the input surface, a horizontal direction pressure, a diagonal direction pressure, whether the pressure movement is generated, a strength of a pressure, a direction of a pressure, a movement distance of a pressure, and an angle between the input surface and the direction of the pressure.

73. The data input method of claim 72, wherein the input operation is a combination of any two inputs selected from a pressure input, a touch movement input, a horizontal pressure input and a lean input.

74. The data input method of claim 73,
wherein the pressure input assigns the direction by applying a vertical direction pressure to the input surface,
the touch movement input assigns the direction by a movement in a touch state to the input surface,
the horizontal pressure input assigns the direction by applying a horizontal direction pressure to the input surface, and
the lean input assigns the direction by applying a diagonal direction pressure to the input surface.

75. The data input method of claim 74, wherein the touch movement input comprises a vertical direction pressure less than the vertical direction pressure of the pressure input in order to maintain the touch to the input surface.

76. The data input method of claim 74, wherein the diagonal direction pressure is realized by a combination of the vertical direction pressure and the horizontal direction pressure.

77. The data input method of claim 76, wherein the diagonal direction pressure is realized by applying the vertical direction pressure to the input surface and adding the horizontal direction pressure.

78. The data input method of claim 76, wherein the diagonal direction pressure is realized by applying the horizontal direction pressure to the input surface and adding the vertical direction pressure.

79. The data input method of claims 77 or 78, wherein the realization of the diagonal direction pressure by the vertical direction pressure and the horizontal direction pressure is performed, in a state that any one of the vertical direction pressure and the horizontal direction pressure is maintained, by applying the remaining one continuously.

80. The data input method of claim 74, wherein the first direction input and the second direction input input different data when the input operation corresponding to the first direction input is different from the input operation corresponding to the second direction input.

81. The data input method of claim 80, wherein the first direction input and the second direction input are distinguished into different data inputs according to any one of kinds of the input operations and a recognizing time of the input operations with respect to continuous inputs generated in the same direction.

82. The data input method of claim 80, wherein the first direction input and the second direction input are distinguished into different data inputs according to a recognizing time of the input operations with respect to a continuous input by the same input operation.

83. The data input method of claims 81 or 82, wherein the recognizing time of the input operations is determined by one or more of a starting time of an input by the input operations, a release time of an input by the input operations and a generating time of a direction.

84. The data input method of claim 83, wherein the recognizing time is determined by one or more of a pressure generation, a movement generation, a release of a pressure, a release of a movement, a stop of a movement, a direction of applying a pressure and a direction of a movement by the input operations.

85. The data input method of claim 84, wherein the recognizing time is determined by comparing any one of a pressure and a movement generated by the input operations with a predetermined reference value.

86. The data input method of claim 85, Wherein, in the touch movement input, the touch movement generated on the input surface by the touch movement input is distinguished into other input according to whether a movement distance is greater or less than the reference value.

87. The data input method of claim 85, wherein any one of the pressure input, the lean input and the horizontal pressure input is distinguished into other input according to whether a strength of the pressure is greater or less than the reference value even when the same direction is assigned.

88. The data input method of claim 74, wherein the input arrangement has different data arrangement with respect to different input operation.

89. The data input method of claim 74, wherein the input arrangement has a different number of directions with respect to different input operation.

90. The data input method of claim 74, wherein the data input is performed by continuing the second direction input at a position where the first direction input is finished.

91. The data input method of claim 74, wherein the first direction input and the second direction input are respectively performed at different arbitrary positions of the input surface.

92. The data input method of claim 91, wherein the data input is performed such that the first direction input is firstly performed at a first position of the different arbitrary positions and the second direction input is continuously performed at a second position, that is, the rest position of the different arbitrary positions.

93. The data input method of claim 74, wherein the input arrangement is displayed on an output unit where the data are outputted and a display position of the input arrangement corresponds to a touch position, which is the input unit and the input device, in a display region of the output unit.

94. The data input method of claim 74, wherein the input arrangement is displayed on an output unit where the data is outputted and is fixedly displayed at a part of a display region of the output unit.

95. A data input method using a touch type input device for touching an input unit to an input surface to input data, in a state that an input arrangement is formed to have a plurality of directions and to arrange the data in the radial direction horizontal to the input surface based on a touch point where the input unit and the touch surface touch such that data corresponding to the directions by assigning the direction, of selecting data on the input arrangement by a first direction input to a third direction input of generating at least one of a pressure and a movement on the input surface.

96. The data input method of claim 95, wherein the first direction input to the third direction input are a combination of input operations distinguished by one or more of a vertical direction pressure on the input surface, a horizontal direction pressure on the input surface, a diagonal direction pressure on the input surface, whether the pressure movement is generated, a strength of a pressure, a direction of a pressure, a movement distance of a pressure and an angle between the input surface and the direction of the pressure.

97. The data input method of claim 96, wherein the input operation is a combination of any two inputs selected from a pressure input, a touch movement input, a horizontal pressure input and a lean input.

98. The data input method of claim 97,
wherein the pressure input assigns the direction by applying a vertical direction pressure to the input surface,
the touch movement input assigns the direction by a movement in a touch state to the input surface,
the horizontal pressure input assigns the direction by applying a horizontal direction pressure to the input surface, and
the lean input assigns the direction by applying a diagonal direction pressure to the input surface.

99. The data input method of claim 98, wherein any one of the touch movement input, the horizontal pressure input, and the lean input comprises a vertical direction pressure less than the vertical direction pressure of the pressure input.

100. The data input method of claim 98, wherein the diagonal direction pressure is realized by a combination of the vertical direction pressure and the horizontal direction pressure.

101. The data input method of claim 100, wherein, when the first direction input to the third direction input are combined by a pressure input, a touch movement input and a lean input, the diagonal direction pressure by the lean input is realized by applying the horizontal direction pressure to the input surface and by adding the vertical direction pressure.

102. The data input method of claim 100, wherein, when the first direction input to the third direction input are combined by the horizontal pressure input, a touch movement input and a lean input, the diagonal direction pressure by the lean input is realized by applying the vertical direction pressure to the input surface and by adding the horizontal direction pressure.

103. The data input method of claims 101 or 102, wherein, when the diagonal direction pressure is realized by a combination of the vertical direction pressure and the horizontal direction pressure, in a state that any one of the vertical direction pressure and the horizontal direction pressure is maintained, the remaining pressure is continuously applied.

104. The data input method of claim 98, wherein when the input operations corresponding to the first direction input to the third direction input are different, one or more of the first direction input to the third direction input by the input operations are different data.

105. The data input method of claim 104, wherein one or more of the first direction input to the third direction input are distinguished into different data input according to any one of kinds of the input operations and a recognizing time of the input operations with respect to continuous inputs generated in the same direction.

106. The data input method of claim 105, wherein the recognizing time of the input operations is determined by any one or more of a starting time of an input by the input operations, a release time of an input by the input operations and a generating time of a direction.

107. The data input method of claim 106, wherein the recognizing time of the input operations is determined by any one of a pressure generation, a movement generation, a release of a pressure, a release of a movement, a stop of a movement, a direction of applying a pressure and a direction of a movement by the input operations.

108. The data input method of claim 107, wherein the recognizing time is determined by comparing any one of a pressure and a movement generated by the input operations with a predetermined reference value.

109. The data input method of claim 108, wherein, in the touch movement input, the touch movement generated on the input surface by the touch movement input is distinguished into other input according to whether a movement distance is greater or less than the reference value.

110. The data input method of claim 108, wherein any one of the pressure input, the lean input and the horizontal pressure input is distinguished into other input according to whether a strength of the pressure is greater or less than the reference value even when the same direction is assigned.

111. The data input method of claim 98, wherein the input arrangement has different data arrangement with respect to different input operation.

112. The data input method of claim 98, wherein the input arrangement has a different number of directions with respect to different input operation.

113. The data input method of claim 98, wherein, in the data input, a next direction input is continuously performed at a position where the firstly performed direction input of the first to third direction inputs is finished.

114. The data input method of claim 113, wherein, in the data input, any one direction input of the first to third direction inputs is performed as the first direction input and any one of the rest two direction inputs is performed as the second input following the firstly performed direction input.

115. The data input method of claim 114, wherein, in the data input, any one of the first to third direction inputs is performed as a third input following the second input.

116. The data input method of claim 98, wherein the data input is performed in association manner at different arbitrary positions of the input surface.

117. The data input method of claim 116, wherein the data input is performed at a first position and a second position of the input surface which are different from each other and the data input at the first and second positions are performed by one or more of the first to third direction inputs.

118. The data input method of claim 117, wherein, in the data input, the direction input is performed at the first position and continuously the direction input is performed at the second position.

119. The data input method of claim 98, wherein the input arrangement is displayed on an output unit where the data is outputted and a display position of the input arrangement corresponds to a touch position, which is touched by the input unit and the input device, in a display region of the output unit.

120. The data input method of claim 98, wherein the input arrangement is displayed on an output unit where the data is outputted and is fixedly displayed at a part of a display region of the output unit.

121. A touch type input device in which different inputs are performed according to a form of a touch input, the device comprising:
a memory (120) for storing data or directing data assigned by a touch form and an input direction with respect to the touch input that is performed in a radial direction;
a touch sense unit (130) for sensing the touch input;
an input determination unit (150) for determining the touch form and the input direction according to a sense signal of the touch sense unit (130);
a display unit (104); and
a controller (110) for reading the data or the directing data corresponding to the touch form and the input direction determined by the input determination unit (150) and for inputting corresponding data or commands according to the directing data.

122. The touch type input device of claim 121, wherein the input determination unit (150) sets a position, where the touch input starts as a reference input position and determines the touch form and the input direction based on the set reference input position.

123. The touch type input device of claim 122, wherein the input determination unit (150), when the touch form or the input direction are switched, transmits the touch form and the input direction determined before the switched point to the controller (110) to process corresponding data, and resets the switch point to the reference input position to determine the touch form and the input direction started from the switch point.

124. The touch type input device of claim 123, wherein the input determination unit (150), when a retouch is performed after the touch state is released, resets a position, where the retouch is performed, to the reference input position to determine the touch form and the input direction.

125. The touch type input device of claim 124, wherein the controller (110), when the retouch is performed after the touch state is released, processes a touch input before the release of the touch state and a touch input after the retouch as a continuous data input.

126. The touch type input device of claim 125, wherein the input determination unit (150), when the touch form and the input direction are not changed exceeding a predetermined stop critical time after a touch input is performed according to the touch forms and the input directions, resets the stop position as the reference input position and determines the touch form and the input direction before the stop position to transmit the same to the controller (110).

127. The touch type input device of any one of claims 122 to 126, wherein the touch form comprises one or more of:
a touch movement form for maintaining a touch state based on the reference input position and for moving in a radial direction;
a vertical pressure form for moving, while maintaining a touch state, to a plurality of vertical pressure regions that are arranged within a predetermined vertical pressure critical radius based on the reference input position in a radial direction, and for pressing vertically;
a horizontal pressure form for moving, while maintaining a touch state, to a plurality of horizontal pressure regions arranged within a predetermined horizontal pressure critical radius based on the reference input position in a radial direction;
a lean form for leaning toward a plurality of lean regions arranged with a predetermined lean critical radius based on the reference input position in a radial direction and for pressing the lean region in a lean direction; and
a vertical pressure movement form for moving in a radial direction while maintaining a pressure state after applying a vertical pressure to the reference input position.

128. The touch type input device of claim 127, wherein the touch forms further comprise a center pressure form of vertically pressing the reference input position without movement.

129. The touch type input device of claim 127, wherein the input determination unit (150) determines the touch form according to the waveform of the sense signal transmitted from the touch sense unit (130).

130. The touch type input device of claim 129, wherein the lean form is performed in the form of moving while maintaining a touch state to press the lean region while a pressure force is gradually increased as moving,
the input determination unit (150) determines the touch form of the lean form according to the signal waveform in which the pressure force is gradually increased.

131. The touch type input device of claim 127,
wherein the input determination unit (150) determines the touch form by determining a vertical pressure force and a horizontal pressure force that are transmitted from the touch sense unit (130).

132. The touch type input device of claim 131, wherein the input determination unity (150) determines the touch form of the lean form with intensities of a vertical pressure force (FZ1) and a horizontal pressure force (FZ2) sensed by the touch sense unit (130) by a lean direction force (F2) applied to the lean region.

133. The touch type input device of claim 131, wherein the input determination unit (150) determines the touch form of the lean form with intensities of a vertical pressure force (FZ1) and a horizontal pressure force (FZ2) sensed by the touch sense unit (130) by a lean direction force (F2) applied to the horizontal pressure region.

134. The touch type input device of claim 127, wherein the input determination unit (150) determines the touch form by further interpreting a sense signal of front outer surfaces (270-1 and 270-2) corresponding to a movement direction part of outer surfaces of a touch surface (210-1 and 210-2) formed by a touch unit (200).

135. The touch type input device of claim 127, wherein, when the touch input in a vertical pressure form, in a horizontal pressure form or in a lean form is performed and a reference input position (1) is returned to the previous position, the input determination unit (150) does not process a movement by the return as a data input.

136. The touch type input device of claim 127, wherein the touch sense unit (130) comprises any one of a touch screen, a touch pad, and a touch sensor.

137. The touch type input device of claim 136, wherein, when a touch is performed in the touch sense unit (130) formed of the touch pad, the controller (110) outputs a data arrangement chart (440) in which data corresponding to the touch form and the input direction are arranged in a radial direction on the display unit (104).

138. The touch type input device of claim 136, wherein the controller (110) outputs a data arrangement chart (400) in which data corresponding to the touch form and the input direction are arranged in a radial direction on the display unit (104) based on a touch surface (210) in the touch sense unit (130) formed of a touch screen.

139. The touch type input device of claim 127,
wherein the touch movement form is divided into a plurality of movement distance ranges according to a movement distance,
the memory (120) stores data by the input direction with respect to the touch movement to be assigned by a movement distance region,
the input determination unit (150) determines the movement distance range as a distance of a direction movement when determining the touch movement, and transmits the determination to the controller (110) such that the controller (110) processes data with respect to the touch movement assigned by the input direction and the movement distance range.

140. The touch type input device of claim 127,
wherein the vertical pressure movement form is divided into a plurality of movement distance ranges according to a movement distance,
the memory (120) stores data by the input direction with respect to the vertical pressure movement to be assigned by a movement distance region, and
the input determination unit (150) determines the movement distance range as a distance of a direction movement when the vertical pressure movement is determined, and transmits the determination to the controller (110) such that the controller (110) processes data with respect to the vertical pressure movement assigned by the input direction and the movement distance range.

141. The touch type input device of claim 127,
wherein, when a sense signal of a plurality of touch surfaces (210-1 and 210-2) is transmitted from the touch sense unit (130), the input determination unit (150) sets individual reference input positions (1-1 and 1-2) with respect to the respective touch surfaces (210-1 and 210-2), determines the touch form and the input direction of the respective reference input positions (1-1 and 1-2), and transmits the determination to the controller (110).

142. The touch type input device of claim 141, wherein the controller (110) processes inputs with respect to a plurality of touch surfaces (210-1 and 210-2) as different data.
